**Europäisches Patentamt**

**European Patent Office**

**Office européen des brevets**

(19)

(11) **EP 1 087 395 A2**

(12) ## EUROPEAN PATENT APPLICATION

(43) Date of publication:
28.03.2001 Bulletin 2001/13

(51) Int Cl.⁷: **G11B 23/03**

(21) Application number: **00308282.3**

(22) Date of filing: **22.09.2000**

| | |
|---|---|
| (84) Designated Contracting States:<br>**AT BE CH CY DE DK ES FI FR GB GR IE IT LI LU**<br>**MC NL PT SE**<br>Designated Extension States:<br>**AL LT LV MK RO SI** | • **Kakiuchi, Takafumi**<br>**Shinagawa-ku, Tokyo (JP)**<br>• **Meguro, Hiroshi**<br>**Shinagawa-ku, Tokyo (JP)**<br>• **Masakii, Hiroshi**<br>**Shinagawa-ku, Tokyo (JP)** |
| (30) Priority: **22.09.1999 JP 26942699** | |
| (71) Applicant: **SONY CORPORATION**<br>**Tokyo 141 (JP)** | (74) Representative: **Horner, David Richard et al**<br>**D Young & Co,**<br>**21 New Fetter Lane**<br>**London EC4A 1DA (GB)** |
| (72) Inventors:<br>• **Yamamoto, Kazutoshi**<br>**Shinagawa-ku, Tokyo (JP)** | |

(54) **Cartridge-type recording medium and disc drive apparatus using the recording medium**

(57)      The invention relates to head-landing of a magnetic head onto a disc-shaped recording medium. The invention aims at realizing such a disc drive apparatus with a simplified structure via further contraction of size, and yet, the invention also aims at realizing so-called soft-landing of the magnetic head onto the recording medium. To achieve the objects, the invention provides a disc drive apparatus comprising: a magnetic head which executes recording or reproduction of signal against a flexible magnetic disc and a head arm which holds the magnetic head at its tip portion and freely shifts itself in the diametric direction of the flexible magnetic disc via drive force of a linear motor. More particularly, the disc drive apparatus incorporates such a mechanism comprising: an overhung arm member projecting itself in the lateral direction of the disc drive apparatus, which is formed at the tip portion of the head arm; a lifter member which acts on locus of the overhung arm member when the head arm is shifted by the linear motor; and an inclined plane secured to the lifting member, which enables the magnetic head to realize soft-landing onto the flexible magnetic disc. Based on this mechanism, while the magnetic head proceeds itself via drive force of the linear motor, the overhung arm member slides itself over the inclined plane downward to simultaneously enable the magnetic head to realize head landing, in other words, soft-landing.

FIG. 44

**Description**

BACKGROUND OF THE INVENTION

1. Field of the Invention

The present invention relates to a disc drive apparatus and a cartridge type disc shaped recording medium to be installed in the disc drive apparatus. More particularly the invention relates to a head landing mechanism of a magnetic head onto the disc shaped recording medium. In particular, the invention relates to such a technique capable of realizing so-called soft-landing of the magnetic head featuring simple structure with light weight onto the disc shaped recording medium.

2. Description of the Related Art

Normally, a head-landing (in other words, head-loading) operation of a magnetic head is executed against a disc shaped recording medium via such a mechanism in which the magnetic head is supported by the tip portion of a head arm capable of shifting itself in the diametric direction of the disc shaped recording medium or in the direction in parallel with the recording medium via a drive means being orthogonal thereto.

Normally, the head-landing operation is executed via a process in which the magnetic head is set to a position apart from a disc surface outside of an external circumference of the disc shaped recording medium followed by a process in which the magnetic head is brought into contact with the disc surface after approaching the disc surface at a position slightly being inner from external circumference of the disc shaped recording medium.

In order to form the mechanism for implementing the head-landing operation, normally, such a member is disposed, which uplifts the head arm to a position slightly outside of the external circumferential edge of the disc shaped recording medium. In this case, it is so arranged that, while the magnetic head remains being off from landing, the head arm is uplifted by operating the uplifting member. When implementing head-landing operation, the uplifting member is shifted to leave the head arm to enable the magnetic head held at the tip portion of the head arm to perform landing onto the disc surface.

Nevertheless, in order to properly operate the disc drive apparatus incorporating such head-loading mechanism cited above, the head-arm uplifting member needs to be linked with the shifting movement of the head arm in the forward and backward directions. This in turn entails complexity of the mechanism to result in the expanded scope of the disc drive apparatus. Further, when performing the head landing, the uplifting member merely shifts itself to be apart from the head arm, because of repulsive force of the head arm, the magnetic head may be forced to hit against the disc surface, thus raising a problem.

In particular, in recent years, down-sizing of the disc drive apparatus has been spread quite significantly thus resulting in the development of so-called PC-card ( Personal Computer) type disc drive apparatus. Nevertheless, such an updated PC-card type disc drive apparatus still faces such a proposition to essentially minimize dimension in the direction of thickness.

It is a conventional practice to form a cartridge-type recording medium such as the one called "a flexible magnetic disc" (this is merely referred to as a FD in the following description) which is substantially rectangular as viewed across a plane surface, and yet, the upper surface of the flexible magnetic disc is conventionally formed with the plane surface.

Such a conventional disc drive apparatus using the above-cited FD cartridge contains a space to allow insertion of the FD cartridge therein, and yet, a pressing means for pressing the FD cartridge is disposed at the upper portion of the space.

Such pressing means is essential for positioning the height-direction of the FD cartridge. The space for disposing the pressing means is formed at the upper portion of a cartridge-inserting-space inside of the disc drive apparatus.

In recent years, there has been a growing demand for further contracting and thinning dimension of the disc drive apparatus. Nevertheless, the space provided for accommodating the above-referred pressing means causes thickness of the disc drive apparatus to be expanded, thus also raising a problem.

In particular, in recent years, such a disc drive apparatus is developed, which makes it possible to perform a cartridge-loading and a disc-chucking operation merely by way of inserting the FD cartridge into the disc drive apparatus in the horizontal direction. In this case, it is so desired that space needed for accommodating the pressing means be minimized.

Even in the case of such a disc drive apparatus which enables the cartridge-loading and the disc-chucking operation to be performed by lowering the FD cartridge in the direction orthogonal to the inserting direction of the FD cartridge after inserting the FD cartridge into the disc drive apparatus in the course of loading the FD cartridge into the disc drive apparatus, further thinning of the thickness of the disc drive apparatus is also demanded as another problem to solve.

SUMMARY OF THE INVENTION

In consideration of the above problems, the invention aims to provide further down-sizing, in particular, further thinning of the disc drive apparatus.

A novel cartridge-type recording medium according to the invention incorporates a recording medium, and both-side-portions of the recording medium in the direction orthogonal to the cartridge-inserting-direction against the disc drive apparatus performing recording or reproduction of data onto and from the recording medium are respectively formed to be thinner than the center portion of the recording medium.

The invention hence provides a technique for forming a space needed for disposing a pressing means for pressing the cartridge-type recording medium installed in the disc drive apparatus by way of devising the form of the cartridge whereby enabling to further reduce actual thickness of the disc drive apparatus.

The invention realizes so-called soft-landing of the magnetic head onto the disc shaped recording medium by way of simplifying and contracting the structure of the disc drive apparatus.

Accordingly, in the cartridge-type recording medium pertaining to the invention, both-side-portions of the recording medium in the direction orthogonal to the cartridge-inserting-direction against the cartridge-drive apparatus are respectively thinly formed. By causing the pressing means of the disc drive apparatus to press against the thinly formed both-side-portions, it is possible to dispose the pressing means at a portion corresponding to the thinly formed portion inside of the disc drive apparatus, whereby contributing to further thinning of the disc drive apparatus.

The disc drive apparatus pertaining to the invention executes recording or reproduction of data onto or from the cartridge-type recording medium whose both-side-portions in the direction orthogonal to the direction of inserting the recording medium into the disc drive apparatus is formed to be thinner than the center portion of the recording medium. A pressing means for depressing the disc cartridge downward is preferably disposed at an upper portion of a space for inserting the disc cartridge and at such a portion corresponding to the thinly formed part of the disc cartridge.

Accordingly, inasmuch as a pressing means for pressing the disc cartridge is disposed at a position corresponding to the thinly formed part of the disc cartridge, it is possible for the disc drive apparatus related to the invention to accommodate the pressing means in the space formed between the disc drive apparatus and the thinly formed part in the course of inserting the disc cartridge, whereby realizing a thinly formed disc drive apparatus.

Further particular and preferred aspects of the present invention are set out in the accompanying independent and dependent claims. Features of the dependent claims may be combined with features of the independent claims as appropriate, and in combinations other than those explicitly set out in the claims.

BRIEF DESCRIPTION OF THE DRAWINGS

The present invention will be described further, by way of example only, with reference to preferred embodiments thereof as illustrated in the accompanying drawings, in which:

FIG. 1 is a partially exploded perspective view showing the state after ejection of a disc drive apparatus and an FD cartridge out from a PC-card slot;
FIG. 2 is an exploded perspective view of the FD cartridge after disassembly as being shown in conjunction with FIG. 3 through FIG. 11;
FIG. 3 is a perspective view of the FD cartridge shown in FIG. 1 and FIG. 2;
FIG. 4 is plan view of the FD cartridge shown in FIG. 3;
FIG. 5 is a bottom view of the FD cartridge shown in FIG. 3;
FIG. 6 is a front view of the FD cartridge shown in FIG. 3;
FIG. 7 is a rear view of the FD cartridge shown in FIG. 3;
FIG. 8 is a perspective view of a shutter;
FIG. 9 is an enlarged cross-sectional view of the FD cartridge taken along line IX through IX shown in FIG. 4;
FIG. 10 is a cross-sectional view designating the relationship between a center core and a hole of a center core as being shown in conjunction with FIG. 11;
FIG. 11 a cross-sectional view designating the state in which the center core deviates from the center of a center-core-hole;
FIG. 12 is an exploded perspective view of components of the disc drive apparatus as being shown in conjunction with FIG. 13 through FIG. 64;
FIG. 13 is a plan view of the disc drive apparatus showing the state being disengaged from a top cover, where the FD cartridge is ejected;
FIG. 14 is a plan view of the disc drive apparatus loaded with the FD cartridge;
FIG. 15 is a front view of the cartridge-loaded disc drive apparatus;
FIG. 16 is a center-longitudinal-sectional view showing the state in which the FD cartridge is inserted in the disc drive apparatus;
FIG. 17 is an enlarged cross-sectional view of a door member as shown in conjunction with FIG. 18, wherein FIG. 17 designates the state in which no external force is applied to the top cover;
FIG. 18 is a cross-sectional view showing the state in which external force is applied to the top cover;
FIG. 19 is a schematic plan view designating the state in which positioning of the FD cartridge in the left-and-right directions is performed as being shown in conjunction with FIG. 20 and FIG. 21, wherein FIG. 19 designates a plan view showing the state in which the FD cartridge is inserted via an inserting slot;
FIG. 20 is a schematic plan view designating the state in which the FD cartridge is inserted into a position further from the state shown in FIG. 19;
FIG. 21 is a schematic plan view designating the state in which the FD cartridge is fully loaded.

FIG. 22 is a transversal sectional view designating the state in which the FD cartridge is fully loaded;

FIG. 23 is a center-longitudinal-sectional view designating the state in which positioning of the FD cartridge in the height direction is performed;

FIG. 24 is a cross-sectional view designating serial processes for chucking the FD cartridge as being shown in conjunction with FIG. 25 through FIG. 28, wherein FIG. 24 designates the state in which process for chucking the FD cartridge is commenced, in other words, FIG. 24 designate the state in which the FD cartridge remains being free from chucking;

FIG. 25 designates the state immediately after entering chucking of the FD cartridge;

FIG. 26 designates the state in which the center core slides over a disc table in the inserting direction;

FIG. 27 designates the state immediately before completing chucking of the FD cartridge;

FIG. 28 designates the state complete with chucking of the FD cartridge;

FIG. 29 is a cross-sectional view designating serial processes for disengaging the FD cartridge from chucking as being shown in conjunction with FIG. 30 and FIG. 31, wherein FIG. 29 designates the state immediately after initiating the process for disengaging the FD cartridge from the state being chucked;

FIG. 30 designates the state in which the center core slides over the disc table in the ejecting direction;

FIG. 31 designates the state immediately before completing the process for disengaging the FD cartridge from the state being chucked;

FIG. 32 is a plan view designating an eject mechanism and a lock mechanism as being shown in conjunction with FIG. 34, FIG. 36, and FIG. 38, wherein FIG. 32 designates the state in which the lock mechanism is freed via eject mode against the FD cartridge, in other words, FIG. 3 designates the state in which process for loading the FD cartridge may be entered;

FIG. 33 is an enlarged plan view of the locking means for locking a slide plate and a trigger arm as being shown in conjunction with FIG. 35, FIG. 37, and FIG. 39, wherein FIG. 33 designates the state in which the locking means is freed;

FIG. 34 designates the state immediately before the FD cartridge is ejected, in other words, FIG. 34 designates the state immediately after the lock mechanism is freed. Note that the state shown in FIG. 34 is continuous from the state shown in FIG. 32 in terms of the process for loading the FD cartridge.

FIG. 35 designates the state immediately before the locking means effects own function, in other words, FIG. 35 designates the state immediately before disengaging the locking means in order to implement loading of the FD cartridge;

FIG. 36 designates the state in which the lock mechanism is operated immediately after activating eject operation: Note that the lock mechanism operating condition shown in FIG. 36 is continuous from the state shown in FIG. 34 in terms of the process for loading the FD cartridge.

FIG. 37 designates the state immediately after the locking means is freed, in other words, FIG. 37 designates the state immediately after the locking means is freed in order to implement loading of the FD cartridge;

FIG. 38 designates the state in which the FD cartridge is loaded;

FIG. 39 designates the state in which the locking is effected;

FIG. 40 is a plan view showing serial processes for releasing the shutter as being shown in conjunction with FIG. 42, in other words, FIG. 40 designates the state in which shutter-release operation is commenced;

FIG. 41 designates the state continuous from the one shown in FIG. 40, in other words, FIG. 41 designates the state in which the shutter just starts to open itself;

FIG. 42 designates the state continuous from the one shown in FIG. 41, in other words, FIG. 42 designates the state in which the shutter is fully released;

FIG. 43 is a plan view designating the state in which the FD cartridge is incorrectly inserted;

FIG. 44 is a plan view designating serial processes to execute escape of the magnetic head as being shown in conjunction with FIG. 45 and FIG. 46, wherein FIG. 44 designates the state in which the magnetic head stands at the forwarding position;

FIG. 45 a plan view designating the state continuous from the one shown in FIG. 44, wherein FIG. 45 designates the state in which the magnetic head just starts to retreat itself;

FIG. 46 is a plan view continuous from the one shown in FIG. 45, wherein FIG. 46 designates the state in which the magnetic head fully retreats itself;

FIG. 47 is a plan view designating a head-supporting mechanism;

FIG. 48 is a lateral view of the head-supporting mechanism;

FIG. 49 is a perspective view designating a tip portion of the head arm and the head-loading mechanism;

FIG. 50 is an enlarged front view of a head slider;

FIG. 51 is an enlarged bottom view of the head slider;

FIG. 52 is an enlarged front view of the tip portion of the head aim;

FIG. 53 is an enlarged plan view of the tip portion of the head arm;

FIG. 54 is a plan view designating a head-shifting mechanism as being shown in conjunction with the one shown in FIG. 55, wherein FIG. 54 designates the state in which the magnetic head is fully retreated;

FIG. 55 designates the state in which the magnetic head is carried forward;

FIG. 56 designates an enlarged cross-sectional view of the magnetic head shown in FIG. 54 taken along line LXIII through LXIII;

FIG. 57 is an enlarged front view of the head-loading mechanism;

FIG. 58 is an enlarged lateral view of a lifter;

FIG. 59 is a lateral view designating a modified example of a provisional fixing means as being shown in conjunction with FIG. 60 and FIG. 61, wherein FIG. 59 designates the provisionally fixed condition;

FIG. 60 designates the state in which process mode shifts from the provisionally fixed condition to the released condition;

FIG. 61 designates the state in which provisional fixing means is released;

FIG. 62 designates an enlarged horizontal-preserving mechanism provided for a main guide shaft as being shown in conjunction with the one shown in FIG. 63, wherein FIG. 62 is a partially-notched lateral view designating the state prior to adjustment;

FIG. 63 is a partially-notched lateral view designating the state subsequent to adjustment; and

FIG. 64 designates a partially-notched lateral view designating such a system being provided with the horizontal-preserving mechanism on both ends of front and rear portions of a main guide shaft.

DESCRIPTION OF THE PREFERRED EMBODIMENTS

In accordance with practical mode of the embodiment exemplified in the accompanying drawings, detailed aspects of the disc drive apparatus related to preferred embodiments of the invention are described below.

Initially, it should be known that practical mode of the embodiment exemplified in the accompanying drawings has been applied to a so-called PC-card type disc drive apparatus and also to an extremely thin flexible disc cartridge that can freely be loaded into and unloaded from a PC-card slot conforming to the PCMCIA standard, where the terms PCMCIA stands for "Personal Computer Memory Card International Association".

Features of the disc drive apparatus and the flexible disc cartridge (this is merely referred to as an FD in the following description) usable for the disc drive apparatus are serially described below based on the following sequence.

(1) The PCMCIA card compatible with lap-top type personal computers
(2) FD cartridge
(3) Frame body
(4) Shutter
(5) Upper plate and lower plates
(6) Summary of the disc drive apparatus
(7) Card-type casing
(8) Disc rotation drive mechanism
(9) Eject mechanism
(10) Locking mechanism
(11) Shutter release mechanism
(12) Head escape mechanism
(13) Head supporting mechanism
(14) Head shifting mechanism
(15) Head loading mechanism
(16) Operation for loading the FD cartridge
(17) Operation for chucking the flexible magnetic disc
(18) Head landing operation
(19) Head take-off operation
(20) Operation for ejecting the FD cartridge
(21) Operation for releasing the flexible magnetic disc from chucking condition

According to a conventional practice, normally in terms of the front-rear directions of the FD cartridge, the front side corresponds to the part at which a shutter is set, whereas in terms of the front-rear directions of the disc drive apparatus, the front side corresponds to the part through which the FD cartridge can be inserted. Accordingly, the following description will be given in conformity with the above understanding. Due to the above reason, in the following description pertaining to the FD cartridge and the disc drive apparatus, the front and rear directions between them will become inverse from each other, and thus, be aware of this.

Further, a direction U, a direction D, a direction L, a direction R, a direction F, and a direction B respectively being indicated via arrows individually correspond to an upper direction, a lower direction, a leftward direction, a rightward direction, a front direction, and a rear direction. Be aware that the above-cited directivity shown in the description is cited merely for the sake of convenience, where the terms directivity is solely applied to such a case in which the disc drive apparatus is operated on the transversely laid basis. If the disc drive apparatus is to be operated on the vertically laid basis, the above-cited directivity will also vary.

(1) The PCMCIA card compatible with lap-top type personal computers:

Referring now to the corresponding drawings, the disc drive apparatus loaded in a lap-top type personal computer and a cartridge-type recording medium usable for the disc drive apparatus respectively being needed for implementing the practical mode of the preferred embodiment of the invention are described below.

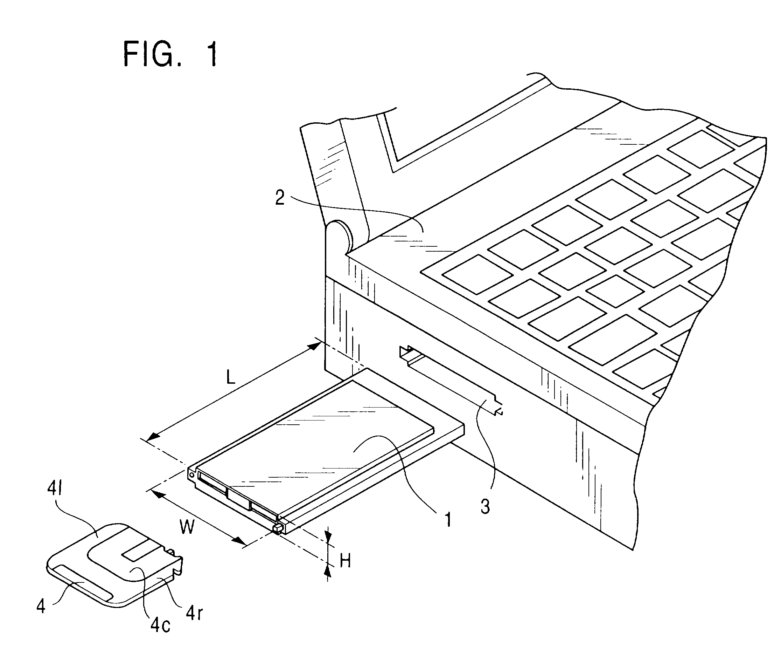

First, as is shown in FIG. 1 for example, a lap-top type personal computer 2 being capable of freely loading and unloading the disc drive apparatus 1 of the preferred embodiment is fitted with a PC-card slot 3 which is also capable of freely loading and unloading such a PC-card conforming to the above-referred PCMCIA standard such as an IC memory card or a fax-modem card for example.

It is so defined that specification of the PC-card slot 3 provided for the lap-top type personal computer 2 conforms to TYPE II (i.e., Release 2.1) of the PCMCIA standard in the practical mode of the preferred embodiment. It should be understood however that the disc drive apparatus 1 of preferred embodiments is not solely applicable to the TYPE II type PC card slot 3 provided for the lap-top type personal computer 2 nor solely limited to the PC-card type disc drive apparatus conforming to the PCMCIA standard.

First, an FD cartridge 4 being the cartridge-type recording medium used for the PC-card type disc drive apparatus 1 is described below.

(2) FD cartridge

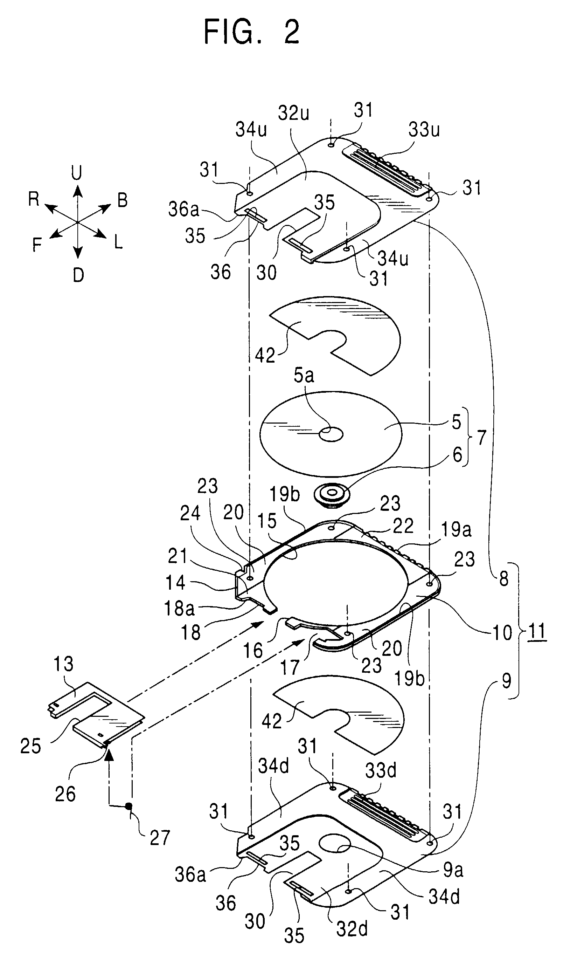

As is exemplified in FIG. 1 through FIG. 11, the FD cartridge 4 of preferred embodiments is fabricated via processes including a step of forming a flexible magnetic disc 7 by bonding a magnetic center core 6 onto a center of a disc shaped flexible magnetic sheet 5 followed by a step of rotatably inserting the flexible magnetic disc 7 into a cartridge body 11 comprising a metallic upper plate 8 and a metallic lower plate 9 by way of sandwiching a frame body 10 between them. The cartridge body 11 is provided with a head-inserting aperture 12 ranging from a center to the front edge portion of the cartridge body 11 in order to enable the magnetic head of the disc drive apparatus to be positioned in this range. It is so arranged that the head-inserting aperture 12 can be opened and closed by a shutter 13 (Refer to FIG. 2).

(3) Frame body

According to a plan view, the frame body 10 is substantially of rectangular form. The frame body 10 has a tapered portion 14 being tapered along the right-front corner by 45 degrees, whereas the remaining three corners are round. This configuration enables user to visually confirm the direction of the FD cartridge 4 (Refer to FIG. 2, FIG. 4, and FIG. 5).

The frame body 10 comprises a circular disc-storing hole 15 for internally accommodating the above-referred flexible magnetic sheet 5. The disc-storing hole 15 is formed with a rectangular plate member made from synthetic resin material.

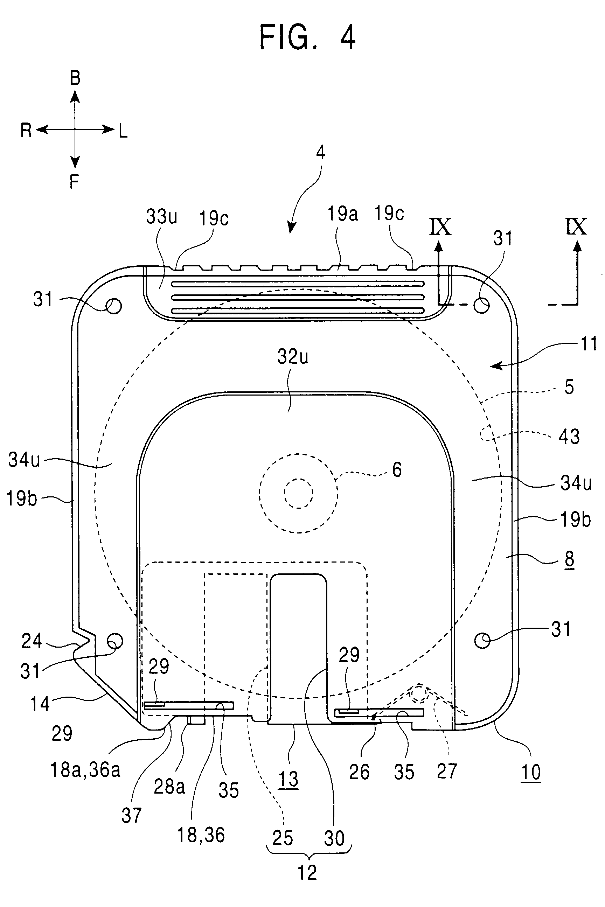

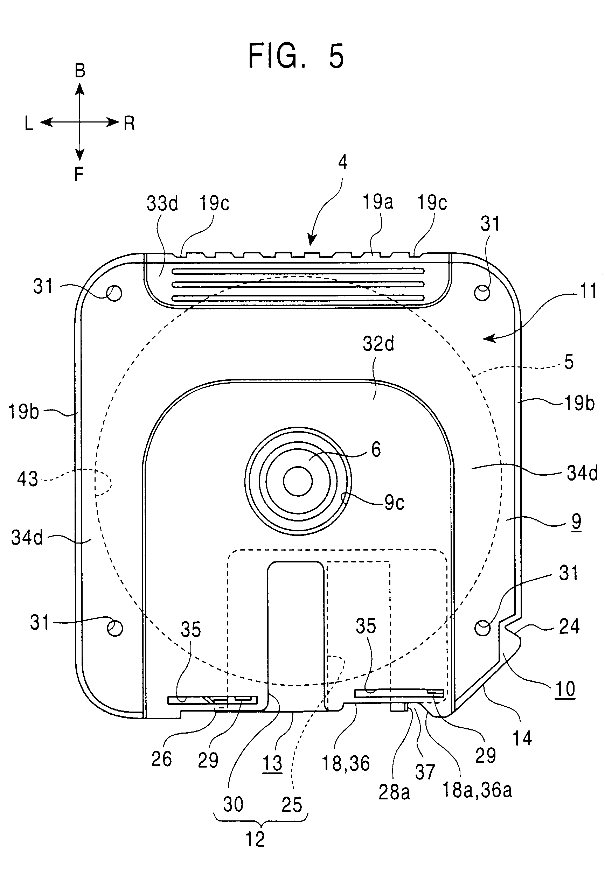

A cut-off portion 16 (head-inserting cut-off portion) is provided in the center of the front edge of the rectangular plate member. As will be described later on, it is so arranged that the magnetic head of the disc drive apparatus passes through the cut-off portion 16 before landing onto the flexible magnetic sheet 5 (Refer to FIG. 4 and FIG. 5).

A shutter-spring storage portion 17 consisting of an irregular form is provided to the left of the head-inserting cut-off portion 16 of the frame body 10. A slit 18 for allowing insertion of a projected portion of a trigger arm for pressing the shutter (the trigger arm will be described later on) is formed to the right of the above-referred head-inserting cut-off portion 16 of the frame body 10 by way of extending itself in both directions (Refer to FIG. 2).

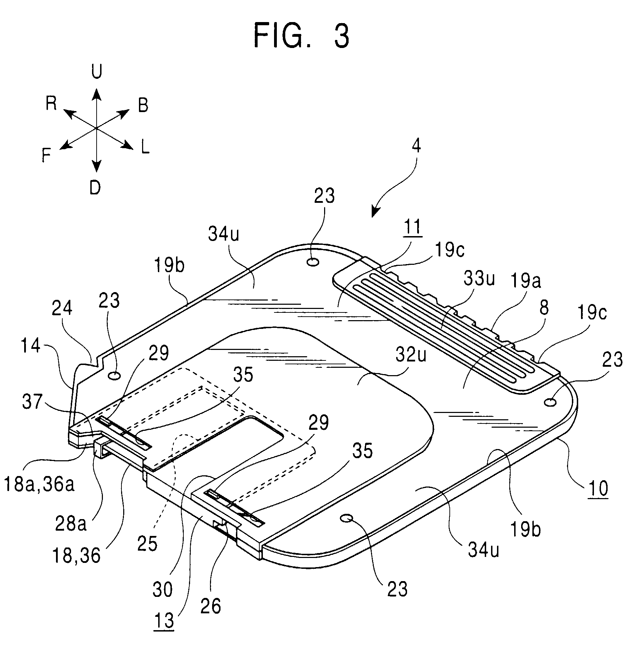

The right-end edge of the above-referred slit 18 consists of an inclined edge 18a (this is called "a guiding edge" in the following description), which diagonally faces the left front to facilitate insertion of the projected portion of the trigger arm into the slit 18 so that the shutter 13 can be pressed (Refer to FIG. 2 and FIG. 3).

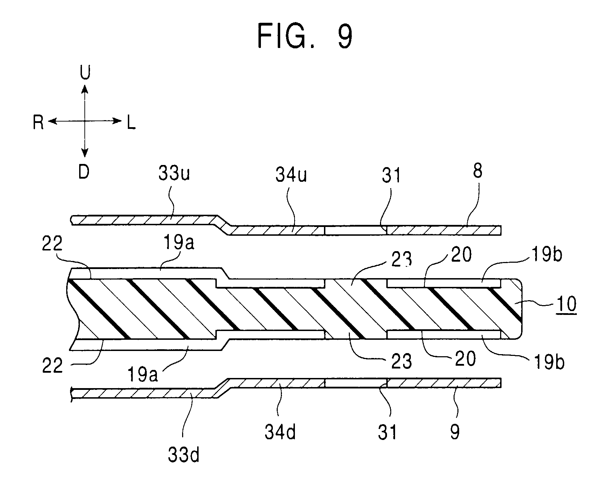

Except for the front edge, bank portions 19a and 19b projecting themselves in the upper and lower directions are formed along the peripheral edges of the frame body 10, where the projecting amount of the bank portions 19a and 19b in the upper and lower directions is substantially equivalent to each other (Refer to FIG. 2 and FIG. 9).

Except for left-and-right-side portions 20 corresponding to substantially one-sixth the both-side width being present at the lateral portion in the front of the frame body 10, a shutter-sliding recessed portion 21 is formed to be thinner than the left-and-right-side portions 20. As will be described later on, the recessed portion 21 slidably accommodates the shutter 13 (Refer to FIG. 2).

A rear-center portion 22 of the frame body 10 excluding the above-referred left-and-right-side portions 20 is formed to be slightly thicker than the left-and-right-side portions 20.

Thickness of the frame body 10 comprises three parts. Of these, the a front-center portion 21 corresponding to the above-referred shutter-sliding recessed portion is the thinnest. The above-referred left-and-right-side portions 20 corresponding to substantially one-sixth the both-side width is second to the thinnest. The rear-center portion 22 is formed to be the thickest (Refer to FIG. 2).

Inasmuch as the amount of the bank portions 19a and 19b projecting themselves in the upper and lower directions is constant, longitudinal dimension (longitudinal width) of the bank portion 19a corresponding to the rear-center portion 22 along the rear edge of the frame body 10 is arranged to be greater than the longitudinal width of bank portion 19b corresponding to the left-and-right-side portions 20 (Refer to FIG. 2 and FIG. 9).

A plurality of small recesses are disposed in the horizontal direction on the rear surface of the bank portion 19a corresponding to the rear-center portion 22 of the frame body 10. Of these, as will be described later on, the small recesses 19c disposed at both horizontal ends respectively function in order that the FD cartridge 4 can be prevented from incorrectly being inserted. More particularly, incorrect insertion of the FD cartridge 4 can be prevented from occurrence via such a mechanism in which, while inserting the FD cartridge 4 into the disc drive apparatus 1 via the rear edge, shutter-pressing projections are engaged with the above-referred recesses 19c jointly functioning to inhibit incorrect insertion of the FD cartridge 4 to simultaneously inhibit rotary movement of the trigger arm, whereby preventing the FD cartridge 4 from being led into the disc drive apparatus 1 furthermore.

A plurality of positioning projections 23 are integrally disposed at positions close to both-side edges in the forward and backward directions on the upper and bottom surfaces on both sides of the frame body 10. It is so arranged that height of the positioning projections 23 is substantially equivalent to the projecting amount of the bank portions 19b in the longitudinal direction in correspondence with the left-and-right-side portions 20 (Refer to FIG. 2 and FIG. 9).

A triangular notched portion is formed at a position slightly behind the above-referred tapered portion 14 of the frame body 10. The triangular notched portion makes up a stopper recess 24 which enables a locking claw of the disc drive apparatus 1 to be engaged therewith (Refer to FIG. 2, FIG. 3, FIG. 4, and FIG. 5).

(4) Shutter

The shutter 13 is made of plate material having ⊐-shaped sectional form and being folded by way of being open in the horizontal direction and at the rear end. It is so arranged that depth in the forward and backward direction is substantially equivalent to that of the above-referred shutter sliding recess 21 of the frame body 10. Width in the horizontal direction corresponds to substantially two-third the width in the horizontal direction of the shutter sliding recess 21 of the frame body 10. The shutter 13 is positioned by way of allowing the shutter sliding recess 21 of the frame body 10 to sandwich the upper and the bottom surfaces of the shutter 13 from the front edge, and yet, the shutter 13 is positioned in order that it can freely slide itself in the horizontal direction (Refer to FIG. 2, FIG. 3, FIG. 4, and FIG. 5).

A rectangular cut-out portion 25 (this is called "a shutter hole" in the following description) is provided for the shutter 13 by way of opening to the front at a position slightly being close to the light apart from the horizontal-directional center. It is so arranged that, after performing sliding operation, when the shutter 13 is positioned to the left inside of the shutter sliding recess 21, the shutter hole 25 coincides with the head inserting cut-out portion 16 of the frame body 10 to open the head inserting cut-out portion 16. Conversely, when the shutter 13 is positioned to the right of the shutter sliding recess 21, the head inserting cut-out portion 16 is dosed (Refer to FIG. 4, FIG. 5, and FIG. 8).

The shutter hole 25 is formed with such a length substantially being one third the depth-directional length from its front edge. Further, the shutter hole 25 is formed to be slightly wider than signal-recording domain in the diametric direction of the flexible magnetic disc 7 stored in the cartridge body 11 (Refer to FIG. 4 and FIG. 5).

A spring contact piece 26 projecting itself to the left is formed to the left of the front edge of the shutter 13. An end of a shutter spring 27 disposed inside of shutter-spring storing portion 17 on the frame body 10 is brought into contact with the spring-contact piece 26, whereby the shutter 13 is energized via sliding to the right up to the dosing position (Refer to FIG. 4 and FIG. 5).

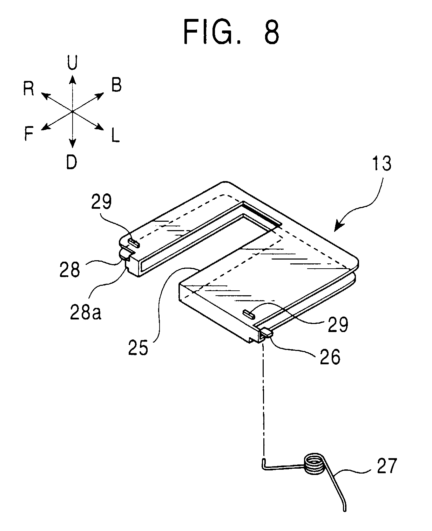

A rectangular front-side notched portion 28 extensively being open to the front and to the right in the horizontal direction is formed to the right of the front edge of the shutter 13. The rectangular front-side notched portion 28 corresponds to the above-referred inserting slit 18 of the frame body 10. The left edge of the rectangular front-side notched portion 28 corresponds to an edge 28a which is subject to pressing force of the shutter-pressing projection of the trigger arm to be described later on (Refer to FIG. 8).

A plurality of sliding projections 29 externally (upward or downward) projecting themselves are formed at both-end positions dose to the front edges of the upper and lower surfaces of the shutter 13. These sliding projections 29 are slidably coupled with sliding slits formed on the upper plate 8 or the lower plate 9. The sliding slits will be described later on (Refer to FIG. 8).

(5) Upper plate and lower plate

The upper plate 8 and the lower plate 9 are respectively made of plate material and formed with a substantially identical rectangular shape being smaller than that of the frame body 10. More particularly, the upper plate 8 and the lower plate 9 are so formed that each can be accommodated in space surrounded by the bank portions 19a and 19b of the frame body 10. A notched portions 30 (these portions 30 will be referred to as "head-inserting notches" in the following description) each having such a form identical to that of the shutter hole 25 of the shutter 13 at the position corresponding to the head-inserting cutoff portion 16 of the frame body 10. Positioning holes 31 are formed at the positions each corresponding to the above-referred positioning projections 23 so that each of them can be coupled with each other (Refer to FIG. 2 and FIG. 4).

In the upper plate 8, some portions excluding one-sixth portion on the horizontal both sides and the rear-side portion slightly displace upward from other portions, thus forming a projected thin portion 32u. Like the projected thin portion 32u, a holding portion 33u excluding one-sixth the horizontal both sides out of the rear-side portion is also formed by way of slightly displacing upward from other portions.. Because of this arrangement, horizontal both-side portions 34u, 34u of the upper plate 8 are respectively positioned by way of slightly being displaced from other portions including the projected thin portion 32u and the holding portion 33u (Refer to FIG. 2, FIG. 6, and FIG. 7).

The lower plate 9 is of such a shape in which the upwardly displaced portion of the upper plate 8 is seemingly displaced downward. More particularly such a portion corresponding to the projected thin portion 32u of the upper plate 8 is slightly displaced downward to form a recessed thin portion 32d, In the same way, such a portion corresponding to the holding portion 33u is slightly displaced downward to form a holding portion 33d. Likewise, those portions corresponding to the horizontal both-side portions 34u, 34u are also formed into the horizontal both-side portions 34d, 34d (Refer to FIG. 2, FIG. 6, and FIG. 7).

A plurality of sliding slits 35 extending themselves in the horizontal direction are formed on both-side portions across the above-referred head-inserting notches 30 at the positions close to the front edges of the upper and lower plates 8 and 9. These sliding slits 35 individually enable the sliding projections 29 of the shutter 13 to be slidably coupled therewith (Refer to FIG. 2 through FIG. 5).

In correspondence with the above-referred inserting slit 18, other inserting slits 36 are provided to the right of the front edge of the upper plate 8 and the lower plate 9 as well. The right edge portion corresponds to inclined guide edges 36a which diagonally face the front. Like the above-referred guide edge 18a provided for the frame body 10, the inclined guide edges 36a enable the shutter pressing projections to easily be inserted into the inserting slits 36 (Refer to FIG. 3).

Based on the above arrangement, while the shutter 13 remains being closed, the guide edges 18a, 36a, and the edge 28a of the shutter 13 are respectively positioned across a predetermined interval, where an interval portion (this is called guide recess portion) 37 is formed into a small trapezoidal shape being open to the front according to the plan view (Refer to FIG. 3, FIG. 4, and FIG. 5).

A center-core hole 9a is disposed at substantially a center position of the lower plate 9 in order to allow the center core 6 of the above-described flexible magnetic disc 7 to project itself downward (Refer to FIG. 2 and FIG. 5).

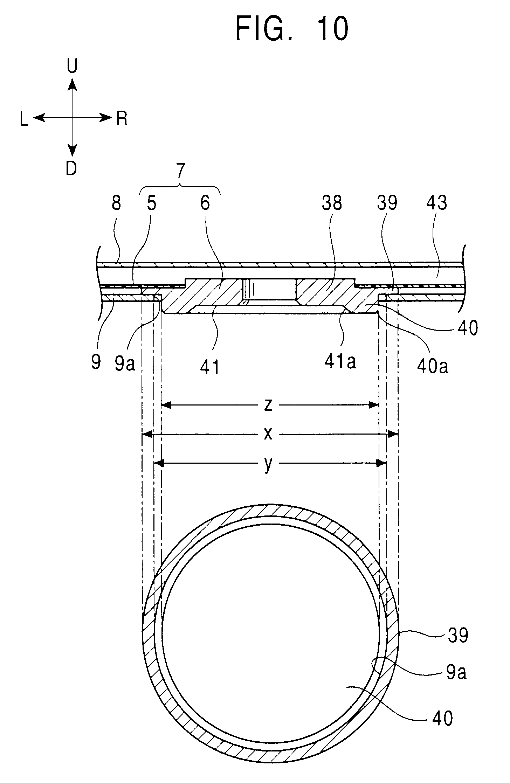

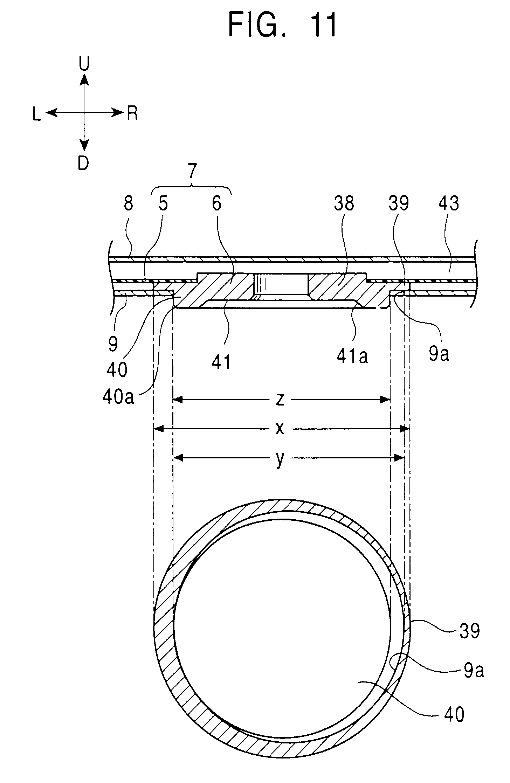

As described earlier, the flexible magnetic disc 7 comprises such a form in which the center core 6 is bonded onto the center of the disc shaped flexible magnetic sheet 5. More specifically the center core 6 comprises a media core portion 38 being inserted into a center hole 5a of the flexible magnetic sheet 5, a flange portion 39 formed with externally projecting bottom-circumferential edge of the media core portion 38, and a chucking portion 40 projecting itself from the bottom surface of the flange portion 39. After substantially fully inserting the media core portion 38 into the center hole 5a of the flexible magnetic sheet 5, the upper surface of the flange portion 39 is firmly secured to the flexible magnetic sheet 5 to complete the flexible magnetic disc 7 (Refer to FIG. 10 and FIG. 11).

An external diameter (x) of the flange portion 39 of the center core 6 is greater than an internal diameter (y) of the above-referred center core hole 9a, whereas an external diameter (z) of the chucking portion 40 of the center core 6 is slightly less than the center core hole 9a, wherein this relationship is expressed by a formula shown below: (Refer to FIG. 10 and FIG. 11)

$$(x-z)/2>y-z$$

Because of the above arrangement, the chucking portion 40 of the center core 6 is loosely positioned inside of the center core hole 9a. When the lower plate 9 is below the FD cartridge 4, and yet, even when the center core 6 is deflectively positioned inside of the center core hole 9a, an external circumferential edge of the flange portion 39 will not be positioned inside of the center core hole 9a, and thus, the center core hole 9a is always closed by the flange portion 39 of the center core 6, whereby totally preventing dust from infiltrating into the cartridge body 11 (Refer to FIG. 10 and FIG. 11).

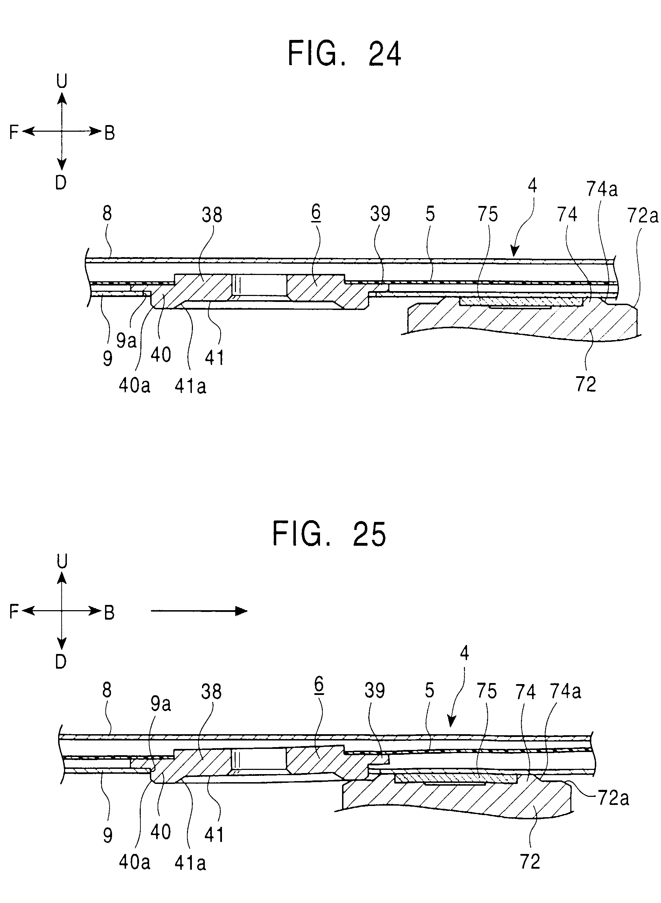

It is so arranged that the thickness of the center core 6 is substantially equal to or slightly more than the sum of the interval between the upper plate 8 and the lower plate 9 and the thickness of the lower plate 9. It is also arranged that, when the center core 6 is lifted from the bottom surface side, the bottom surface of the chucking portion 40 is flush with the bottom surface of the lower plate or the bottom surface of the chucking portion 40 slightly projects itself outward. Based on the arrangement, the center core 6 can not be disengaged from the center core hole 9 (Refer to FIG. 24 through FIG. 31). This is because, if the center core 6 is disengaged from the center core hole 9a and caught between the upper plate 8 and the lower plate 9, it will entail much difficulty to properly position the center core 6 inside of the center core hole 9a.

A chucking recess portion 41 with circular section is formed on the lower surface of the chucking portion 40 of the center core 6 to enable chucking projection of a disc table (to be described later on) to be coupled with the chucking recess portion 41. An inner circumferential surface of the chucking recess portion 41 is gradually contracted in the upward direction to form a tapered surface 41a via substantially 30 degrees of tapered angle. Depth of the chucking recess portion 41 is arranged to be greater than the projective amount of the above-referred chucking projection. The bottom external circumferential edge 40a of the chucking portion 40 is provided with a small R surface (Refer to FIG. 10 and FIG. 11).

By way of interposing the flexible magnetic disc 7 in the course of bonding the lower plate 9, the frame body 10, and the upper plate 8, with each other, the FD cartridge 4 is integrally formed (Refer to FIG. 2 and FIG. 3).

Concretely, first, the frame body 10 is positioned on the lower plate 9. Next, the flexible magnetic disc 7 is disposed by securing the center core 6 to the winter core hole 9a formed in the lower plate 9. Before implementing this process, a liner 42 is bonded onto a predetermined portion of the lower plate 9 corresponding to the disc-storing hole 15 formed in the frame body 10 (Refer to FIG. 2).

The liner 42 itself is of semispherical form. As will be described later on, the liner 42 is adhered onto the lower plate 9 with a care not to obstruct the shutter 13 from performing sliding movement. The liner 42 consists of a sheet for protecting signal-recording domain on the flexible magnetic sheet 5 of the flexible magnetic disc 7. The liner 42 is composed of a non-woven fabric for example.

Next, the shutter spring 27 is secured inside of the shutter-spring storing portion 17. Next, the upper plate is superposed on the frame body 10. When implementing this process, as was done for the lower plate 9, such a proper portion of the upper plate 8 corresponding to the disc-storing hole 15 of the frame body 10 is also bonded with the liner 42.

In the course of bonding the lower plate 9, the frame body 10, and the upper plate 8 with each other, front edge portions of the upper plate 8 and the lower plate 9 are respectively held in the state slightly being afloat above the frame body 10. Next, by way of sandwiching the frame body 10 from the front side, the shutter 13 is disposed to the predetermined position inside of a space jointly formed by the upper plate 8, the frame body 10 (corresponding to the shutter-sliding recess portion 21 and the other shutter-sliding recess portion 21), and the lower plate 9.

Next, an end of the shutter spring 27 is brought into contact with the above-referred spring-contact piece 26 to cause the other end of the shutter spring to come into contact with inner wall of the shutter-spring storing portion 17. As a result, the shutter 13 is energized to the right, and then, the shutter 13 is positioned to the furthest right within own shifting range to cause the head inserting cut-off portion 16 to be closed.

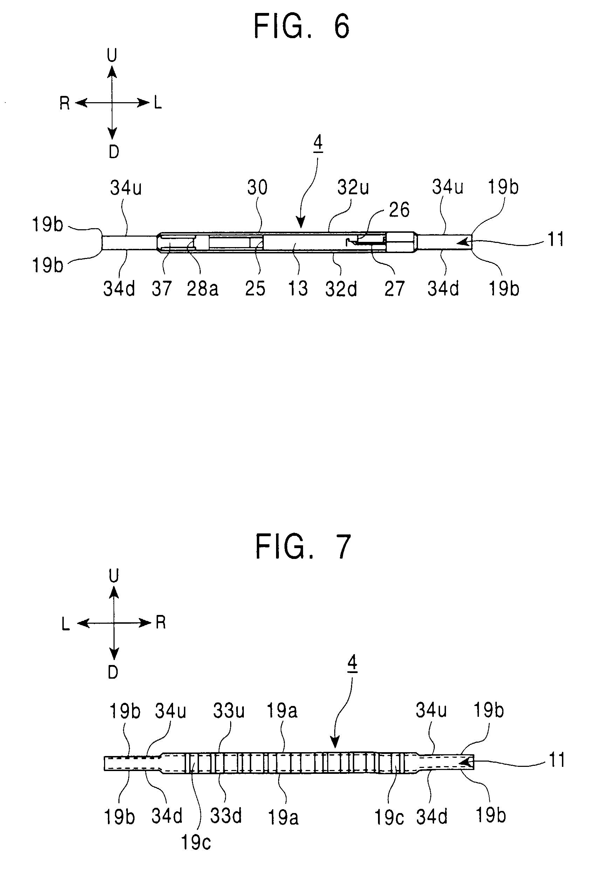

Before bonding the upper plate 8 and the lower plate 9 to the frame body 10, the positioning projections 23 provided for the frame body 10 are respectively coupled with corresponding positioning holes 31 provided for the upper plate 8 and the lower plate 9. Next, surfaces for coming into contact between the frame body 10, the upper plate 8, and the lower plate 9, are respectively coated with adhesive agent to effect adhesion between them. As a result, the external circumferential edges of the upper plate 8 and the lower plate 9 are respectively positioned in the space surrounded by the bank portions 19a and 19b described earlier. This in turn enables the upper edge or the lower edge of the bank portion 19a and 19b to be flush with the upper plate 8 or the lower plate 9 (Refer to FIG. 6 and FIG. 7). Not only by applying adhesion, but the bonding between the frame body 10, the upper plate 8, and the lower plate 9, may also be implemented by applying welding. When the welding is applied, it is suggested that projecting amount of the positioning projections 23 be arranged substantially in advance, and then, after causing the positioning projections 23 to be coupled with the positioning holes 31 those portions projecting from the upper plate 8 and the lower plate 9 may thermally be caulked.

Next, the disc-storing hole 15 of the frame body 10 sandwiched by the upper plate 8 and the lower plate 9 form a space needed for rotating the flexible magnetic disc 7 (Refer to Fl. 4, FIG. 5, FIG. 10, and FIG. 11).

The sliding projections 29 provided for the shutter 13 are respectively coupled with the sliding slits 35 formed in the upper plate 8 and the lower plate 9, whereby causing the shutter 13 to be sandwiched by the upper plate 8 and the lower plate 9 in the state in which the shutter 13 pinches the shutter sliding recess 21, and yet, the shutter 13 is held by way of freely sliding itself to the left and to the right (Refer to FIG. 3).

As described above, the shutter 13 remains in the condition being incorporated between the upper plate 8 and the lower plate 9, and yet, inasmuch as majority of the shutter 13 is not exposed, except for the front edge portion of the cartridge body 11, it is so arranged that nobody can be brought into contact with the shutter 13 itself Even though the shutter 13 dispenses with such a mechanism for locking the closed condition, when a user manually holds the FD cartridge 4, he can rarely come into direct contact with the shutter 13, and yet, there is no fear of causing the shutter 13 to be released carelessly (Refer to FIG. 3).

Dimension of the above-referred FD cartridge 4 is arranged to be as specified below. For example, 49mm in the front-rear directional dimension; 47mm in the left-right directional dimension; 1.7mm through 2mm of the thickness in the center portion 4c, and 1.2mm through 1.7mm of the thickness in the left-right both-side portions 41 and 4r (Refer to FIG. 1).

Width (w) of the head-inserting aperture 12 of the cartridge body 11 is arranged to be approximately 6mm, which is slightly wider than the widest portion of the head arm for holding the magnetic head (to be described later on) provided for the disc drive apparatus 1. In other words, width (w) of the head-inserting aperture 12 is arranged to be the minimum needed for enabling the magnetic head to properly shift itself in the diametric direction of the flexible magnetic disc 7.

Diameter of the flexible magnetic disc 7 is arranged to be approximately 1.7 inches. The flexible magnetic disc 7 contains approximately 150MB of recording capacity in its signal recording domain.

The front and bottom surfaces of the both-side portions 4l and 4r of the cartridge body 11 are evenly thinned. It is so arranged that whole circumference of the flexible magnetic sheet 5 can correctly be positioned substantially at the center between the upper plate 8 and the lower plate 9 at the time of completing loading of the cartridge body 11 within space 43 provided for rotating the flexible magnetic disc 7 of the cartridge body 11. Owing to this arrangement, whenever the flexible magnetic disc 7 rotates, no difference can be generated in the magnitude of pressure generated between the flexible magnetic sheet 5 and the upper and lower plates 8 and 9 inside of the cartridge body 11, whereby realizing stable rotation all the time.

(6) Summary of the disc drive apparatus

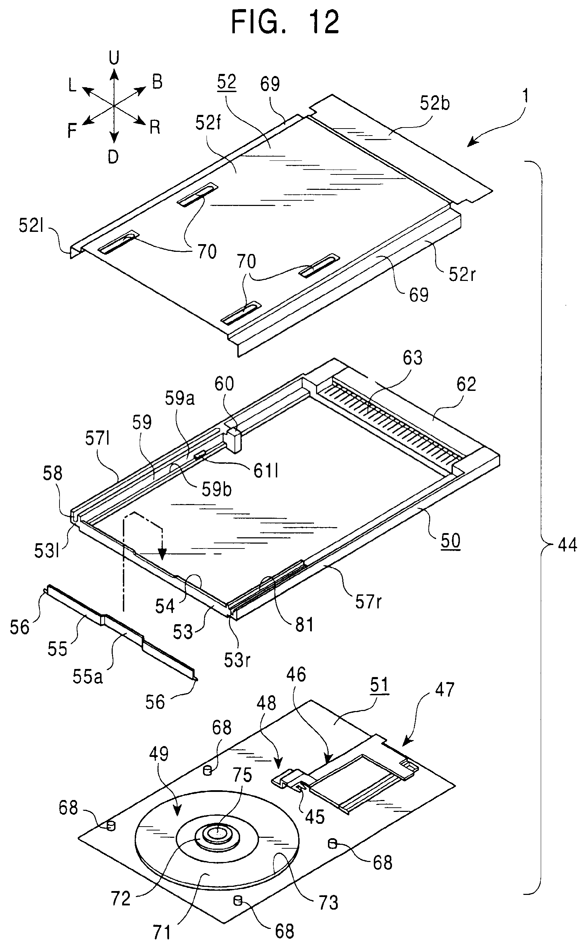

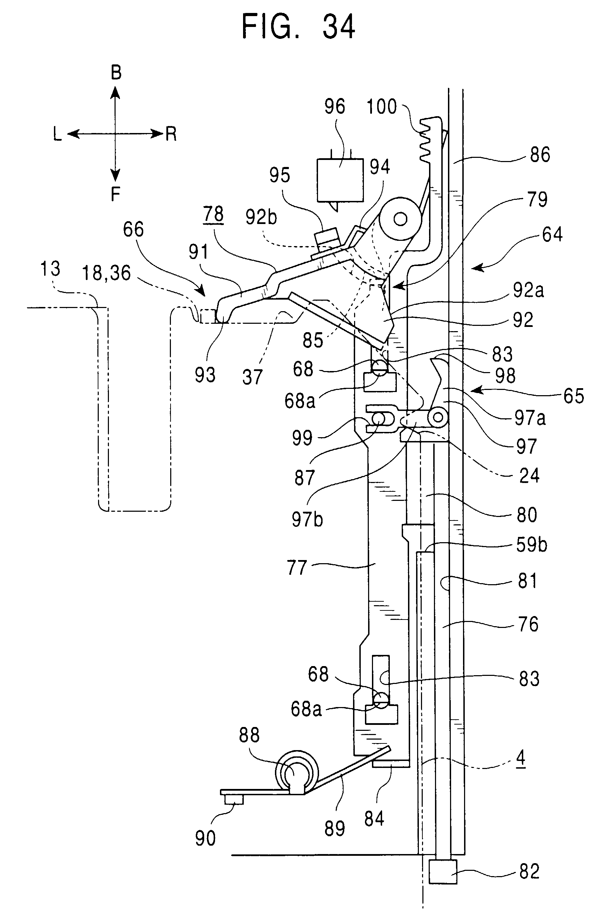

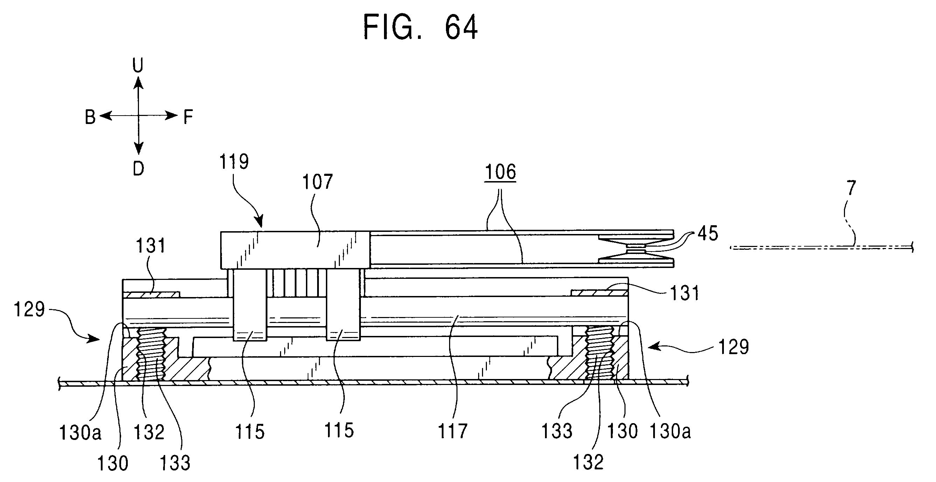

As is exemplified in FIG. 1, and FIG. 12 through FIG. 64, the disc drive apparatus 1 comprises the following: a card-type casing 44 to be loaded into the PC-card slot 3 provided for the individual lap-top type personal computer 2; a head-supporting mechanism 46 for supporting magnetic heads 45; a head-shifting mechanism 47 which shifts the head-supporting mechanism 46 in the forward-backward direction to cause the supported magnetic heads 45 to be shifted linearly in the diametric direction of the flexible magnetic disc 7; a head-loading mechanism 48 which enables the magnetic heads 45 to perform landing and take-off onto and from the flexible magnetic disc 7 stored in the cartridge body 11; and a disc-rotation drive mechanism 49 which drives the flexible magnetic disc 7 to perform rotation (Refer to FIG. 12, FIG. 13, and FIG. 114).

(7) Card-type casing

As shown in FIG. 12, the card-type casing 44 comprises the following: a mechanical chassis mold 50 made from synthetic resin material molded into rectangular frame shape being lengthy in the front-rear direction; a mechanical chassis base plate 51 which is composed of slightly thick plate material by way of covering the bottom surface of the mechanical chassis mold 50; and a top-cover 52 which is composed of plate material by way of fully covering the top surface and both-side surfaces.

The above-referred mechanical chassis mold 50 and the mechanical chassis base plate 51 are integrally formed via insert-molding process. However, for explanatory convenience, the mechanical chassis mold 50 and the mechanical chassis base plate 51 are discretely illustrated in the drawings.

Although not being illustrated, surfaces of the mechanical chassis base plate 51 and the top cover 52 are respectively adhered with protection seal

As being specified in FIG. 1, external dimension of the card-type casing 44 comprises 85mm of length (L), 54mm of width (W), and 5mm of height (H), which respectively conform to the standard prescribed for the TYPE-II-PC card.

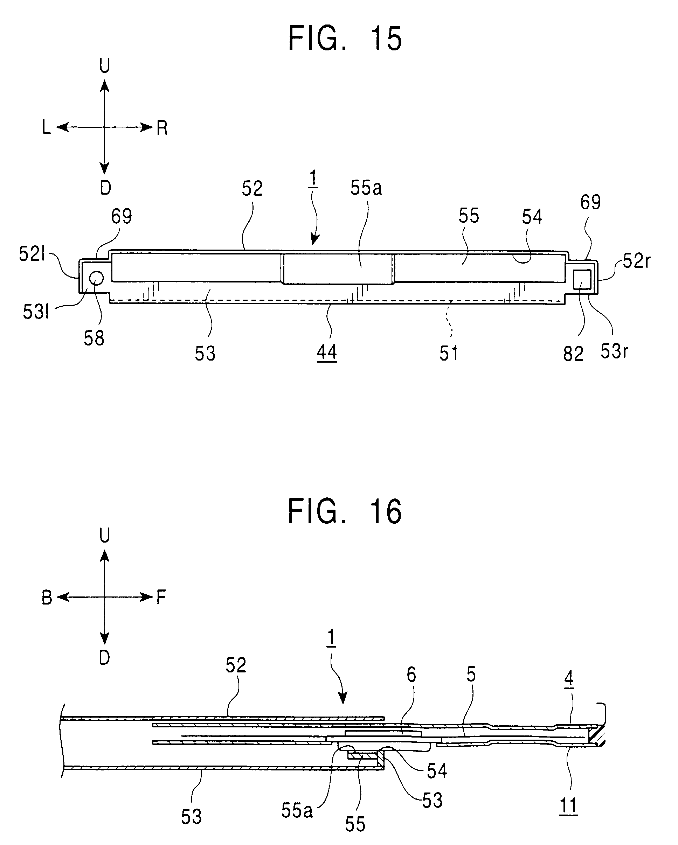

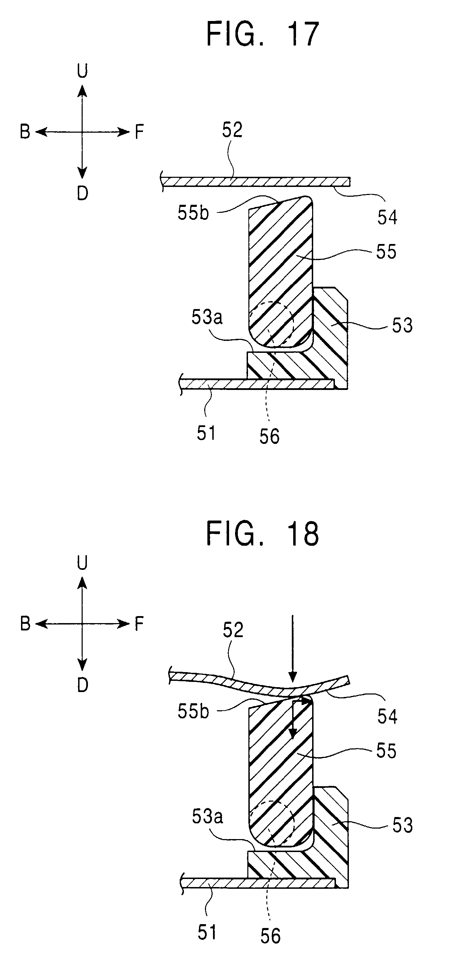

Front mold piece 53 provided for the mechanical chassis mold 50 is formed with flat ⊐-shaped member being open to the top, where the cut-out portion makes up the cartridge-inserting port 54 for allowing insertion and extraction of the FD cartridge 4. More particularly, the cartridge-inserting port 54 is formed by way of covering the upper portion of the mechanical chassis mold 50 with the top cover 52 (Refer to FIG. 12 and FIG. 15). Bottom piece 53a of the front mold piece 53 is integrally formed in the inward direction by way of internally projecting itself (Refer to FIG. 17 and FIG. 18).

A door 55 comprises a slender plane piece extending itself in the horizontal direction, which is held by the mechanical chassis mold 50 via a pair of rotary shafts 56 and 56 integrally being formed at the lower portion of the both-side edges by way of projecting themselves to the left and to the right. The door 55 is energized by a torsion spring (not shown) in the direction of closing the cartridge inserting port 54 (Refer to FIG. 12 and FIG. 15).

The door 55 is positioned at a spot being inner than the front mold piece 53 of the card-type casing 44. A bottom edge of the door 55 is disposed by way of downwardly approaching bottom mold piece 53a of the front mold piece 53. The above-referred rotary shafts 56 and 56 are respectively disposed at a position closer to rear portion among the bottom portion of the both-side edges of the door 55 being dosed. Because of this arrangement, when the door 55 shuts off the cartridge-inserting port 54, the door 55 is pressed against the inner surface of the front mold piece 53 by a torsion spring not being shown.

Then, the door 55 is pressed by the front edge portion of the cartridge body 11 inserted in the cartridge-inserting port 54 provided for the card-type casing 44 to subsequently rotate itself, thus causing the cartridge-inserting port 54 to be opened (Refer to FIG. 16).

A recess portion 55a slightly being recessed in the backward direction is formed at substantially the center portion of the front surface of the door 55 in the condition in which the door 55 remains being closed. It is so arranged that, when the cartridge inserting port 54 is opened via the rotation of the door 55, the upper recess portion 55a acts on the bottom center portion of the cartridge inserting port 54 to form downward recess in this portion. Because of this mechanism, in the course of loading the FD cartridge 4 into the disc drive apparatus 1, the center core 6 which projects itself downward via the center-core hole 9a of the FD cartridge 4 does not interfere with the door 55 that forms up the bottom side of the cartridge-inserting port 54, whereby enabling loading and unloading of the FD cartridge 4 to be performed very smoothly (Refer to FIG. 16).

Further, it is so arranged that the upper edge 55b of the door 55 (while shutting off the cartridge-inserting port 54) is formed with inclined surface which deflects downward in the backward direction. Because of this arrangement, it is possible to prevent the card-type casing 44 of the disc drive apparatus 1 from incurring vertical-directional crash while the FD cartridge 4 is not loaded therein (Refer to FIG. 17).

More particularly, when downwardly pressing such a portion corresponding to the cartridge-inserting port 54 on the part of the top-cover 52 of the disc drive apparatus 1 unloaded with the FD cartridge 4 from the top-side, although this corresponding portion is apt to bend itself downward, the top-cover 52 is also apt to depress the upper edge 55 of the door 55. However, since the upper edge 55b is formed with inclined surface, physical force for rotating the door 55 in the forward direction is exercised (refer to FIG. 18) to cause the door 55 to hit against inner surface of the front mold piece 53, whereby blocking the door 55 from rotating itself forward. In this way, the door 55 helps promote rigidity of the card-type casing 44 by functioning as part of the card-type casing 44.

In particular, when implementing the preferred embodiment, inasmuch as the bottom edge of the door 55 is disposed at such a position very close to the bottom piece 53a of the front mold piece 53, when the upper edge 55b of the door 55 is depressed from an upper point, bottom edge of the door 55 is brought into contact with the bottom piece 53a of the front mold piece 53, whereby further promoting rigidity of the card-type casing 44.

An indicator 58 for displaying the operating state of the disc drive apparatus 1 is disposed to the left of the front edge at a portion 53l corresponding to the sliding portion used for inserting the FD cartridge 4 into the PC-card slot 3. The display position corresponds to the left of the front-edge width-direction of the both-side sliding pieces 57l and 57r of the mechanical chassis mold 50 (Refer to FIG. 15).

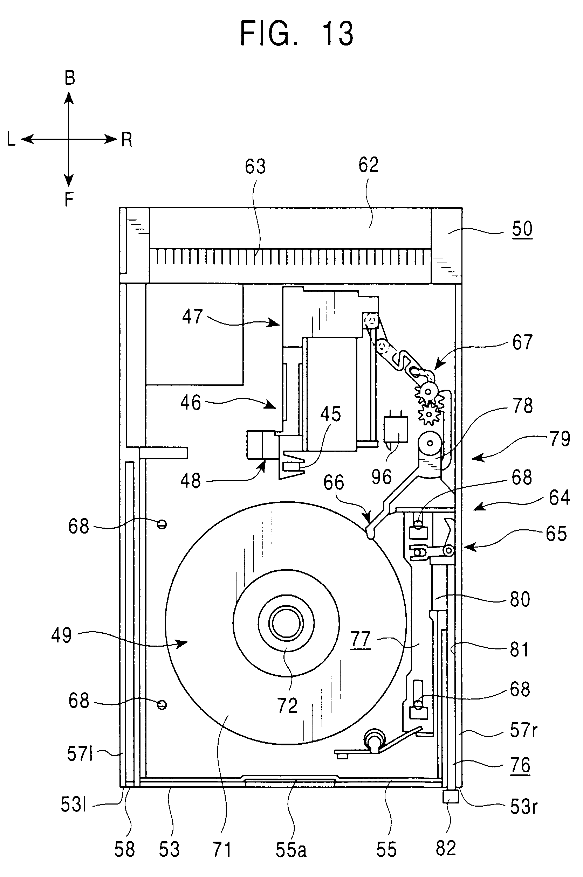

An eject lever is disposed to the right of the front edge portion corresponding to the light-edge portion 53r of the front mold piece 53 of the mechanical chassis mold 50, i.e., at the portion corresponding to the front edge portion of the right-side sliding piece 57r of the mechanical chassis mold 50. Concretely, the eject lever is disposed to the right-side sliding piece 57r of the mechanical chassis mold 50 by way of extending itself in the front-backward direction (Refer to FIG. 13).

In the disc drive apparatus 1 of the preferred embodiment, the left and right front edge portions 53l and 53r of the front mold piece 53 of the mechanical chassis mold 50 respectively correspond to dead space. By way of installing the above-referred indicator 58 and the eject lever in the dead space, space can effectively be utilized, and yet, scope of the FD cartridge 4 usable for the disc drive apparatus 1 can be expanded to eventually contribute to provide vast capacity for the FD cartridge 4.

Bottom surfaces of the both-side sliding pieces 57l and 57r of the mechanical chassis mold 50 are respectively formed at a position slightly higher than the bottom surface of the above-referred front mold piece 53. When the top cover 52 covers the upper surface of the mechanical chassis mold 50, front view of the card-type casing 44 discerns that vertical thickness of the both-side sliding pieces 57l and 57r is thinner than that of other portions, and yet, the both-side sliding pieces 57l and 57r respectively project themselves in the horizontal direction. This front view proves to be substantially equal to or slightly smaller than the front aperture form of the PC card slot 3 (Refer to FIG. 15).

Interval between the sliding piece 57l and the other sliding piece 57r on both sides of the mechanical chassis mold 50 is arranged to be narrower than the both-side width of the FD cartridge 4. The former half portions of the both-side sliding pieces 57l and 57r are respectively formed with lateral-side stepped portions 59 and 59 respectively facing upward and inward directions. It is so arranged that the interval between a lateral-side stepped lateral surface 59a and the other lateral-side stepped lateral surface 59a facing the interior of the lateral-side stepped portions 59 and 59 is slightly wider than the both-side width of the FD cartridge 4. Further, as will be described later on, the upward-facing surfaces of the lateral-side stepped portions 59 and 59 respectively make up slide-edge portions 59b and 59b for mounting both-side edges of the FD cartridge 4 in the course of inserting the FD cartridge 4 into the disc drive apparatus 1(Refer to FIG. 12, FIG. 13, FIG. 19 through FIG. 21).

Further, as will be described in detail later on, the disc drive apparatus 1 merely shifts the FD cartridge 4 backward. Following the loading of the FD cartridge 4, the disc drive apparatus 1 executes chucking of the flexible magnetic disc 7, in which loading and chucking of the FD cartridge 4 are sequentially executed by causing the FD cartridge 4 to slide itself over the above-referred sliding edges 59b and 59b. This is because the preferred embodiment aims at eliminating vertical movement of the FD cartridge 4 inside of the disc drive apparatus 1 so that this simplified mechanism can contribute to further thinning of the actual thickness of the disc drive apparatus 1.

A stopper unit 60 is integrally provided at a portion corresponding to approximately two third the whole length of the left-side mold piece 57l beginning with its front edge. The stopper 60 stops the FD cartridge 4 loaded into the disc drive apparatus 1 from further proceeding itself in the inserting direction (Refer to FIG. 12, FIG. 19 through FIG. 21).

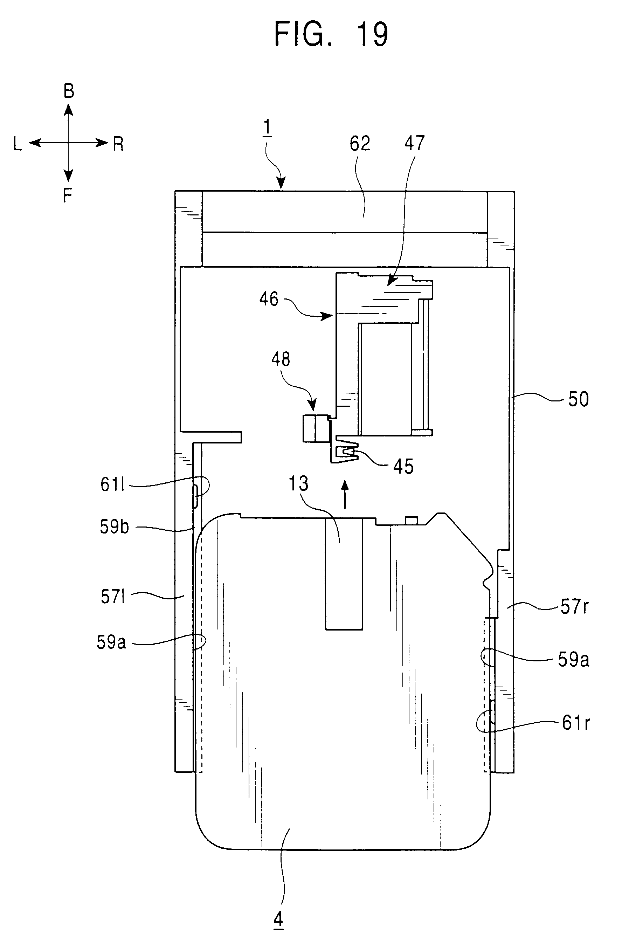

A left-right directional positioning projection 61l slightly projecting itself in the inner (rightward) direction is disposed at a position closer to the front edge than the stopper 60, wherein said position corresponds to the stepped lateral surface 59a of the above-referred lateral-side stepped portion 59 of the left-side mold piece 57l. Likewise, another left-right directional positioning projection 61r slightly projecting itself in the inner (leftward) direction is disposed at a position close to the front edge, wherein said position corresponds to the stepped lateral surface 59a of the above-referred lateral-side stepped portion 59 of the right-side mold piece 57r. As will be described later on, the left-right directional positioning projections 61l and 61r respectively execute left-right directional positioning in the course of loading the FD cartridge 4 into the disc drive apparatus 1 (Refer to FIG. 19 through FIG. 21).

A connection terminal unit 63 is built in the rear mold piece 62 of the mechanical chassis mold 50. When the disc drive apparatus 1 is inserted into the PC-card slot 3 of the lap-top type personal computer 2, the connection terminal unit 63 is electrically connected to a terminal (not shown) provided inside of the PC-card slot 3. Although not being illustrated, an electronic circuit board is disposed inside of the mechanical chassis mold 50. The electronic circuit board is connected to the connection terminal unit 63 (Refer to FIG. 12, FIG. 13, and FIG. 14).

As described above, the mechanical chassis base plate 51 is secured to the mechanical chassis mold 50 by way of shielding the bottom surface. The front portion of the mechanical chassis base plate 51 mounts the disc-rotation drive mechanism 49, whereas the rear portion mounts the head-supporting mechanism 46, the head-shifting mechanism 47, and the head-loading mechanism 48.

An eject mechanism 64 for ejecting the FD cartridge 4 is disposed to the right of the disc-rotation drive mechanism 46. A locking mechanism 65 for locking the FD cartridge 4 as of the loaded condition is disposed behind the eject mechanism 64. A shutter release mechanism 66 for releasing the shutter 13 is disposed behind the locking mechanism 65. A head escape mechanism 67 is disposed behind the shutter-release mechanism 66, where the head escape mechanism 67 causes the head-supporting mechanism 46 to retreat itself in the course of ejecting the FD cartridge 4 (Refer to FIG. 12, FIG. 13, and FIG. 14). Details of these mechanical structures will be described later on.

Four of height control pins 68 are respectively set to four positions by way of surrounding the disc-rotation drive mechanism 49 at positions close to the sliding pieces 57l and 57r on both sides of the mechanical chassis mold 50 of the above-referred mechanical chassis base plate 51. Projecting amount (i.e., height) of each of the height control pins 68 is arranged to be slightly higher than that of the above-referred sliding edges 59b. It is so arranged that, when the FD cartridge 4 is loaded, the FD cartridge 4 is mounted on the height control pins 68 so that height of the FD cartridge 4 can properly be adjusted (Refer to FIG. 12, FIG. 13, and FIG. 14).

It is so arranged that both-side portions 41 and 4r of the FD cartridge 4, in other words, those portions being thinner than the center portion 4c, are mounted on the height control pins 68. In the condition in which the FD cartridge 4 is mounted on four of the height control pins 68, bottom surface at the center portion 4c of the FD cartridge 4 is slightly lower than the upper surfaces of the height control pins 68 (Refer to FIG. 12, FIG. 13, and FIG. 14).

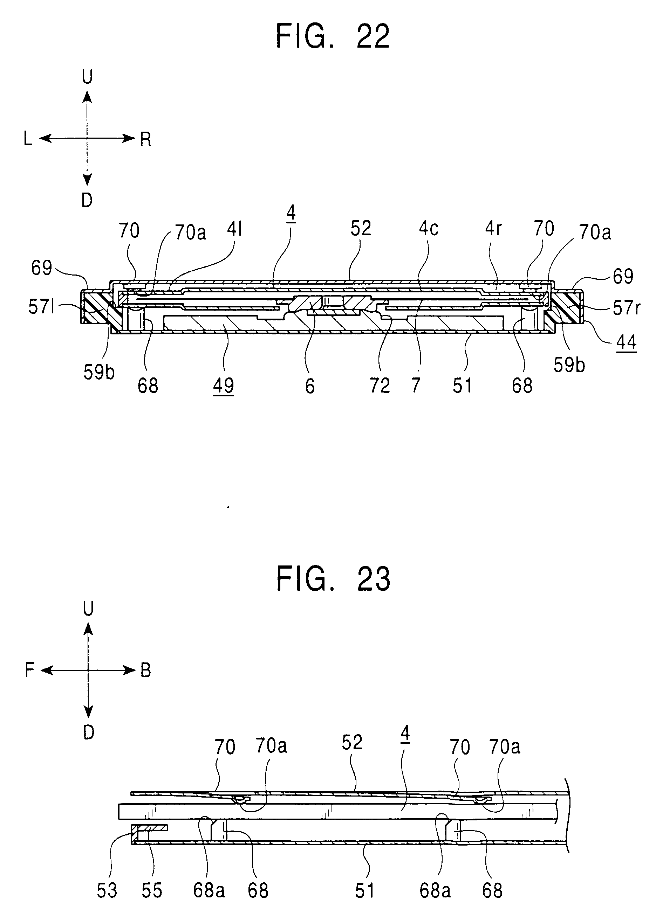

Each of the height control pins 68 is of cylindrical form. Front part of the upper surface of each height control pin 68 is formed with tapered surface 68a downwardly being tapered in the forward direction. Owing to tins arrangement, in the course of inserting the FD cartridge 4, the front-side bottom edge of the cartridge body 11 is inserted by way of mounting on the tapered surfaces 68a, and thus, the FD cartridge 4 can smoothly be inserted into the disc drive apparatus 1 without hitting against the height control pins 68 (Refer to FIG. 22 and FIG. 23).

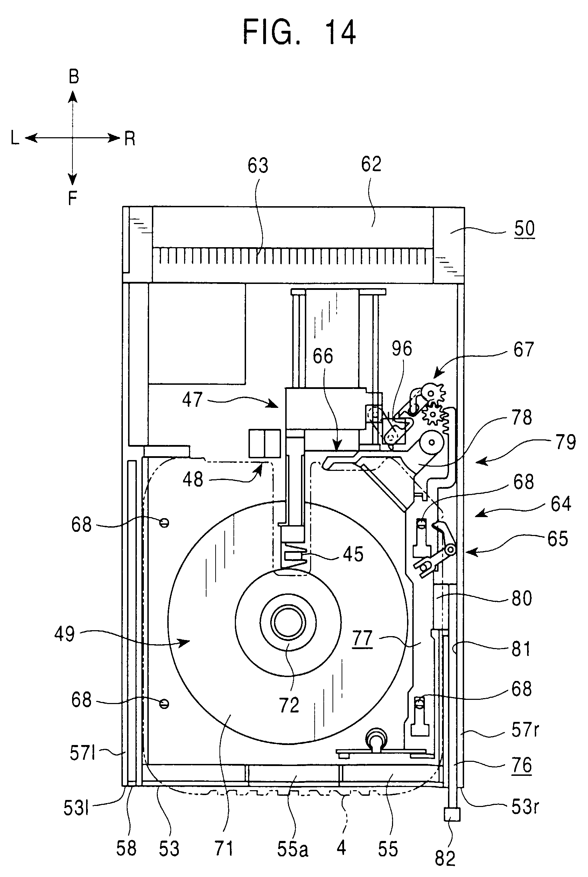

Among four of the height control pins 68, two of them being positioned to the right function themselves as guide pins for guiding a slide plate of the above-referred eject mechanism 64. The slide plate will be described later on (Refer to FIG. 13 and FIG. 14).

The top cover 52 is formed by bending thin plate material. The top cover 52 is open to the bottom, front, and the rear, which is formed with □-shaped as viewed from the front (Refer to FIG. 13 and FIG. 14).

More concretely, a pair of stepped portions 69 and 69 outwardly and upwardly facing themselves are formed on both sides of the top cover by way of downwardly displacing from other portion (top-cover portion 52t). Horizontal walls 69h and 69h of the stepped portions 69 and 69 are respectively mounted on both-side slide pieces 57l and 57r. Because of this mechanism, space for storing the FD cartridge 4 is formed via interval between the both-side stepped portions 69 and 69 and via interval between the left-side slide piece 571 and the right-side slide plate 57r of the mechanical chassis mold 50 (Refer to FIG. 12 and FIG. 15).

Rear edge portion of the top cover 52 makes up a concealing portion 52b for concealing the upper surface of the connection terminal 63 provided for the above-referred mechanical chassis mold 50. In order that height of the concealing portion 52b can be leveled off with the above-referred horizontal walls 69h and 69h, the concealing portion 52b is formed on a level slightly lower than other portions 52t of the top cover (Refer to FIG. 12).

Although not being illustrated, a pair of tongue-shaped engaging pieces respectively being bent in the inward direction are disposed at proper positions of lower edges of the both-side lateral walls 52l and 52r of the top cover 52. By way of embracing both-side slide pieces 57land 57r of the mechanical chassis mold 50, the tongue-shaped engaging pieces are secured to the mechanical chassis mold 50. Further, the tongue-shaped engaging pieces are secured to the both-side slide pieces 57l and 57r with screws via screw-inserting holes formed through proper locations of the horizontal walls 69h and 69h.

Four of □-shaped punched portions respectively being lengthy in the front-rear direction and open to the front are formed at four locations corresponding to the positions being close to both-side edges close to the front edge of the top-plate portion 52t of the top cover 52 and also corresponding to the positions close to both-side edges substantially being the center in the front-rear direction. By effect of forming these punched portions, four of the backward extending pressed plate springs 70 are formed by way of slightly being bent downward (Refer to FIG. 12, FIG. 22, and FIG. 23).

A number of small projections 70a are formed on the bottom surface at the tip portions of the pressed plate springs 70. These small projections 70a are respectively positioned above the height control pins 68, 68. Owing to this arrangement, when the FD cartridge 4 is inserted into the disc drive apparatus 1, these small projections 70a respectively come into contact with the both-side portions 4l and 4r from the top side to press the FD cartridge 4 against the height control pins 68, whereby enabling the FD cartridge 4 to be positioned in the vertical direction (Refer to FIG. 22 and FIG. 23).

As described above, inasmuch as the both-side lateral portions 4l and 4r of the FD cartridge 4 are thinned, a space for accommodating the pressed plate springs 70 can be secured, whereby contributing to thin the thickness of the disc drive apparatus 1. Note that, in the relevant drawings, in order to exaggerate dimension of space for storing the pressed plate springs 70, space between the FD cartridge 4 and the top cover 52 is broadly shown. However, by way of eliminating excessive space, further thinning of actual dimension of the disc drive apparatus 1 can be realized.

To realize thinning of the disc drive apparatus 1, effect of thinning may be sufficed by solely displacing both lateral portions of the upper surface of the cartridge body 11 of the FD cartridge 4 in the downward direction. It should be understood however that, as in the preferred embodiment, thinning is effected by providing steps on the part of bottom surface of the FD cartridge 4. As described earlier, this is because of an object of the preferred embodiments of the invention to realize stable rotation of the flexible magnetic disc 7 subject to rotation inside of the cartridge body 11 by way of positioning the flexible magnetic disc 7 at substantially the center between the upper plate 8 and the lower plate 9 without causing pressure generated between them to incur even the slightest difference.

(8) Disc-rotation drive mechanism

A disc-rotation drive mechanism 49 comprises a spindle motor 71 and a disc table 72 which is secured to a motor shaft of the spindle motor 71. The spindle motor 71 is fixed by way of being coupled with a motor-storing hole 73 which is formed in the former half portion of the above-referred mechanical chassis base plate 51. This in turn dispenses with such a need for mounting whole the thickness of the spindle motor 71 on the mechanical chassis base plate 51, and thus, thinning of the disc drive apparatus 1 can be realized via the effect. Although not being illustrated, the spindle motor 71 is fixed by way of coupling a fixing piece projecting itself from external circumferential edge of the spindle motor 71 to lateral side with the mechanical chassis base plate 51 with screw or by applying welding (Refer to FIG. 12, FIG. 13, and FIG. 14).

The disc table 72 has such a diameter substantially being equal to that of the center core 6 of the FD cartridge 4. The disc table 72 is formed with a tapered portion 72a with its external circumferential edge being tapered in the upward direction (Refer to FIG. 24 through FIG. 31). Note that, FIG. 24 through FIG. 28 sequentially designate chucking operation to be described later on. FIG. 24 and FIG. 28 through FIG. 31 sequentially designate chucking-release operation to be described later on.

A chucking projection 74 is formed in the center of the disc table 72, where the chucking projection 74 is coupled with a chucking recess 41 in the center core 6 of the FD cartridge 4. An external circumferential surface of the chucking projection 74 is formed with a tapered surface 74a upwardly being tapered. It is so arranged that projecting amount of the chucking projection 74 out from the disc table 72 is slightly less than the depth of the chucking recess 41 of the center core 6 (Refer to FIG. 24 through FIG. 31).

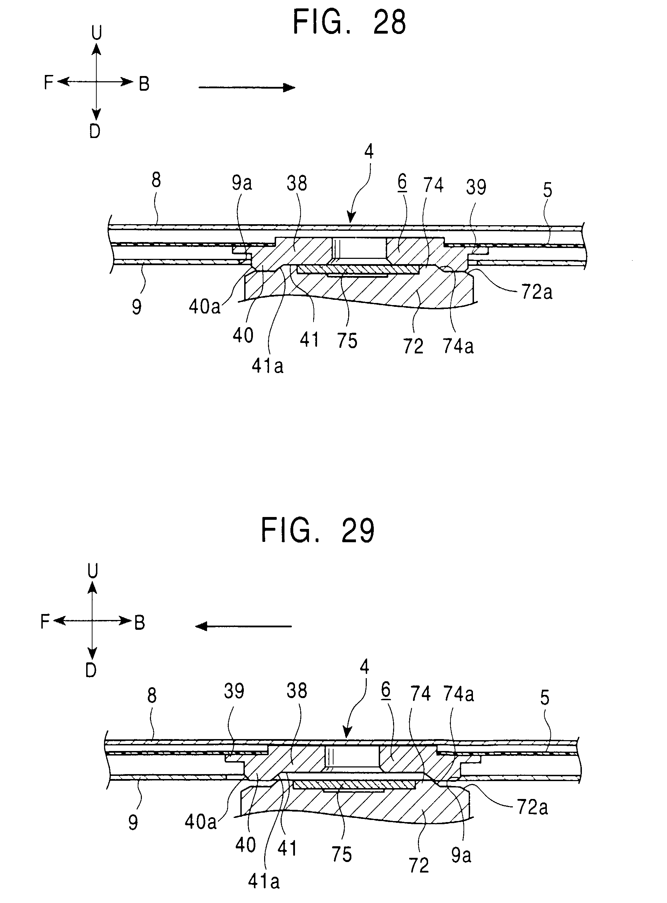

Based on the above arrangement, when the center core 6 of the flexible magnetic disc 7 is latched by the disc table 72, the center core 6 is mounted on the surface of the disc table 72, whereas the bottom surface of the center core 6 is superficially brought into contact with the upper surface of the disc table 72, whereby enabling the flexible magnetic disc 7 to properly maintain horizontal against the disc drive apparatus 1 (Refer to FIG. 28).

External circumferential edge of the disc table 72 is formed with the tapered portion 72a. As will be described later on, by providing the tapered portion 72a, it is so arranged that the center core 6 can assuredly ride on the disc table 72 in the course of inserting the FD cartridge 4 into the disc drive apparatus 1 (Refer to FIG. 24 and FIG. 25).

Height (i.e., actual height from the mechanical chassis base plate 51) of the chucking projection 74 provided for the disc table 72 is arranged to be slightly lower than the height of the above-referred height control pins 68. Based on this arrangement, in the course of inserting the FD cartridge 4 into the disc drive apparatus 1, the upper surface of the chucking projection 74 slightly leaves the bottom surfaces at the center portion 4c of the FD cartridge 4, whereby making it possible to maximize magnitude of the spindle motor 71 against height space inside of the card-type casing 44. This in turn contributes to generation of greater output of drive force for driving the disc drive apparatus 1 complete with thinning of actual thickness (Refer to FIG. 16 and FIG. 22). Although FIG. 16 and FIG. 22 respectively designate substantial space between the FD cartridge 4 and the top cover 52, by eliminating unwanted space, it is possible to realize further thinning of the disc drive apparatus 1.

A magnet 75 is built in the center portion of the chucking projection 74 of the disc table 72. It is so arranged that chucking is performed by causing the built-in magnet 75 to absorb the center core 6 of the flexible magnetic disc 7 loaded in the disc drive apparatus 1 (Refer to FIG. 28).

(9) Eject mechanism

An eject mechanism 64 comprises the following: an eject lever 76; a slide plate 77 which is slidably supported by the mechanical chassis mold 50 integrally being formed with the eject lever 76; a trigger arm 78 which presses the FD cartridge 4 disposed behind the slide plate 77 in the eject direction, in other words, in the forward direction and simultaneously releases the shutter 13 built in the FD cartridge 4; and a locking means 79 which acts on the trigger arm 78 to retain the loaded FD cartridge 4 in order that the FD cartridge 4 can not be pressed in the forward direction (Refer to FIG. 13, FIG. 14, FIG. 32, FIG. 34, and FIG. 36).

Front view discerns that the eject lever 76 has such a shape with horizontally laid character L having lengthy length in the front-rear direction. The eject lever 76 is connected to the above-referred slide plate 77 and to a connector 80 via the rear left edge. The eject lever 76 is slidably held by the right-side slide piece 57r of the mechanical chassis mold 50 by way of being coupled with slit 81 which is open to the upward direction and formed by way of extending itself in the front-rear direction (Refer to FIG. 12).

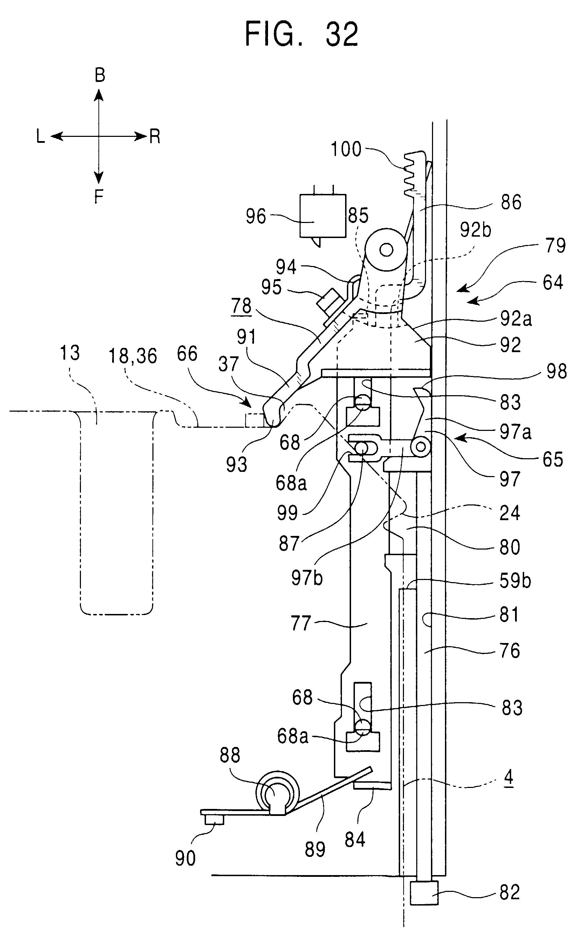

As described above, inasmuch as the eject lever 76 is disposed in dead space inside of the disc drive apparatus 1, the space can effectively be utilized, and yet, it is possible to prevent the FD cartridge 4 jumped out of the cartridge insert/eject port 54 via pressing of the eject lever 76 from colliding with user's finger operating the eject lever 76, whereby enabling a user to smoothly eject the FD cartridge 4 out from the disc drive apparatus 1 (Refer to FIG. 32, FIG. 34, FIG. 36, and FIG. 38).

An eject button 82 is set to the front edge of the eject lever 76 to enable a user to easily press the eject lever (Refer to FIG. 32, FIG. 34, FIG. 36, and FIG. 38).

Among four of the height control pins 68 vertically being erected on the mechanical chassis base plate 51, two of them being positioned to the right are brought into engagement with slide holes 83, 83 formed at both ends of slide plate 77 in the front-rear direction, whereby enabling the slide plate 77 to freely slide itself over the mechanical chassis base plate 51 in the front-rear direction (Refer to FIG. 32, FIG. 34, FIG. 36, and FIG. 38).

A spring shackle 84 being bent into ⊐-shape via lateral view is set to the front edge of the slide plate 77. In addition, an upwardly bent locking member 85 and an arm member 86 formed with L-shape via plan view and extending itself in the backward direction are integrally formed at the rear end of the slide plate 77. The arm member 86 makes up the above-referred head escape mechanism 67 to be described later on (Refer to FIG. 32, FIG. 34, FIG. 36, and FIG. 38).

An upwardly projecting coupling pin 87 is provided at a position slightly being ahead of the rear-side slide hole 83 of the slide plate 77 (Refer to FIG. 32, FIG. 34, FIG. 36, and FIG. 38).

Although not being shown, dowels are formed at proper positions on the bottom surface of the slide plate 77 to facilitate easier sliding of the slide plate 77 over the mechanical chassis base plate 51.

A spring support pin 88 is vertically set to the right of the front edge of the mechanical chassis base plate 51. A coil portion of torsion spring 89 is externally engaged with the spring support pin 88 to hold the torsion spring 89. Height of the torsion spring 89 is arranged to be slightly lower than that of the height-control pins 68 to prevent the torsion spring 89 from being interfered with the FD cartridge 4 when the FD cartridge 4 is inserted into the disc drive apparatus 1 (Refer to FIG. 32, FIG. 34, FIG. 36, and FIG. 38).

One of spring pieces of the above-referred torsion spring 89 held by the spring support pin 88 is engaged with the spring shackle 84 of the slide plate 77, whereas the other spring piece is engaged with a spring contact piece 90 which is vertically set to a position close to the front edge of the mechanical chassis base plate 51, whereby energizing the slide plate 77 to be shifted forward (Refer to FIG. 32, FIG. 34, FIG. 36, and FIG. 38).

A trigger arm 78 integrally consists of an aim member 91 whose an end is rotatably held by the right-side slide piece 57r of the mechanical chassis mold 50 and yet, having the rotary edge being formed into a small triangular projection via plan view and a triangular lock plate 92 being connected to one of bottom edges of the arm member 91. The triangular projection corresponding to the rotary edge of the arm member 91 makes up the shutter pressing projection 93 used for releasing the shutter 13 (Refer to FIG. 32 through FIG. 39).

The trigger arm 78 is energized by a torsion coil spring 94 held by a rotary shaft of the trigger arm 78 itself so that the trigger arm 78 can be rotated in the counterclockwise direction via plan view(Refer FIG. 32 through FIG. 39).

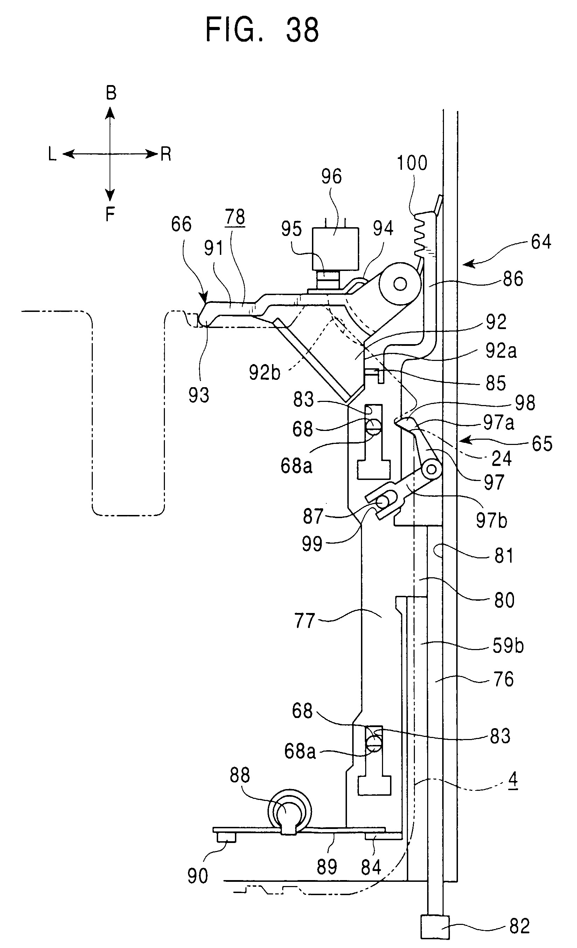

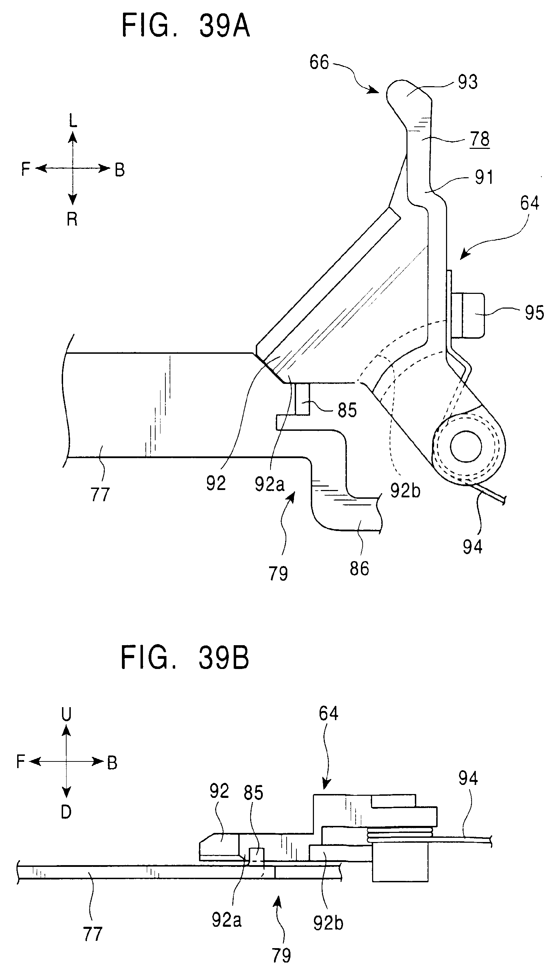

Simultaneous with insertion of the FD cartridge 4, the trigger arm 78 is pressed by the front edge of the FD cartridge 4. This in turn causes the trigger arm 78 to be rotated in the clockwise direction in resistance against resilient force of the torsion coil spring 94. As a result, the FD-cartridge-loaded condition is retained by the locking means 79. While the FD-cartridge-loaded condition is present, the arm member 91 remains being extended in the horizontal direction (Refer to FIG. 38). Note that the arm member 91 extends itself in the vertical direction in FIG. 39.

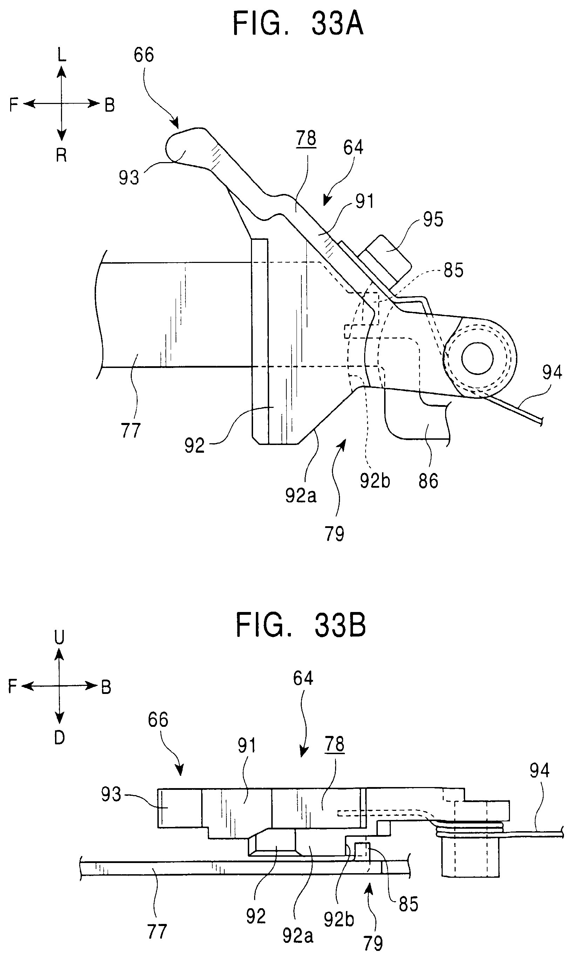

As will be described later on, simultaneous with unlocking of the locking means 79, the trigger arm 78 is rotated in the counterclockwise direction to cause the FD cartridge 4 to be thrust forward to enable the eject mechanism 64 to execute eject operation (Refer to FIG. 32 and FIG. 33).

The above-referred locking means 79 comprises a locking plate 92 and the locking member 85 of the above-referred slide plate 77 (Refer to FIG. 33, FIG. 35, FIG. 37, and FIG. 39).

More particularly, while the trigger arm 78 is pressed by the front edge of the loaded FD cartridge 4, the locking plate 92 itself functions as locking edge 92a having own right-bottom edge being engaged with the locking member 85 of the slide plate 77. Further, circular-arc stepped edge (this may be called "relieving edge" in the following description) 92b pivoting on the rotary axis is formed on the bottom surface at such a position close to the rotary axis of the locking plate 92 (Refer to FIG. 33, FIG. 35, FIG. 37, and FIG. 39).

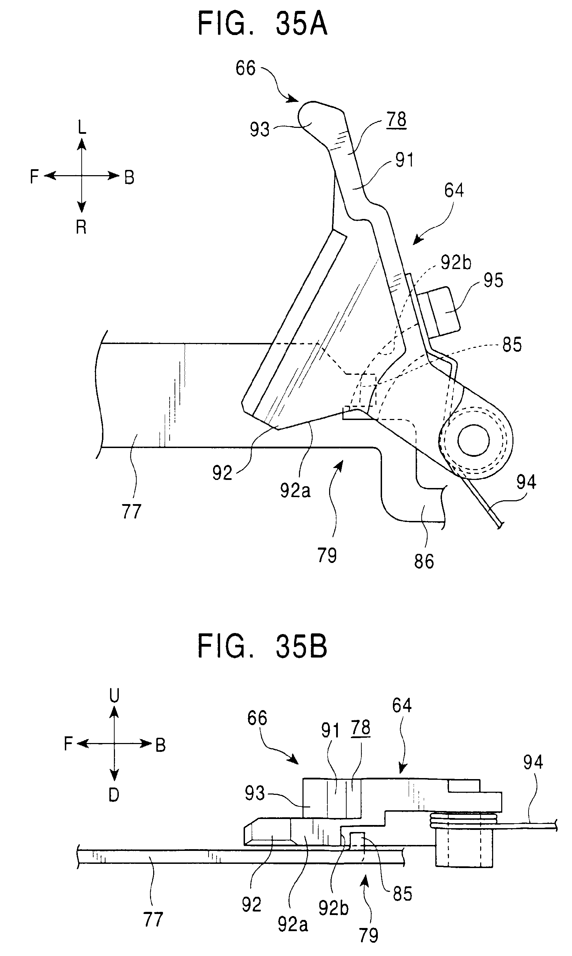

Thenceforth, by way of depressing the eject lever 76, the slide plate 77 is shifted backward to cause the locking member 85 to proceed itself up to the above-referred relieving edge 92b. When the locking member 85 enters inside of the relieving edge 92b, engagement (the state of locking) between the locking member 85 and the locking edge 92a is released to simultaneously cause the trigger arm 78 to rotate itself in the counterclockwise direction (Refer to FIG. 35).

When corner portion of the locking plate 92 being opposite from the arm member 91 is brought into contact with inner wall of the right-side sliding piece 57r of the mechanical chassis mold 50, the trigger arm 78 is prevented from rotating itself in the counterclockwise direction. While this condition (the above-described state is referred to as the "eject condition" in the following description) is present, the arm member 91 is positioned in the direction diagonally facing the front shown to the left (Refer to FIG. 32 and FIG. 33).

Operation for loading and ejecting the FD cartridge 4 will be described later on.

A switch pressing member 95 projecting itself in the direction opposite from that of the locking plate 92 is set to a bottom edge being opposite from the side along which the locking plate 92 associated with the arm member 91 of the trigger arm 78 is provided. The switch pressing member 95 turns loading-detect switch 96 ON for detecting the condition complete with loading of the FD cartridge 4 (Refer to FIG. 13, FIG. 14, FIG. 32, FIG. 34, FIG. 36, and FIG. 38).

The loading-detect switch 96 is so-called push-switch which is secured to the mechanical chassis base plate 51 at a certain position to cause the loading-detect switch 96 to be activated by the above-referred switch pressing member 95 to turn ON as soon as the trigger arm 78 enters the loaded condition.

By way of detecting the condition complete with loading of the FD cartridge 4 at the position of the trigger arm 78 capable of locking the mechanism at the time of loading the FD cartridge 4, resilient force from switching portion of the loading-detect switch 96 can be prevented from directly affecting the FD cartridge 4, and yet, such a mechanism otherwise needed for protecting the loaded FD cartridge 4 by way of resisting resilient force of the detect switch can be saved, thus contributing to realize simplified mechanical structure and minimized component requirements (Refer to FIG. 32 and FIG. 33).

In order to prevent resilient force of the loading-detect switch 96 from directly affecting the FD cartridge 4, available member is not solely limited to the above-referred trigger arm 78, but any member capable of firmly locking the FD-cartridge-loaded condition may also be utilized.

As described above, inasmuch as the loading-detect switch 96 is disposed in the direction of inserting the FD cartridge 4 for detecting actual loading of the FD cartridge 4, the disc drive apparatus 1 can be saved from provision of substantial thickness in the height direction, whereby contributing to the thinning of the disc drive apparatus 1 itself, and yet, the above arrangement also contributes to contraction of dimension in terms of width between both ends.

Further, inasmuch as a push-type switch is utilized to serve as the loading-detect switch 96 to detect loaded FD cartridge 4, actual cost can be saved compared to the case of utilizing an optical sensor for example.

(10) Locking mechanism

The locking mechanism 65 comprises a locking lever 97 having L-shaped plan view and an engaging pin 87 erected on the slide plate 77 for activating operation of the locking lever 97. A locking claw 97 engaging with the stopper recess 24 of the FD cartridge 4 is set to tip portion of an arm member 97a of the locking lever 97, whereas a slit 98 being open to the tip is formed at the tip of the other arm member 97b (Refer to FIG. 13, FIG. 14, FIG. 32, FIG. 34, FIG. 36, and FIG. 38).

The locking lever 97 is rotatably supported at such a position slightly behind the eject lever 76 disposed on the slide edge 59b of the right-side slide member 57r. The above-referred arm member 97b is disposed by way of extending itself substantially to the left, whereas the other arm member 97a is disposed by way of extending itself substantially in the backward direction. A slit 98 formed in the other arm member 97b is engaged with the engaging pin 87 (Refer to FIG. 32, FIG. 34, FIG. 36, and FIG. 38).

The engaging pin 87 is disposed at a position slightly being close to the front from the sliding hole 83 behind the slide plate 77. When the slide plate 77 remains at the rearmost position within own shifting range (this corresponds to the condition in which the FD cartridge 4 is ejected), an arm member 97b of the locking lever 97 faces to the left, whereas the other arm member 97a facing backward remains in contact with the right-side sliding member 57r (Refer to FIG. 32).

Thenceforth, the locking claw 97 enters such a condition being mounted on the sliding edge portion 59b (Refer to FIG. 32).

Then, as will be described later on, when the FD cartridge 4 is inserted into the disc drive apparatus 1, the trigger arm 78 is rotated in the clockwise direction to cause the locking member 85 of the slide plate 77 to be apart from the locking plate 92 via the relieving edge 92b. This in turn causes the slide plate 77 to be released from the restraint to move forward, whereby enabling the slide plate 77 to move itself forward. As a result, the engaging pin 87 is also shifted forward to cause the locking lever 97 to be rotated counterclockwise, thus causing the locking claw 97 to shift itself to the left (Refer to FIG. 32, FIG. 34, FIG. 36, and FIG. 38).

When the above condition is entered, since the FD cartridge 4 arrives at the loading-completed position, the locking claw 97 is brought into engagement with the stopper recess 24 of the FD cartridge 4 to subsequently restrain the front-rear directional movement of the FD cartridge 4, thus eventually enabling the locking mechanism 65 to execute own function (Refer to FIG. 38).

(11) Shutter release mechanism

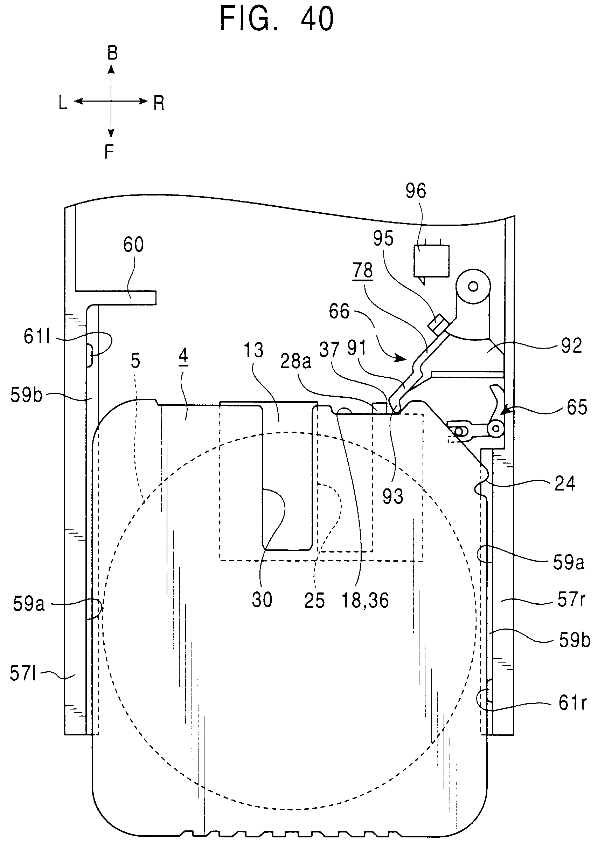

A shutter release mechanism 66 comprises the above-referred trigger arm 78 and the above-referred shutter pressing projection 93 formed at the tip of an arm member 91 of the trigger arm 78 (Refer to FIG. 40 through FIG. 42).

As described above, the trigger arm 78 is rotatably set to the mechanical chassis base plate 51. The shutter-pressing projection 93 formed at the tip of the arm member 91 releases the shutter 13 via the operation for loading the FD cartridge 4 (Refer to FIG. 40 through FIG. 42).

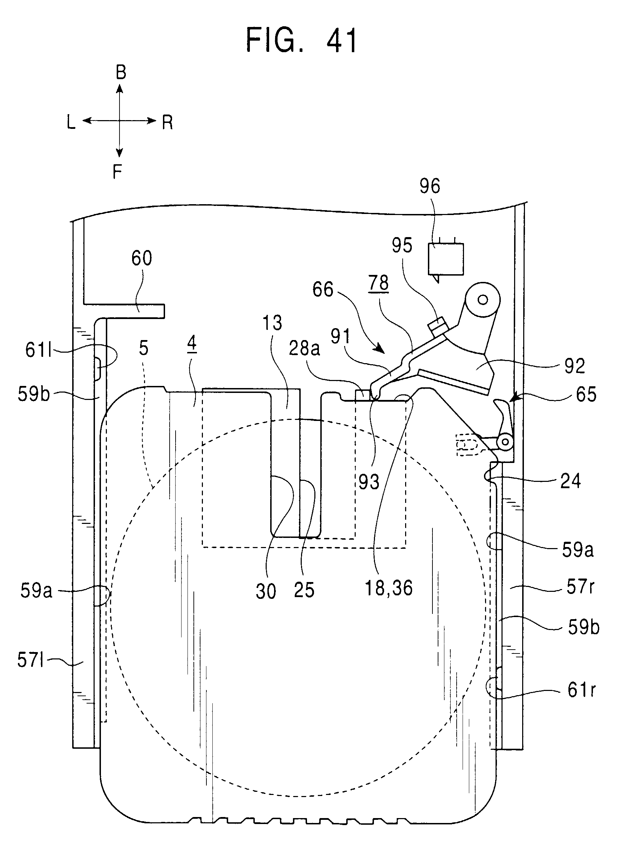

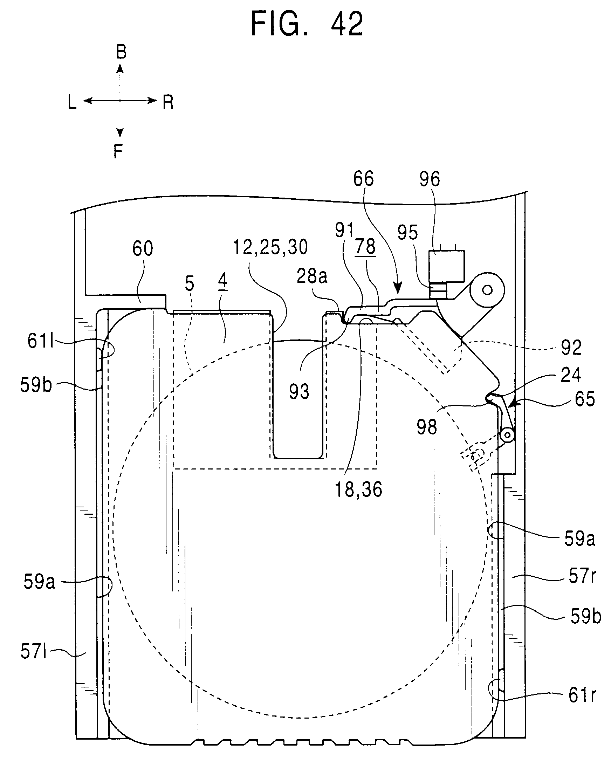

More particularly when the shutter 13 is operated so as to insert the closed FD cartridge 4 into the disc drive apparatus 1 (refer to FIG. 40), the shutter-pressing projection 93 is relatively inserted into the guide recess 37 of the FD cartridge 4. As the FD cartridge 4 is further inserted, the trigger arm 78 is rotated clockwise to cause the shutter 13 to shift the FD cartridge 4 to the right by way of resisting resilient force of the shutter spring 27 while allowing the shutter-pressing projection 93 to move through the inserting slits 18, 36 (refer to FIG. 41), thus eventually causing the shutter 13 to be released (refer to FIG. 42).

While the above process goes on, the trigger arm 78 is affected by reactive force so as to thrust the FD cartridge 4 forward via resilient force of the torsion coil spring 94. However, a user is supposed to insert the FD cartridge 4 into the disc drive apparatus 1 in resistance against the reactive force.

Then, as described above, when the FD cartridge 4 is fully inserted into the disc drive apparatus 1 (i.e., complete with loading of the cartridge 4 as shown in FIG. 42), as soon as the arm member 91 of the trigger arm 78 just arrives at a position extending in the horizontal direction, because of the action of the locking means 79, locking force is applied to the trigger arm 78 to cause the shutter 13 of the FD cartridge 4 to be open to full extent, thus causing the flexible magnetic disc 7 to be exposed via the shutter hole 25. While this condition (i.e., cartridge-loaded condition) is present, the shutter-pressing projection 93 at the tip of the arm member 91 of the trigger arm 78 keeps on pressing the pressure-receiving edge 28a of the shutter 13. As a result, since the trigger arm 78 is locked by the locking means 79, the shutter 13 remains being released (Refer to FIG. 38, FIG. 39, and FIG. 42).

(12) Head escape mechanism

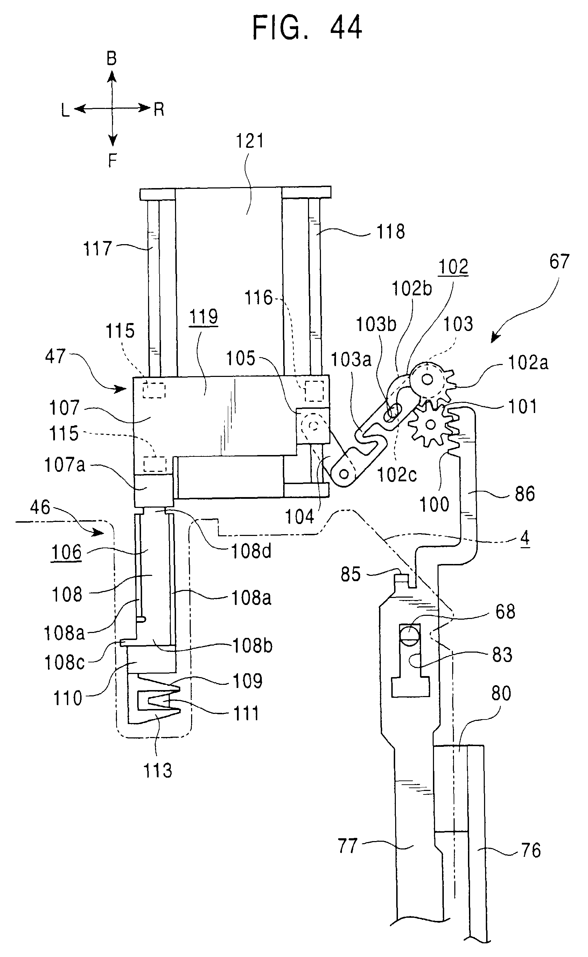

Relative to the operation for ejecting the FD cartridge 4, the head escape mechanism 67 causes the magnetic heads 45 and 45 to retreat themselves. The head escape mechanism 67 comprises the following: an arm member 86 which is integrally formed with the slide plate 77 by way of extending itself backward at he rear end of the slide plate 77; a rack 100 formed along rear side-edge of the arm member 86; a pinion 101 engaged with the rack 100; an arm-combined gear 102 having a gear 102 engaged with the pinion 101; a first arm 103 which is rotatably installed via coaxial alignment with the arm-combined gear 102; a second arm 104 which is rotatably set to the tip of the first arm 103; and a slider 105 which is slidably set to an auxiliary guide shaft of the head shifting mechanism 47 and connected to the second arm 104 (Refer to FIG. 44 through FIG. 46).

Most part of the arm member 86 is mounted on the sliding edge portion 59b of the right-side sliding member 57r. Front edge portion of the arm member 86 is bent downward and in the horizontal direction. The arm member 86 has crank form via the front view and is integrally connected to the slide plate 77. Further, the rack 100 is integrally formed at the rear edge portion along left edge of the arm member 86 (Refer to FIG. 44 through FIG. 46).

The pinion 101 is positioned to the left of the rack 100, where the pinion 101 is rotatably set to a supporting shaft erected on the mechanical chassis base plate 51 and held in engagement with the rack 100 (Refer to FIG. 44 through FIG. 46).

The arm-combined gear 102 is positioned behind the pinion 101 and rotatably set to a supporting shaft erected on the mechanical chassis base plate 51. A gear component 102a is engaged with the pinion 101. Teeth of the gear 102a are formed with substantially 120 degrees of center angle. Although the teeth are not provided across the entire circumference, the teeth may be formed all over the gear circumference (Refer to FIG. 44 through FIG. 46).

The arm portion 102b of the arm-combined gear 102 is of L-shape via the plan view. The gear 102a is integrally set to an end of the arm-combined gear 102, whereas the other end of the arm-combined gear 102 is integrally fitted with a pin 102c projecting itself downward (Refer to FIG. 44 through FIG. 46).

An end of the first arm 103 is coaxially aligned with the gear 102a of the arm-combined gear 102, where the first arm 103 is rotatably set to the supporting shaft of the gear 102a and set below the arm-combined gear 102 (Refer to FIG. 44 through FIG. 46).

An S-shaped spring 103a is set to a position close to the end portion of the rotation of the first arm 103. Further, a lengthy hole 103b extending itself in the longitudinal direction is formed at a position slightly being close to the rotary shaft of the S-shaped spring 103a. The pin 102c of the arm-combined gear 102 is engaged with the lengthy hole 103b from the top side (Refer to FIG. 44 through FIG. 46).

The second arm 104 is rotatably set to the rotary end of the first arm 103 to enable the second arm 104 to be rotated in the horizontal direction, whereas the other end of the second arm 104 is rotatably connected to a slider 105 which is slidably held to an auxiliary guide shaft to be described later on (Refer to FIG. 44 through FIG. 46).

The above-referred arms 104, 105, and the arm-combined gear unit 102 provided for the head escape mechanism 67 are respectively disposed via such an arrangement to be as closer to the mechanical chassis base plate 51 as possible. The slider 105 is rotatably linked with the second arm 104 disposed below the slider 105 as shown in FIG. 44 for example. Based on this arrangement, spatial allowance for accommodating a printed wiring board (not shown) can be secured above the head escape mechanism 67.

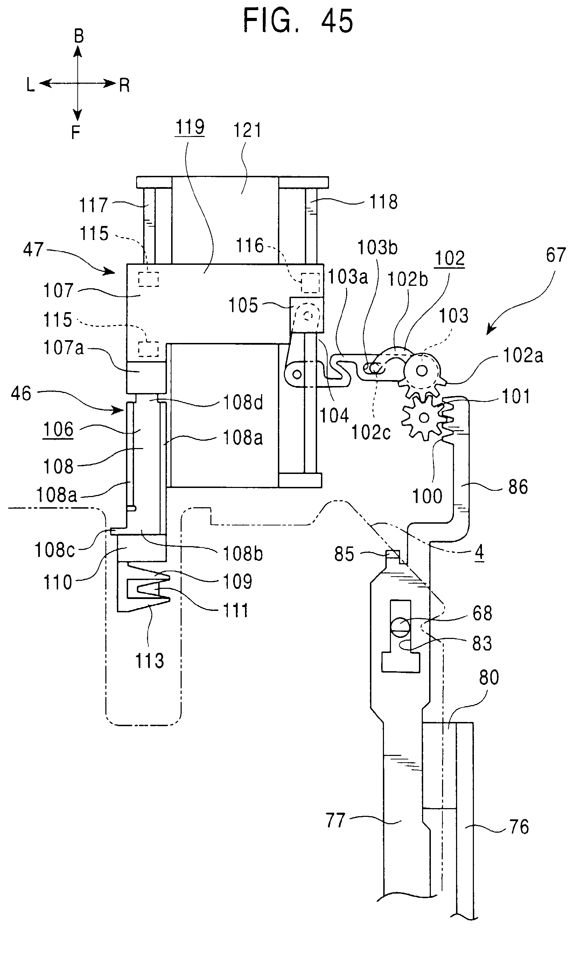

When the FD cartridge 4 is loaded as shown in FIG. 44, if the eject lever 76 is operated, the slide plate 77 is shifted backward to cause the rack 100 to be shifted backward, whereby causing the pinion 101 to be rotated in the counterclockwise direction via the plan view (Refer to FIG. 45).

Counterclockwise rotation of the pinion 101 causes the above-referred arm-combined gear 102 to be rotated in the clockwise direction, and thus, when the arm-combined gear 102 rotates clockwise, the first arm is also rotated in the clockwise direction whereby causing the slider 105 to be shifted backward via the second arm 104 (Refer to FIG. 45).

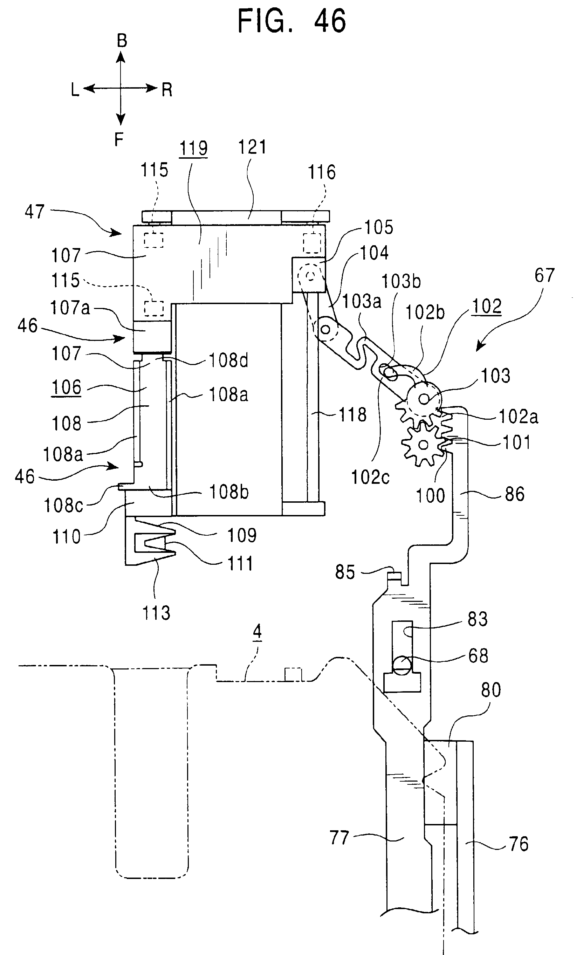

Relative to the backward movement of the slider 105, irrespective of the actual position of carriage to be described later on, the FD carriage 4 is compulsorily shifted backward, whereby causing a pair of magnetic heads 45 and 45 being subject to movement in the front-rear direction by the FD carriage 4 to respectively be shifted to the rearmost position within their movable range to activate function of the head escape mechanism 67 (Refer to FIG. 46).

Subsequent to execution of the above processes, eject operation is executed. Whenever the eject operation is executed, the head escape mechanism 67 always activates own operation. This in turn prevents the magnetic heads 45 and 45 from colliding themselves with the FD cartridge 4 while the magnetic heads 45 and 45 respectively remain in front of the FD cartridge 4 before loading the FD cartridge 4 into the disc drive apparatus 1.

Even when the FD carriage 4 is shifted to the rearmost position within own movable range, the carriage is arranged to be shifted furthermore by the slider 105. When this process is activated, the above-referred S-shaped spring 103a of the first arm 103 is deformed to generate resilient force to cause the carriage to be thrust to the rear end. In other words, after being brought backward by the head escape mechanism 67, the carriage is free from falling into unstable condition (Refer to FIG. 46).

Means for generating force to thrust the carriage to the rear end via the slider 105 is not solely limited to the deformation of the S-shaped spring 103a of the first arm 103 as described above, but, although not being shown it is also possible to generate thrusting force by applying the arm member 102b of the arm-combined gear 102 by way of functioning it as the S-shaped spring 103a.

(13) Head supporting mechanism

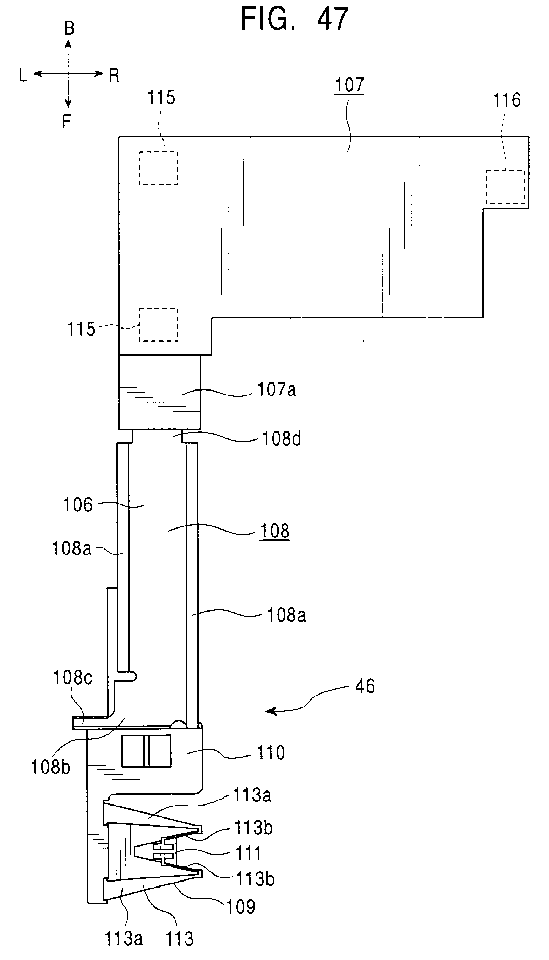

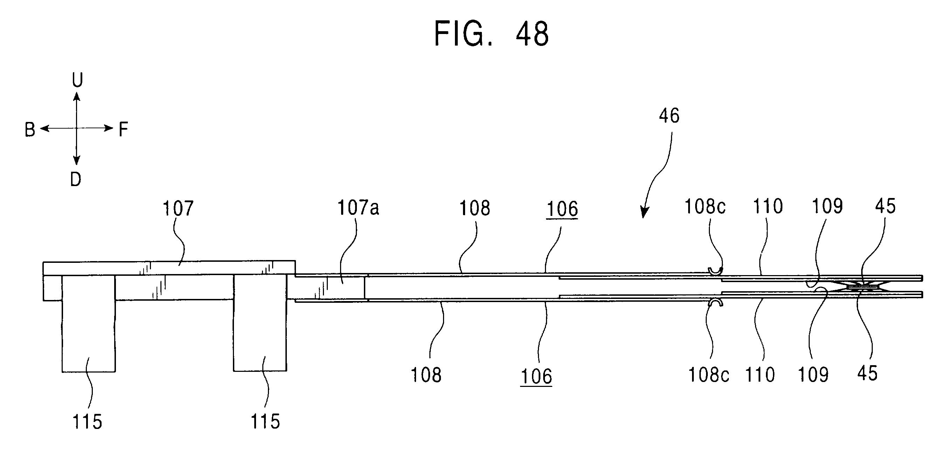

The head supporting mechanism 46 comprises the following: a pair of head arms 106 and 106 for supporting a pair of upper and lower magnetic heads 45 and 45, and a carriage 107 which supports the rear ends of the head arms 106 and 196 and is subject to shifting movement in the front-rear direction via the head shifting mechanism 47 (Refer to FIG. 47 and FIG. 48). In the head supporting mechanism 46, the pair of magnetic heads 45 and 45 and the other pair of head arms 106 and 106 are disposed via the upper and lower arrangement based on the substantially identical composition. It is so arranged that the flexible magnetic disc 7 is sandwiched by the upper magnetic head 45 and the lower magnetic head 45.

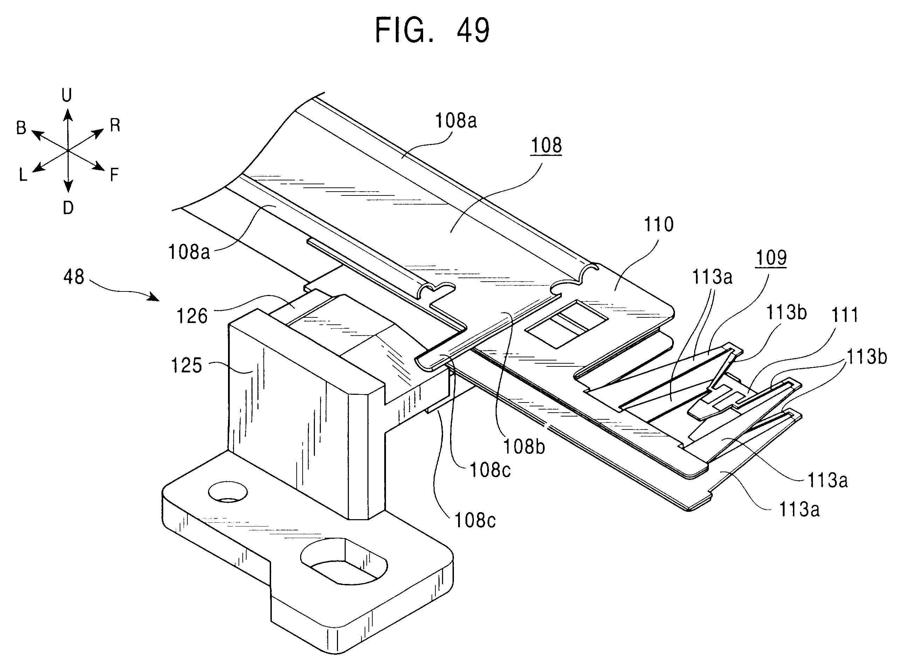

The upper and lower head arms 106 and 106 are composed of highly rigid plate material, which respectively comprise head base plates 108 and 108 being lengthy in the front-rear direction and head suspension members 109 and 109 respectively being composed of relatively thin metallic material. Rear-ends of the head base plates 108 and 108 are respectively secured to a left-front lateral portion 107a. The head suspension members 109 and 109 are integrally bonded to the tip portions of the head base plates 108 and 108 via head adapters 110 and 110 by applying laser-welding or adhesion method (Refer to FIG. 49). Note that the head adapters 110 and 110 are not always essential.

Description of the head supporting mechanism 46 solely refers to the magnetic head 45 and the head arm 106 aligned on the upper side, and thus, unless specifically being required, description for the lower-side counterparts is deleted.

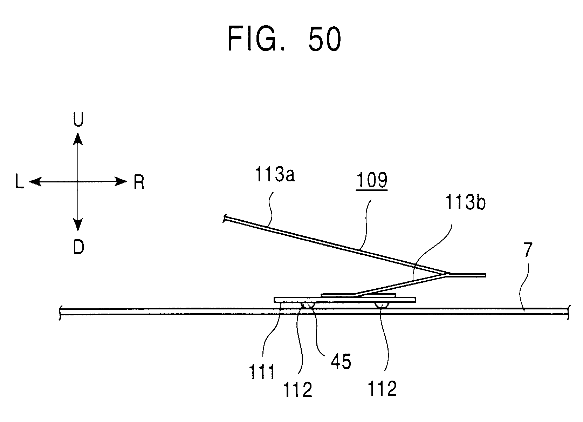

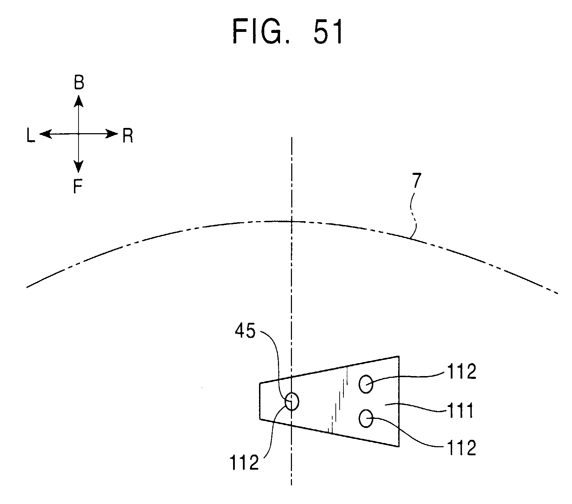

Among three of contact pads 112 set to the bottom surface of a head slider 111 with trapezoidal plane shape, the magnetic head 45 is secured to the specific contact pad 112. The head slider 111 is set to the tip of the above-referred head suspension member 109 (Refer to FIG. 50 and FIG. 51).

More particularly, a pair of contact pads 112 are secured to upstream-side against the direction of the rotation of the flexible magnetic disc 7 being opposite from the head slider 111, whereas the other contact pad 112 is secured to the downstream side. The magnetic head 45 is secured to the downstream-side contact pad 112. In the preferred embodiment of the invention, the contact pad 112 secured with the magnetic head 45 is arranged to the downstream side against the direction of the rotation of the flexible magnetic disc 7. However, not only the downstream side, but the contact pad 112 carrying the magnetic head 45 may also be disposed on the upstream side as well.

The contact pads 112 are respectively composed of "Diamond-Like-Carbon" DLC which is capable of preventing the magnetic head 45 from being worn off (Refer to FIG. 50 and FIG.51). However, material for composing the contact pad 112 is not solely limited to the DLC.

The head suspension member 109 is composed of a pair of metallic pieces comprising a pair of substantially V-shaped suspension members 113 and 113 respectively being open to the left and base-end members 114 and 114 respectively being supported by the head base plate 10 via the above-referred head adapters 110 and 110, where the base-end members 114 extend themselves backward from the left edges of metallic pieces 113a and 113a of one of the suspension members 113 (Refer to FIG. 47 through FIG. 50 and FIG. 53).

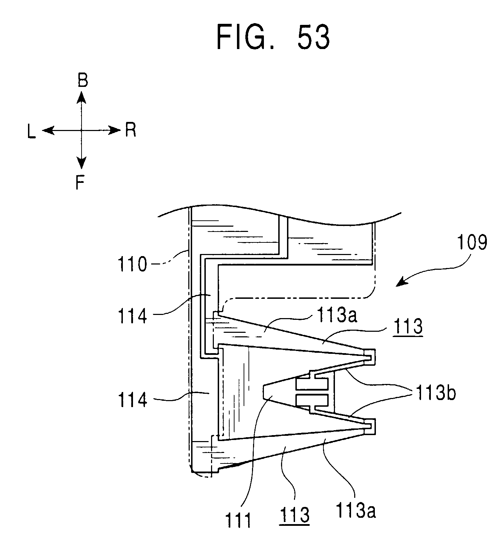

The metallic pieces 113a being connected to the base-end member 114 of the suspension member 113 are arranged to be longer than the other pieces 113. The other shorter pieces 113b and 113b are respectively disposed by way of adjoining with each other. The head slider 111 is secured between tip portions of the short pieces 113b and 113b (Refer to FIG. 53). The metallic pieces 113a and 113b of the suspension members 113 are respectively fabricated by way of bending integrated parts formed via etching process.

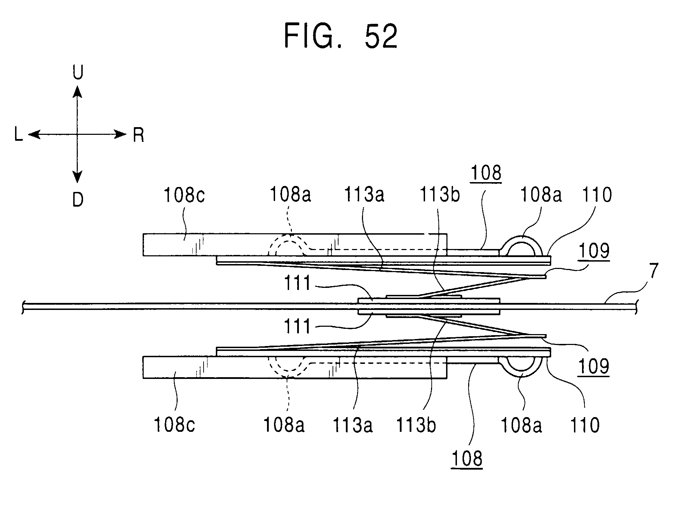

These suspension members 113 and 113 are slightly bent downward at the portions connected to the base-end members 114 and 114 and at acute-angle portions. The suspension member unit looks like vertically crashed < -shape via front view. Because of this form, in addition to own elasticity of material, the suspension members 113 and 113 are provided with resilient force, whereby enabling the magnetic head 45 to elastically press against the flexible magnetic disc 7 with proper resilient force (Refer to FIG. 52).

Tip portions of the short pieces 113b and 113b of the suspension members 113 and 113 jointly forming the head suspension member 109 are individually connected to the corresponding magnetic head 45 to function as wireless signal line.

A pair of projected plate-supporters 108a and 108a are disposed on both sides of the head base plate 108 by way of extending themselves in the longitudinal direction and projecting themselves upward.. Further, a recessed plate-supporter 108b is disposed at the tip portion of the head base plate 108 by way of extending itself in the width direction and projecting downward. Further, a tip portion of the recessed plate-supporter 108b extends to the left at which a overhung arm 108c is integrally formed. The overhung arm 108c makes up part of essential members for composing the above-referred head loading mechanism 48 (Refer to FIG. 47 and FIG. 49).

Note that the above-referred projected plate-supporters 108a and 108a disposed on both sides of the head base plate 108 jointly strengthen rigidity of the head base plate 108 in the longitudinal direction, in other words, in the front-rear direction. Relative to the shift of the carriage 107 in the front-rear direction, the above-referred overhung arm 108c disposed at the left-front portion acts on a lifter to cause the height-directional position of the magnetic head 45 disposed at the tip of the head arm 106 to be displaced to subsequently enable the magnetic head 45 to perform head-landing and take-off operations (Refer to FIG. 47 and FIG. 49).

Further, both-side edges at the base end portion of the head base plate 108 are notched off to form a neck portion 108d. The neck portion 108d prevents the head base plate 108 from being twisted when the above-referred overhung arm 108c is lifted by the lifter (Refer to FIG. 47).

More particularly when the overhung arm 108c is lifted by the lifter, the head base plate 108 has such a posture in which a left-side edge is apt to be lifted higher than the right-side edge. However, since the neck portion 108d formed at the base of the head base plate 108 is mainly subject to flection, as a whole, the head arm 106 is rarely subject to twist in the horizontal direction, and thus, both-side edges are evenly lifted, thus rarely affecting proper posture of the magnetic head 45 disposed at the tip portion.

It is also possible to prevent the head arm 106 from being twisted by way of providing the above-referred overhung arm 108c and the lifters on both sides. Nevertheless, when materializing this method, since the overhung arm s 108c are supposed to proceed into the shutter hole 25 of the FD cartridge 4, width dimension of the shutter hole 25 needs to be expanded to result in the higher probability of dust infiltration into the FD cartridge 4, thus raising problem. Unlike the above method, since the preferred embodiment of the invention provides a single unit of the overhung arm 108c solely on one side, width dimension between both sides of the shutter hole 25 of the FD cartridge 4 can be minimized, whereby making it possible to realize such an FD cartridge 4 with minimum infiltration of dust.

The carriage 107 is composed of rigid material such as synthetic resin or light-metal material such as aluminum or magnesium or the like. The carriage 107 is substantially rectangular via plan view. Three of guide bearings are set to the bottom surface of the carriage 107, where two of the guide bearings 115 and 115 are secured to the front and rear end portions on the left side. The other guide bearing 116 is secured to the right-side rear end portion. More particularly two of the guide bearings 115 and 115 disposed on the left side respectively consist of metal-bearing slidably being held by a main guide bearing to be described later on. The other guide bearing 116 shown to the right is composed of synthetic resin material and provided with an U-shaped slit open to the right, which is slidably held by an auxiliary guide shaft to be described later on (Refer to FIG. 47, FIG. 54, FIG. 55, and FIG. 56). Composition of the guide bearings 115 and 115 may not always be of metal bearing, but they may also be made from synthetic resin material.

Base-end member of the above-referred head arms 106 and 106 is positioned by way of sandwiching the fixing metal piece 107a from the upper and lower sides, where the fixing metal piece 107a projects itself in the forward direction from the position at which a pair of guide bearings 115 on the left front side are secured. The base-end member is secured by applying any proper means such as adhesion or screw for example (Refer to FIG. 48).

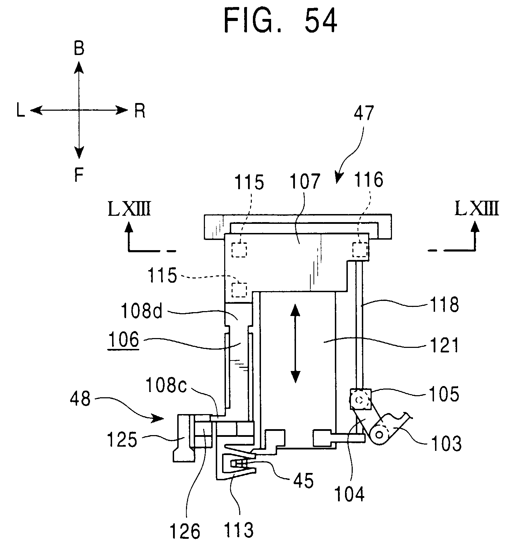

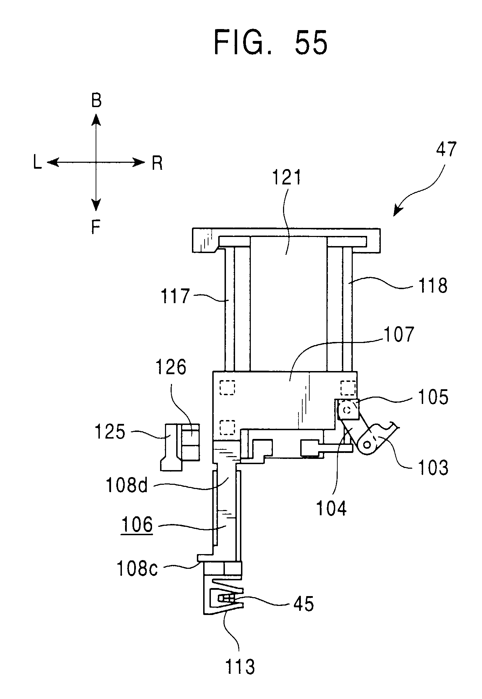

It is so arranged that movable portion in the above-referred head-shifting mechanism 47, in other words, center of gravity of all the members for making up the above-referred head-supporting mechanism 46 including the magnetic heads 45 is positioned within triangle linking the carriage 107 with three guide bearings 115, 115, and 116. Owing to this arrangement, when the carriage 107 is shifted in the front-rear direction, the carriage 107 is free from being deflected in the left-right direction, whereby enabling the head-supporting mechanism 46 to smoothly shift itself, thus making it possible for the magnetic heads 45 and 45 to perform precise scanning operation (Refer to FIG. 54 and FIG. 55).

(14) Head shifting mechanism

The head shifting mechanism 47 is disposed behind the above-referred disc rotation drive mechanism 49 installed on the mechanical chassis base plate 51. The head shifting mechanism 47 comprises the following: the above-referred carriage 107 being held by way of freely shifting itself in the front-rear direction; a main guide shaft 117 and an auxiliary guide shaft 118 respectively holding the carriage 107 by enabling to freely shifting itself in the front-rear direction; and a linear motor assembly 119 which causes the magnetic heads 45 and 45 held by the head-supporting mechanism 46 via the carriage 107 to be shifted linearly in the diametric direction of the flexible magnetic disc 7 (Refer to FIG. 13, FIG. 14, FIG. 54, and FIG. 55).

The above-referred main guide shaft 117 is disposed at substantially the center in the left-right direction of the mechanical chassis base plate 51 by way of extending itself in the front-rear direction. The auxiliary guide shaft 118 is disposed to the right of and in parallel with the main guide shaft 117. The above-referred fixing member 107a of the carriage 107 secured to the main and auxiliary guide shafts 117 and 118 via free shifting movement is disposed substantially above the main guide shaft 117. Because of this arrangement, it is possible for the magnetic heads 45 and 45 of the above-referred head supporting mechanism 46 held by the fixing member 107a to be shifted in the diametric direction of the flexible magnetic disc 7 (Refer to FIG. 13, FIG. 14, FIG. 54, and FIG. 55).

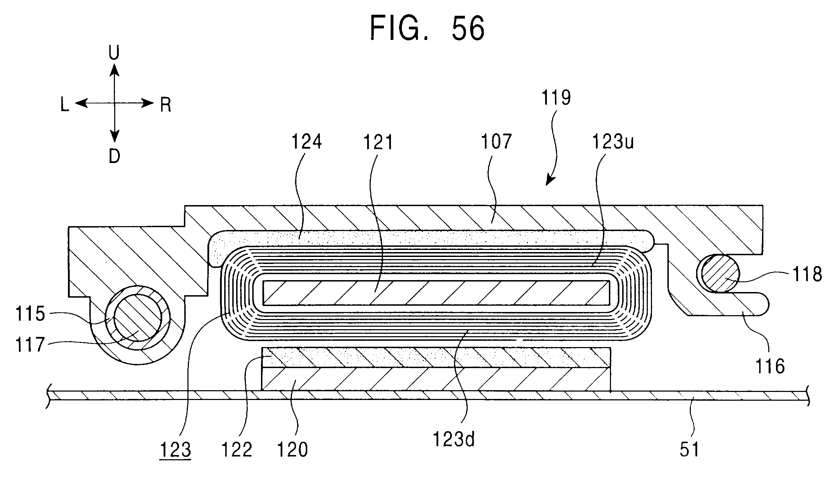

The linear motor assembly 119 comprises the following: a lower yoke 120 disposed on the mechanical chassis base plate 51; an upper yoke 121 for making up a pair with the lower yoke 120; a magnet 122 bonded on the upper surface of the lower yoke 120, and a drive coil 123 which is disposed on the bottom surface of the carriage 107 and externally and idly coupled with the upper yoke 121, where lower-side coil member 123d is positioned in the interval between the above-referred magnet 122 and the upper yoke 121. In this linear-motor assembly 119, the lower yoke 120 prepared independently of the mechanical chassis base plate 51 is set to the mechanical chassis base plate 51. It is also possible to utilize a part of the mechanical chassis base plate 51 to serve as the lower yoke (Refer to FIG. 56).

Front view of the drive coil 123 discerns that the drive coil itself is wound into rectangular form being flat in the vertical direction. An upper-side coil member 123u above the drive coil 123 is adhered to a plane recess 106b formed on the bottom surface of the carriage 107 with adhesive agent 124. A adhesive layer formed with adhesive agent 124 is built up rather thick. This in turn enables dimensional error between the drive coil 123 and the carriage 107 to be absorbed to improve bonding precision, whereby making it possible to minimize a space between the upper yoke 121 and the magnet 122 to further contribute to magnify propelling force of the linear motor 119 and further reduce thickness of the whole apparatus as well (Refer to FIG. 56).

More particularly, normally, in such drive coil wound into rectangular shape, substantial irregularity is generated in the dimension, particularly in the vertical-directional external dimension. If such drive coil containing irregular dimension is merely adhered onto the bottom surface of the carriage, then, dimensional irregularity from the reference surface of the carriage to the lower-side coil member will be magnified, and thus, taking this into consideration, the space between yokes and magnet needs to be expanded, whereby substantial propelling force can not be provided for the linear motor. Unlike the above conventional practice, in the preferred embodiment of the invention, the space (adhesive layer) filled with the adhesive agent 124 between the carriage 107 and the drive coil 123 is previously expanded beyond dimensional tolerance. Concretely, by properly adjusting actual thickness of the adhesive layer 124 with an adhesion tool or the like, it is possible to precisely set the position needed for providing the lower-side coil member 123d for the drive coil 123 from the reference surface of the carriage 107, where the reference surface corresponds to the upper surface of the carriage 107 or height-position of the axis of the main guide shaft 117. It is suggested that the space between the upper yoke 121 and the magnet 122 be minimized, in other words, it is suggested that interval between the lower-side coil member 123d and the upper yoke 121 or magnet 122 be secured by the minimum requirement. This in turn makes it possible to minimize an actual space between the upper yoke 121 and the magnet 122, thus resulting in the strengthened propelling force of the linear motor 119 and reduced thickness of the whole system components (Refer to FIG. 56).

Concretely, it is possible to realize high-precision adhesion by sequentially implementing processes including a step of setting the drive coil and the carriage to such a jig being provided with a pair of butting surfaces and height step equivalent to the dimension from the reference surface of the carriage up to the lower-side coil member, a step of fixing height dimension of the drive coil and the carriage, and a final step of feeding adhesive agent into space.

When feeding drive current to the drive coil 123, the carriage 107 of the head shifting mechanism 47 is shifted in the front-rear direction to subsequently cause the magnetic heads 45 and 45 built in the head supporting mechanism 46 held by the carriage 107 to be shifted linearly in the diametric direction of the flexible magnetic disc 7 mounted on the disc table of the disc rotation drive mechanism 49.

The above-referred main guide shaft 117 is provided with the horizontal maintenance mechanism for adjusting the horizontal of the main guide shaft 117. Because of this, it is so arranged that shifting movement of the head arms 106 and 106 in the front-rear direction can maintain the horizontal, in other words, the parallel against the mechanical chassis base plate 51 or against table surface of the disc table 72.

(15) Head loading mechanism

The head loading mechanism 48 comprises a pair of overhung arms 108c and 108c secured to the tip portions of the head arms 106 and 106 of the above-referred head supporting mechanism 46 and a lifter 125 which acts on the overhung arms 108c and 108c to lift them in the vertical direction (Refer to FIG. 49).

The lifter 125 is of L-shape via front view, where the upper portion via the front view is so arranged that the upper portion is close to the main guide shaft 117 of the above-referred linear motor assembly 119 from the left side. The lower portion of the lifter 125 is secured to the mechanical chassis base plate 51 with screw.

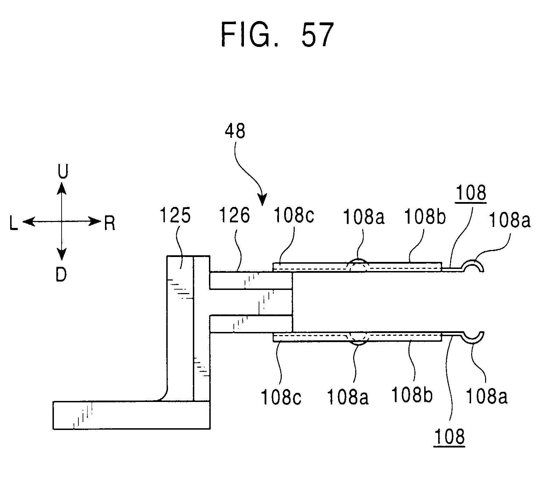

The upper portion of the lifter 125 is of block shape being rectangular in the front-rear direction to make up an operating member 126 acting on the overhung arms 108c and 108c. The upper and lower surfaces of the operating member 126 are respectively inclined for controlling vertical-directional position of the overhung arms 108c and 108c. The upper and lower surfaces of the operating member 126 are horizontally symmetrical to each other (Refer to FIG. 57).

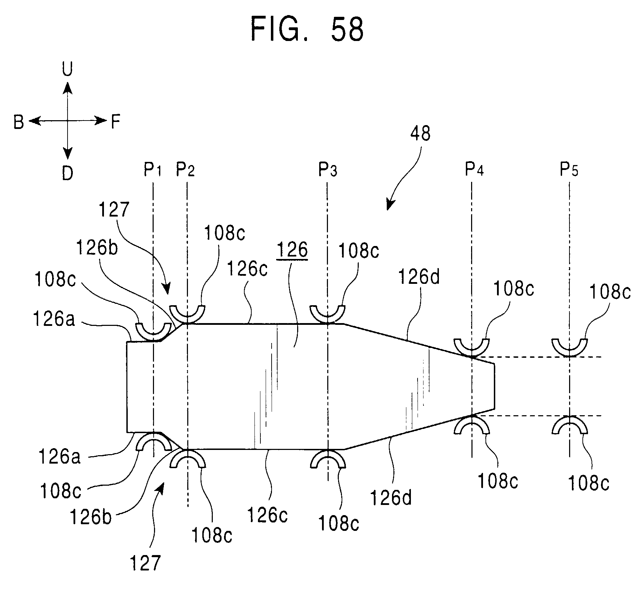

More particularly the operating member 126 comprises the following: horizontal surfaces 126a and 126a being formed at the rear end portion; provisional fixing inclines 126b and 126b with relatively steep tilt angle disposed in front of the horizontal surfaces 126a and 126a in succession; horizontal surfaces 126c and 126c disposed in front of the inclines 126b and 126b in succession; and landing inclines 126d and 126d disposed with gentle-slope at the front in succession to the horizontal surfaces 126cc and 126c. The provisional fixing inclines 126b and 126b are closer to each other backwards, whereas the landing inclines 126d and 126d are closer to each other forwards (Refer to FIG. 58).

More particularly, the provisional fixing incline 126b on the upper surface of the operating member 126 deflects upward as it moves in the forward direction, whereas the landing incline 126d deflects downward as it moves in the forward direction. Operation of the operating member 126 by way of acting on the upper overhung arm 108c is described below. Although the upper and lower relationship of the lower overhung arm 108c is inverse from that of the upper overhung arm 108c, the upper and lower overhung arms 108 jointly perform identical operation (Refer to FIG. 58).

As will be described later on, when the overhung arms 108c are shifted in the front-rear direction by the above-referred head shifting mechanism 47, these overhung arms 108c slide themselves over the above-referred horizontal surfaces 126a, provisional fixing inclines 126b, horizontal surfaces 126c, and landing inclines 126d, and then, the arm position is controlled in the direction of height. On the other hand, the magnetic heads 45 secured to the tip of the head arm 106 are shifted in the front-rear direction. Height of the magnetic heads 45 is properly controlled in the course of making shift before enabling the magnetic heads 45 to smoothly perform head landing and take-off operation without incurring damage to the flexible magnetic head 7 (Refer to FIG. 58).

When the carriage 107 is positioned at the rearmost within own movable range, the overhung arm 108 is at the front edge of the horizontal surface 126a, in other words, at the interface between the horizontal surface 126a and the provisional fixing incline 126b. This in turn prevents the carriage 107 from easily being shifted even when being exposed to some external force. Practically the provisional fixing incline 126b serves as provisional fixing means 127 for the magnetic heads 45.

If the carriage 107 ever makes unprepared shift while the magnetic heads 45 respectively remain retreated, the magnetic heads 45 can no longer perform landing onto the flexible magnetic disc 7, but instead, this will result in the unwanted damage incurring to the magnetic heads 45 and/or the flexible magnetic disc 7. The above-referred provisional fixing means 127 prevents the above-cited accident from occurrence.

More particularly, in such a condition in which the flexible magnetic disc 7 rotates itself, even when the magnetic heads 45 land onto the flexible magnetic disc 7, no damage will be incurred to the magnetic heads 45 and/or the flexible magnetic sheet 5. On the other hand, it is quite probable that a user will carry the disc drive apparatus 1 loaded with the FD cartridge 4. In this condition, the above-referred head escape mechanism 67 does not function itself and thus, the carriage 107 in the head shifting mechanism 47 easily shifts itself in the front-rear direction. In other words, the flexible magnetic disc 7 remains off from rotating itself in the above condition. If the carriage 107 unrestrainedly shifts itself forward, it is probable that the magnetic heads 45 will land onto the flexible magnetic disc 7 that remains off from rotating itself

To prevent the above-cited accident from occurrence, the above-referred provisional fixing means 127 effectively functions. In particular, the provisional fixing incline 126b executes this function. The provisional fixing incline 126b is formed with such a specific tilt angle that enables the overhung arms 108c to move forward across the provisional fixing incline 126b when propelling force of the linear motor assembly 119 of the head shifting mechanism 47 is activated (Refer to FIG. 58).

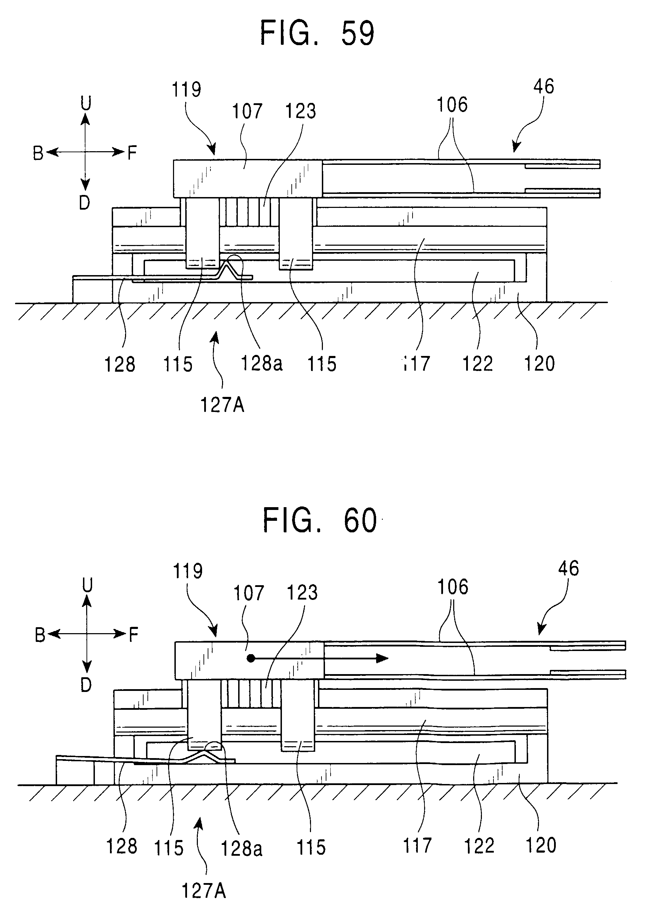

The preferred embodiment of the invention exemplifies such a case in which the provisional fixing means 127 is provided for the magnetic heads 45 by way of forming steep inclines (i.e., the provisional fixing inclines 126b) at the rear portion of the lifter 125. However, available means is not solely limited to the above-cited provisional fixing inclines 126b, but it may be replaced with the other provisional fixing means 127A shown in FIG. 59 through FIG. 61 for example.

The above-referred provisional fixing means 127A as a modified example comprises the following: an overhung plate spring 128 which is disposed below the main guide shaft 117 of the head shifting mechanism 47 at a position close to the rear edge by way of extending itself forward; and a guide bearing 115 which is disposed at the rearmost position of the carriage 107 via engagement with the overhung plate spring 128 (Refer to FIG. 59 through FIG. 61).

More particularly upwardly projecting projection 128a is disposed at the tip portion of the overhung plate spring 128 to enable the projection 128a to be engaged with the front edge portion of the above-referred guide bearing 115 disposed at the rear edge portion. Because of this mechanism, it is so arranged that, when the guide bearing 115 remains at the rearmost position within own movable range, the guide bearing 115 is brought into engagement with the above-referred projection 128a of the overhung plate spring 128, whereby preventing the carriage 107 from shifting itself forward (Refer to FIG. 59).

When drive current is fed to the above-referred linear motor assembly 119, drive force causes the overhung plate spring 128 to be bent downward in resistance against resilient force of the overhung plate spring 128 to cause the guide bearing 115 to pass over the projection 128a of the plate spring 128 (Refer to FIG. 60).

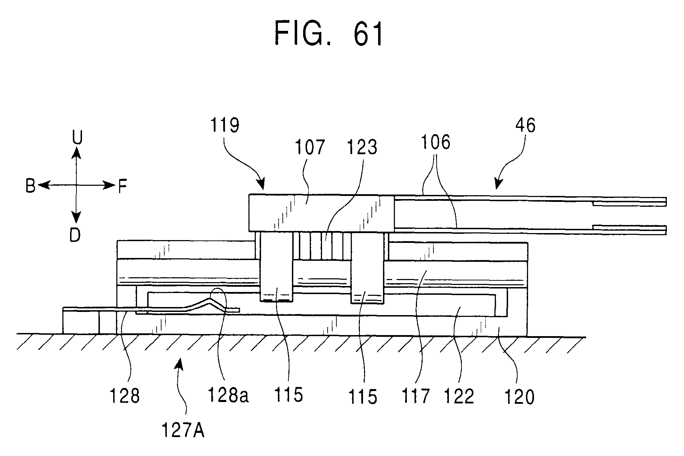

After causing the guide bearing 115 to pass over the projection 128a of the overhung plate spring 128, nothing can prevent the carriage 107 from shifting itself forward, and thus, the carriage 107 is shifted forward by the drive force generated by the linear motor assembly 119 (Refer to FIG. 61).

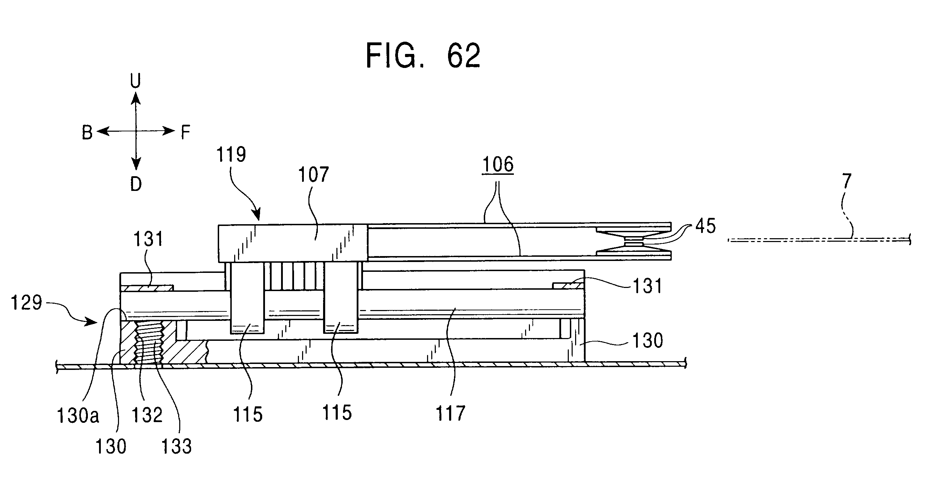

Horizontal preserving mechanism 129 shown in FIG. 62 through FIG. 64 is disposed at the rear end portion of the main guide shaft 117 in order to preserve the horizontal (in other words, parallel against the mechanical chassis base plate 51 or against table surface of the disc table 72) against such a shaft obliquely being secured as a result of irregularity generated in the precision of component parts.

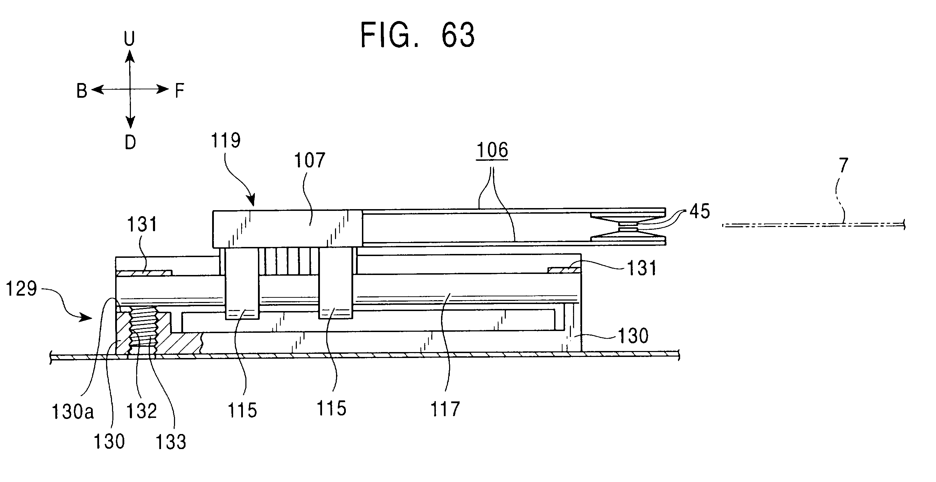

The horizontal preserving mechanism 129 comprises the following: a mount 130 for mounting the main guide shaft 117, a depressing plate spring 131 which depresses the main guide shaft 117 mounted on the mount 130 from the top side, and an adjustment screw which is engaged with a screw hole 132 penetrating the mount 130 in the vertical direction (Refer to FIG. 62 and FIG. 63). Note that the mount 130 is integrally formed by way of extending itself in the horizontal direction from the front-rear ends of the lower yoke 120.

Like the rear edge portion, the front edge portion of the main guide shaft 117 is supported by the mount 130 and the depressing plate spring 131. However, the front edge portion of the main guide shaft 117 is not provided with the above-referred horizontal preserving mechanism 129. The front-edge mount 130 is so arranged that height of the mount is precisely adjusted to be higher than that of the rear edge portion. Although not being shown, the depressing plate spring 131 is of overhung form whose one end is secured to the mechanical chassis base plate 51 or the lower yoke 120 with screw, whereas the other end is elastically abutted from the upper side of the main guide shaft 117.

When adjusting the horizontal of the main guide shaft 117, projecting amount of the above-referred adjustment screw 133 projecting from receptacle 130a of the mount 130 is adjusted by tightening or loosening the adjustment screw 133. By adjusting the projecting amount of the adjustment screw 133, rear edge portion of the main guide shaft 117 is deflected in the vertical direction (Refer to FIG. 62 and FIG. 63). FIG. 62 designates the state in which the rear edge portion of the main guide shaft 117 is tilted to be lower, where the tilt gradually becomes higher in the forward direction. FIG. 63 designates the state in which horizontal is properly maintained after adjusting the horizontal with the horizontal preserving mechanism 129.

As described above, by way of preserving the horizontal of the main guide shaft 117 via the horizontal preserving mechanism 129, the magnetic head 45 and 45 can stably perform scanning operation against the flexible magnetic disc 7.

More particularly, by preserving the horizontal of the main guide shaft 117, it is possible to preserve horizontal shift of the carriage 107 slidably secured to the main guide shaft 117, whereby enabling to preserve horizontal shift of the head arms 106 and 106 to stabilize the contact condition of the magnetic heads 45 and 45 against the flexible magnetic disc 7. Strictly speaking, using three contact pads 112, each of the magnetic heads 45 and 45 comes into contact with the fast-rotating flexible magnetic disc 7 via aerial film effect generated via the slider 111, and yet, this condition remains constant.

It is also possible to dispose the horizontal preserving mechanism 129 at the front end portion of the main guide shaft 117. In this case, it is also possible to adjust height of the front-rear ends of the main guide shaft 117 against the mechanical chassis base plate 51. This in turn makes it possible to properly adjust the horizontal, height, and contact condition of the upper and lower magnetic heads 45 and 45 against the flexible magnetic disc 7.

Next, operation for loading and ejecting the FD cartridge 4, operation for chucking and disengaging the flexible magnetic disc 7 from chucking, operation for landing the magnetic heads 45 onto the disc 7 and taking off the magnetic heads 45 from the disc 7, are sequentially described below.

(16) Operation for loading FD cartridge

First, the FD cartridge 4 is manually inserted into the disc drive apparatus 1 via a cartridge-inserting port 54 provided for the disc drive apparatus 1. As described earlier, when insertion is executed, the rotary center core 6 projecting downward from the center-core hole 9a of the FD cartridge 4 passes through recessed portion 55a of the door 55 that opens the cartridge-inserting port 54, whereby enabling the FD cartridge 4 to be inserted into the disc drive apparatus 1 without being interfered with the door 55 (Refer to FIG. 16).

In such a condition in which the FD cartridge 4 is not yet loaded into the disc drive apparatus 1, the eject lever 76 and the slide plate 77 respectively remain in the front position corresponding to the eject position. While no action is applied to the trigger arm 78 by the locking means 79, the locking plate 92 being energized in the counterclockwise direction is brought into contact with the right-side slide member 57r without being able to rotate itself Simultaneously, the head escape mechanism 67 functions to cause the carriage 107 of the linear motor assembly 119 to be retained at the rear end portion within own movable range (Refer to FIG. 13 and FIG. 19).

Both lateral sides of the FD cartridge 4 inserted into the disc drive apparatus 1 respectively slide over the sliding edges 59b and 59b formed on both-side slide members 57l and 57r built in the mechanical chassis mold 50 (Refer to FIG. 19).

In this case, the FD cartridge 4 is subject to insertion between stepped side surface 59a of the left-side slide member 57l and the left-right positioning projection 61r disposed on the right side formed in front of the right-side sliding member 57r. Since the left-right interval is wider than that is present between the left and the right of the FD cartridge 4, insertion of the FD cartridge 4 can be performed with spatial allowance (Refer to FIG. 19).

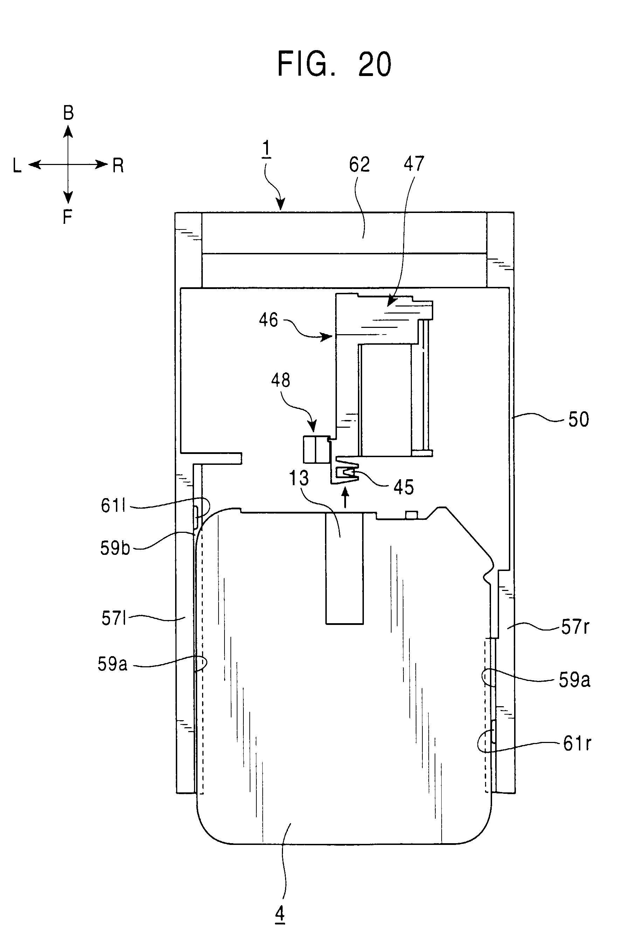

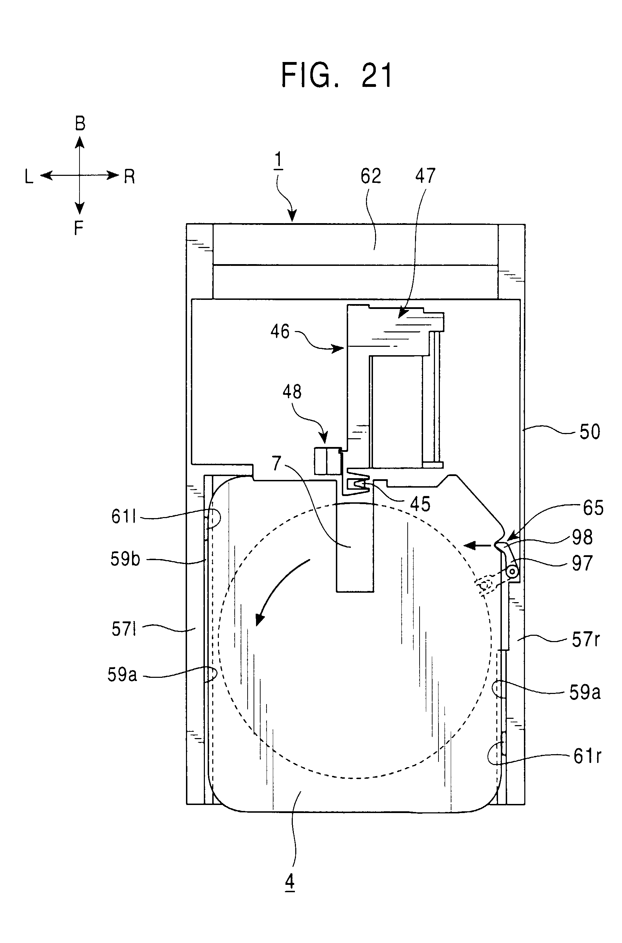

Immediately before completing the loading of the FD cartridge 4, left portion of the front edge of the FD cartridge 4 hits against the left-right positioning projection 61l disposed on the left side formed on the left-side sliding member 71 to cause the FD cartridge 4 to be rotated slightly in the clockwise direction (Refer to FIG. 20). After the FD cartridge 4 is fully loaded, the locking lever 97 rotates itself to cause its locking claw 97 to be engaged with the stopper recess 24 of the FD cartridge 4, whereby causing the FD cartridge 4 to be rotated in the counterclockwise direction to correct the position of the FD cartridge 4 (Refer to FIG. 21).

More particularly, by causing the locking claw 9 to press the front edge of the FD cartridge 4 to the left, the FD cartridge 4 is received by the above-referred left-right positioning projection 61l disposed on the left side. Inasmuch as the left-right positioning projection 61l is determined to be the reference surface, the FD cartridge 4 can properly be positioned in the left-right direction with high precision.

When implementing the preferred embodiment of the invention, positioning of the FD cartridge 4 in the horizontal direction is done by pressing the cartridge 4 against the left-right positioning projections 61l and 61r formed on the above-referred mechanical chassis mold 60. However, available method is not solely limited to this method, but it is also permissible to provide the FD cartridge 4 with a projection in place of the above-referred left-right positioning projection.

As a result of implementing the horizontal-directional positioning of the FD cartridge 4 by way of pressing external configuration of the FD cartridge 4 against the left-right direction, it becomes possible to load and chuck the FD cartridge 4 solely by effecting horizontal shift of the position of the FD cartridge 4 as per the preferred embodiment of the invention (Refer to FIG. 24 through FIG. 31).

As described earlier, any of conventional disc drive apparatus at large chucks the FD cartridge 4 by lowering it after insertion therein. It is a conventional practice to perform horizontal-directional positioning of the FD cartridge by way of inserting a positioning pin on the part of the disc drive apparatus into a positioning hole formed through the bottom surface of the FD cartridge. Inasmuch as such a conventional disc drive apparatus needs to provide a space enough to cause the FD cartridge to be shifted in the vertical direction, there is a certain limit to thin off the whole apparatus.

In contrast with the above-cited conventional technique, when performing loading and chucking of the FD cartridge 4 solely by shifting it in the horizontal direction according to the preferred embodiment of the invention, horizontal-directional positioning of the FD cartridge 4 would have entailed problem. However, by virtue of the above-described mechanical arrangement, it become possible for the preferred embodiment of the invention to easily and precisely implement horizontal-directional positioning for the FD cartridge 4, and yet, since the cartridge body 11 of the FD cartridge 4 dispenses with provision of positioning hole, this in turn results in the contribution to the prevention of dust from infiltrating into the FD cartridge 4.

As described above, vertical-directional positioning of the FD cartridge 4 against the disc drive apparatus 1 is implemented via step of initially mounting the FD cartridge 4 on a plurality of height control pins 68 followed by step of causing a plurality of depressing plate springs 70 to depress the FD cartridge 4 downward (Refer to FIG. 23).

Further, front-rear directional positioning of the FD cartridge 4 is executed by causing the above-referred locking claw 97 to be engaged with the stopper recess 24 of the FD cartridge 4 (Refer to FIG. 14).

Along with operation for loading the FD cartridge 4, as described above, using the front edge of the FD cartridge 4, the trigger arm 78 is rotated in the counterclockwise direction by way of resisting resilient force of the torsion coil spring 94, whereby causing the shutter 13 to be released as described above (Refer to FIG. 40 through FIG 42).

As soon as the FD cartridge 4 arrives at the loading position, the locking member 85 of the slide plate 77 is disengaged from the relief edge 92b of the locking plate 92 of the trigger arm 78 to cause the slide plate 77 to be shifted in the forward direction by effect of resilient force of the torsion spring 89 (Refer to FIG.

38, FIG. 39, and FIG. 42).

Forward movement of the slide plate 77 activates function of the locking means 79, whereby holding the trigger arm 78 in the loading mode and causing the arm member 86 and the eject lever to be shifted forward. This in turn causes the jumping amount of the tip portion of the eject lever 76 out from the mechanical chassis mold 50 to be increased to simultaneously causes the slider 105 of the above-referred head escape mechanism 67 to be shifted forward. As a result, the head escape mechanism 67 can no longer act on the carriage 107 to enable the carriage 107 to freely shift itself (Refer to FIG. 14).

Simultaneous with the arrival of the trigger arm 78 at the loading position, the loading-detect switch 96 disposed behind the loading position detects that the FD cartridge 4 is fully loaded (Refer to FIG. 14 and FIG. 38).

Operation for preventing the FD cartridge 4 from incorrectly being inserted into the disc drive apparatus 1 is executed via the processes described below.

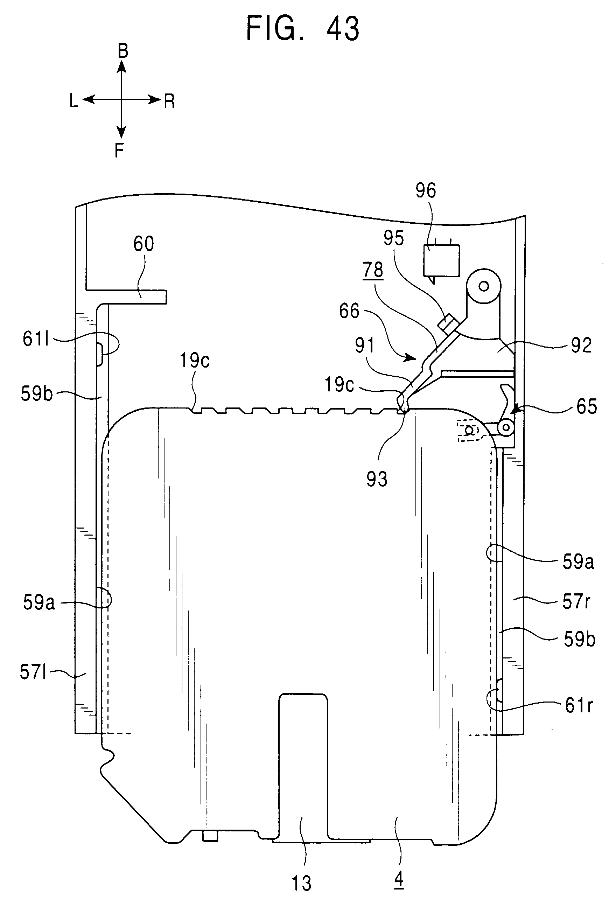

Assume that the FD cartridge 4 is erroneously inserted into the disc drive apparatus 1 by way of reversing the front-rear arrangement, then, the rear edge of the FD cartridge 4 passes through the cartridge-inserting port 54 before being hit against the shutter-pressing projection 93 formed at the tip of the trigger arm 78. Simultaneously among a plurality of small recesses formed at the rear edge of the FD cartridge 4, the shutter pressing projection 93 is relatively inserted into either of the projections 19c disposed on both sides for preventing incorrect insertion of the FD cartridge 4 beyond the projections 19c (Refer to FIG. 43).

More particularly, as described above, as far as the FD cartridge 4 is inserted into the disc drive apparatus 1 in the normal condition, the above-referred shutter pressing projection 93 is relatively inserted into the guide recess 37 of the FD cartridge 4 to cause the shutter 13 to be released to enable the trigger arm 78 to be rotated, whereby allowing the FD cartridge 4 to be inserted furthermore. On the other hand, if the FD cartridge 4 is incorrectly inserted as of the posture inverse from the front-rear alignment, then, the shutter pressing projection 93 of the trigger arm 78 is engaged with the above-referred projection 19c which prevents the FD cartridge 4 from incorrectly being inserted into the disc drive apparatus 1. When this condition is entered, the trigger arm 78 itself can not be rotated any longer to subsequently prevent the FD cartridge 4 from incorrectly being inserted furthermore.

The above description refers to the case in which the FD cartridge 4 is inserted as of the state inverse from the front-rear alignment. However, the same applies to any case in which the FD cartridge 4 is inserted by way of inverting from the front surface into the back surface in addition to the above-referred inversion of the front-rear alignment.

(17) Operation for chucking the flexible magnetic disc

Prior to the completion of the operation for loading the FD cartridge 4, an operation for chucking the flexible magnetic disc 7 is executed (Refer to FIG. 24 through FIG. 28).

Concretely, in the course of inserting the FD cartridge 4 into the disc drive apparatus 1, the center core 6 of the flexible magnetic disc 7 projected out from the center-core hole 9a of the FD cartridge 4 hits against the tapered portion 72a of the disc table 72, and then, the center core 6 relatively shifts itself inside of the center-core hole 9a before causing its front-side external circumferential surface to come into contact with the front-side internal circumferential surface of the center core hole 9a. Although this condition is not shown in the drawings, it corresponds to the intermediate condition between the one shown in FIG. 24 and the one shown in FIG. 25.

The FD cartridge 4 remains being thrust rearwards until chucking operation is completed. Accordingly, as described above, the center core 6 of the flexible magnetic disc 7 is pressed backward by the front-side internal circumferential surface of the center-core hole 9a before being mounted on the disc table 72 to be described later on.

In the course of inserting the FD cartridge 4 further into the disc drive apparatus 1, an external lower circumferential edge 40a of a chucking member 40 slides over the tapered portion 72a of the disc table 72, and thus, the rear end portion of the center core 6 is uplifted and then mounted on the front edge portion of the disc table 72 (Refer to FIG. 25).

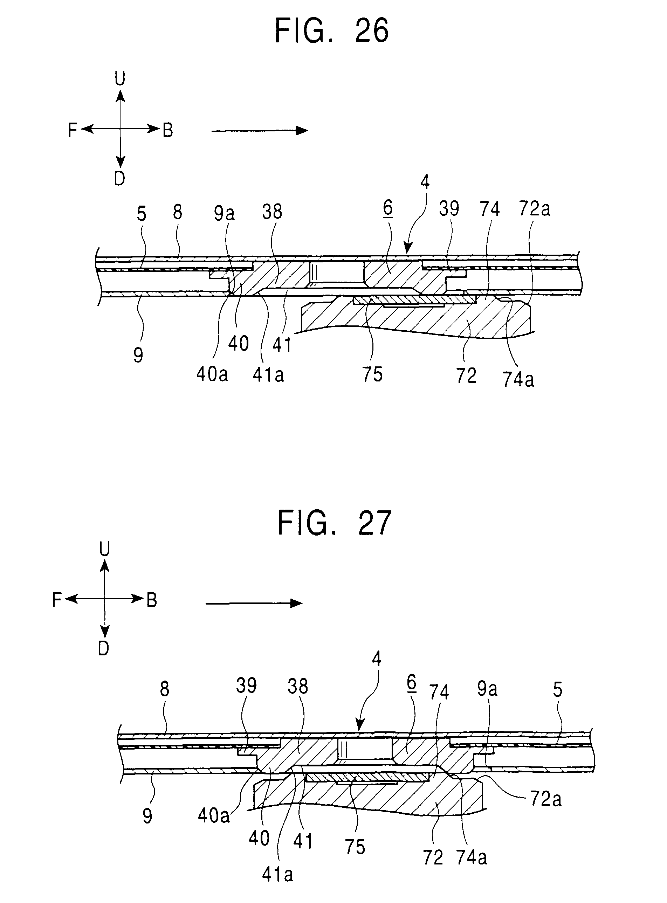

When the rear-end portion of the center core 6 is mounted on the disc table 72 after being uplifted, the external lower circumferential edge 40a of the center core 60 hits against the tapered surface 74a of the chucking projection 74 and then uplifted furthermore until the center core 6 is eventually mounted on the chucking projection 74 (Refer to FIG. 26).

When the center core 6 is mounted on the chucking projection 74, the upper surface of a media core portion 38 of the center core 6 remains in contact with inner surface of the upper plate 8 or slightly being apart from the inner surface thereof

In the course of inserting the FD cartridge 4 further into the disc drive apparatus 1, the center core 6 shifts itself by way of sliding over the chucking projection 74. Immediately before the chucking recess 41 correctly matches the chucking projection 74, the tapered surface 41a of the chucking recess 41 descends itself by way of sliding over the tapered surface 74a of the chucking projection 74 (Refer to FIG. 27).

In this case, the center core 6 is forced to lower itself as being affected by magnetic force of the magnet 75 built in the chucking projection 74 and absorbing force generated by the center core 6, whereby enabling the chucking projection 74 to be coupled with the chucking recess 41 relatively, thus completing chucking operation (Refer to FIG. 28).

In the chucking-completed condition, as described above, a process for centering is executed against the disc table 72 of the flexible magnetic disc 7. Since the front-rear directional positioning of the FD cartridge 4 is effected immediately before centering the flexible magnetic disc 7, only the flexible magnetic disc 7 shifts itself backward through the cartridge body 11 of the FD cartridge 4. As a result, the center core 6 is positioned substantially at the center of the center core hole 9a (Refer to FIG. 28).

Next, the FD cartridge 4 is loaded into the disc drive apparatus 1, thus completing the operation for chucking the flexible magnetic disc 7 with the disc table 72.

(18) Head landing operation

As soon as the operation for loading the FD cartridge 4 and the other operation for chucking the flexible magnetic disc 7 is completed, as described earlier, the slider 105 of the head escape mechanism 67 shifts itself forward to enter into the state in which shift of the carriage 107 is allowed. This activates drive operation of the linear motor assembly 119 of the head shifting mechanism 47 to drive the magnetic heads 45 and 45 to shift themselves forward whereby enabling them to perform landing onto the flexible magnetic disc 7 (Refer to FIG. 58).

More particularly when the linear motor assembly 119 is activated, the above-referred provisional fixing means 127 is released by the propelling force generated by the linear motor assembly 119. Concretely, the overhung arms 108c and 108c thus far being positioned at the interface (refer to the state designated as P1 shown in FIG. 58) between the horizontal surface 126a behind the lifter 125 and the provisional fixing incline 126b for provisional fixing use respectively pass over the provisional fixing incline 126b to cause the magnetic heads 45 and 45 to shift themselves forward (refer to the state designated as P2 shown in FIG. 58). While the overhung arms 108c are respectively positioned at the interface between the horizontal surface 126a behind the lifter 125 and the provisional-fixing incline 126b (refer to the state P1 shown in FIG. 58), the upper and lower magnetic heads 45 and 45 are slightly apart from each other. When this condition is present, these magnetic heads are respectively positioned behind the released shutter hole 25 of the FD cartridge 4.

When the carriage 107 is shifted forward via drive force generated by the head shifting mechanism 47, the overhung arms 108c and 108c respectively slide over the horizontal surfaces 126c and 126c (refer to the state P2 ～ P3 shown in FIG. 58), where the upper overhung arm 108c and the lower overhung arm 108c respectively shift themselves in the horizontal direction. Interval, i.e., the height-directional position of the magnetic head 45 and 45 secured to the tip of the head arm 106 remains constant.

While the above condition is present, two of the magnetic heads 45 and 45 are furthest from each other, and yet, being ready to enter into the released shutter 13 of the FD cartridge 4. Interval between the magnetic heads 45 and 45 in this condition is considered to be sufficient to sandwich the flexible magnetic disc 7. Inasmuch as the external circumferential surface of the flexible magnetic disc 7 rotates by way of slightly waving itself, such a substantial interval between them is effective to prevent the magnetic heads 45 and 45 from generating unwanted interference with the flexible magnetic disc 7.

At the moment at which the overhung arms 108c and 108c are placed at the foremost position among the above-referred horizontal surfaces 126c, 126c (refer to the state P3 shown in FIG. 58), simultaneously, the magnetic heads 45 and 45 are forwarded to the position at which they vertically sandwich the external circumferential surface edge of the flexible magnetic disc 7.

When the carriage 107 proceeds furthermore, the overhung arms 108c and 108c respectively shift themselves onto the landing inclines 126d and 126d (refer to the state P3 ~ P4 shown in FIG. 58). Next, the vertically disposed overhung arms 108c and 108c are displaced in the direction of coming closer to each other before eventually approaching the external circumferential surface edge of the flexible magnetic disc 7.

Thenceforth, the overhung arms 108c and 108c are respectively shifted forward from the landing inclines 126d, 126d. Immediately before departing from the operating member 126 (refer to the state P4 shown in FIG. 58), two of the magnetic heads 45 and 45 respectively land onto the external circumferential surface edge of the flexible magnetic disc 7.

After implementing the landing onto the surface edge, since the magnetic heads 45 and 45 respectively remain in contact with the flexible magnetic disc 7, height of the magnetic heads 45 and 45 also remains constant, and then both of them shift themselves in the diametric direction (corresponding to the left-right direction shown in FIG. 58) of the flexible magnetic disc 7 as of the state P5 shown in FIG. 58.

It is also possible to realize so-called "soft-landing" without incurring damage to the flexible magnetic disc 7 by way of properly setting tilt angle of the landing inclines 126d and 126d. It should be understood that the landing inclines 126d and 126d may not always be of linearly formed inclines, but instead, they may be composed of curved surface. Inasmuch as the head-landing operation is dependent on the tilt angle of the above-referred landing inclines 126d and 126d, it is also possible to easily optimize the head-landing performance merely by way of changing tilt angle of the landing inclines 126d and 126d or by way of forming curved surface.

Simultaneous with completion of the landing of the magnetic heads 45 and 45 onto the flexible magnetic disc 7, the above-referred overhung arms 108c and 108c just leaves the lifter 125 in the forward direction. Accordingly, it is possible for the magnetic heads 45 and 45 to perform scanning operation against the flexible magnetic disc 7.

By way of previously adjusting horizontal of the main guide shaft 117 via the above-referred horizontal preserving mechanism 129, it is possible to arrange contact condition of the magnetic heads 45 and 45 to be substantially even against the flexible magnetic disc 7 in the diametric direction of the flexible magnetic disc 7 while performing scanning operation.

Further, by way of providing the horizontal preserving mechanism 129 at both ends of the main guide shaft 117 in the front-rear direction, even when roughly adjusting the height precision of the front-end mount 130, operation for preserving horizontal and positioning of the mount 130 in the height direction against the flexible magnetic disc 7 can respectively be executed with easiness. Further, by executing height-directional positioning between the main guide shaft 117 and the flexible magnetic disc 7, contact condition of the vertically disposed magnetic heads 45 and 45 against the flexible magnetic disc 7 can evenly be held.

Prior to the landing of the magnetic heads 45 onto the flexible magnetic disc 7, three of the contact pads 112 of the head slider 111 also land onto the flexible magnetic disc 7. Of these three contact pads 112, two of the contact pads 112 devoid of the magnetic heads 45 precede the other one holding the magnetic heads 45, whereby minimizing risk of incurring unwanted damage to the magnetic heads 45.

To realize this, it is suggested that the head slider 111 of the head suspension system 109 be slightly tilted in order that the above-referred contact pads 112 and 112 devoid of the magnetic heads 45 and 45 of the head slider 111 can be led closer to the flexible magnetic disc 7.

The above object can also be realized by securing the magnetic heads 45 and 45 to the contact pad 112 being close to the above-referred overhung arms 108c. More particularly, when the magnetic heads 45 are uplifted by the lifter 125, even though the head arm 106 bears a neck portion at the base portion, the posture slightly tilts via the front view. By way of securing the magnetic heads 45 to one of the three contact pads 111 being farthest from the flexible magnetic disc 7, those two contact pads 111 devoid of the magnetic heads 45 precede the other one bearing the magnetic heads 45 to effect landing onto the flexible magnetic disc 7.

(19) Head take-off operation

Head take-off operation is executed by causing the carriage 107 of the head shifting mechanism 47 to retreat itself

Concretely, when the carriage 107 is thrust backward, the above-referred overhung arms 108c are respectively mounted on the landing inclines 126d to subsequently cause the magnetic heads 45 and 45 to be shifted in the direction being apart from each other to cause both of them to leave the flexible magnetic disc 7, thus implementing the head take-off operation.

After implementing the head take-off operation, the carriage 107 is thrust further backward. This in turn causes the overhung arms 108c, 108c to pass by the external circumferential edge of the flexible magnetic disc 7 as of the state being positioned on the level surfaces 126c, 126c, of the lifter 125, in other words, in the state in which the magnetic heads 45 and 45 are farthest from each other. By implementing the above process, the magnetic heads 45 and the flexible magnetic disc 7 can respectively be prevented from incurring unwanted damage.

Subsequent to the retreat of the carriage 107, the overhung arms 108c slide off from the above-referred provisional fixing inclines 126b, 126b before respectively being positioned at the interface between the rear level surface 126a and the provisional fixing inclines 126b to provisionally fix the magnetic heads 45 and 45.

(20) Operation for ejecting the FD cartridge

Operation for ejecting the FD cartridge 4 is executed by thrusting the eject lever 76 into the card-type casing 44.

Initially when the eject lever 76 is thrust into the card-type casing 44, the slide plate 77 and the arm member 88 are respectively shifted backward. Next, availing of the head escape mechanism 67, the pair of magnetic heads 45 and 45 are shifted backward. Next, by releasing the locking means 79, the trigger arm 78 is rotated counterclockwise to cause the trigger arm 78 to be rotated to thrust the FD cartridge 4 forward, whereby eject operation is completed (Refer to FIG. 38 and FIG. 39).

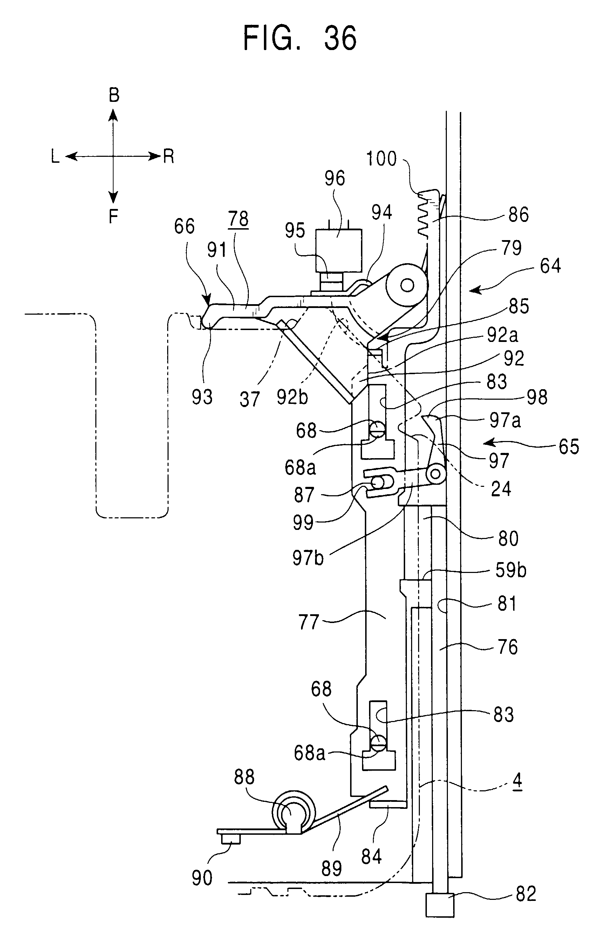

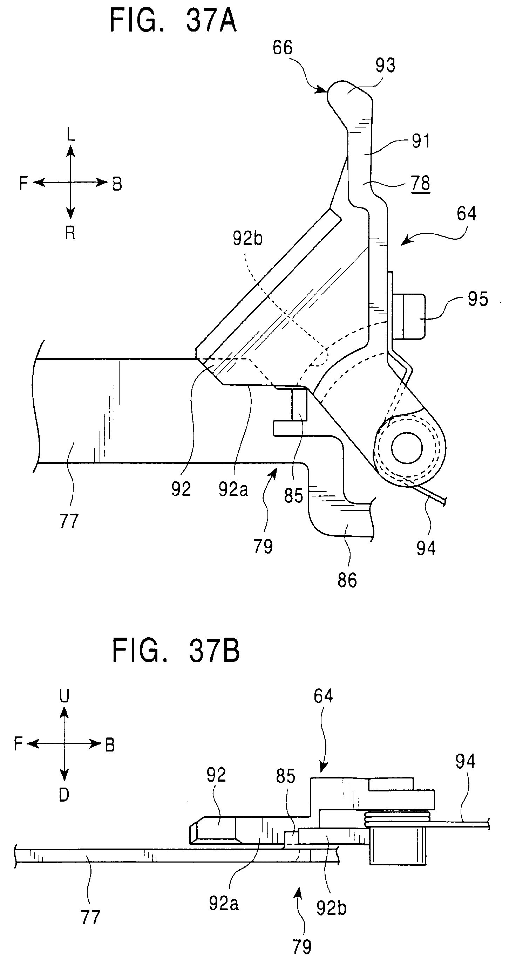

More particularly, when the slide plate 77 is shifted backward, the locking member 85 of the slide plate 77 slides over the locking edge 92a of the locking plate 92 of the trigger arm 78, and then, when the locking member 85 arrives at the relief edge 92a (refer to FIG. 37), the locking member 85 hides itself inside of the relief edge 92b (refer to FIG. 36). This in turn causes the locked condition of the locking means 79 thus far preventing the trigger arm 78 from rotating itself in the counterclockwise direction to be released whereby enabling the trigger arm 78 to rotate itself in order to thrust the FD cartridge 4 forward (Refer to FIG. 35 and FIG. 36).

On the other hand, backward shifting operation of the slide plate 77 causes the engaging pin 87 to move forward to cause the locking lever 97 engaged therewith to be rotated counterclockwise (refer to FIG. 38). As a result, the locking claw 97a of the locking lever 97 is disengaged from the stopper recess 24 of the FD cartridge 4 (refer to FIG. 36) to permit the FD cartridge 4 to move itself forward. In other words, the trigger arm 78 thrusts the FD cartridge 4 in the forward direction, i.e., in the ejecting direction.

Although the shutter 13 provided for the FD cartridge 4 is held in the released condition while being pressed by the shutter pressing projection 93 disposed at the tip of the arm member 91 of the trigger arm 78, simultaneous with the forward shift of the FD cartridge 4, the shutter 13 is closed by effect of resilient force generated by the shutter spring 27.

(21) Operation for releasing the flexible magnetic disc from chucked condition

Operation for releasing the flexible magnetic disc 7 from the chucked condition is executed by causing the FD cartridge 4 to be shifted in the direction inverse from the direction of executing chucking against the FD cartridge 4 (Refer to FIG. 28 through FIG. 31 and FIG.24).

More particularly when the flexible magnetic disc 7 of the FD cartridge 4 is pushed forward from the chucked condition (refer to FIG. 28), an internal circumferential edge at the rear end of the center-core hole 9a of the lower plate 9 presses an external circumferential edge at the rear end of the center core 6. This in turn causes the tapered surface 41a of the chucking recess 41 of the center core 6 to slide over the tapered surface 74a of the chucking projection 74 of the disc table 72, thus causing the center core 6 to be shifted upward (refer to FIG. 29).

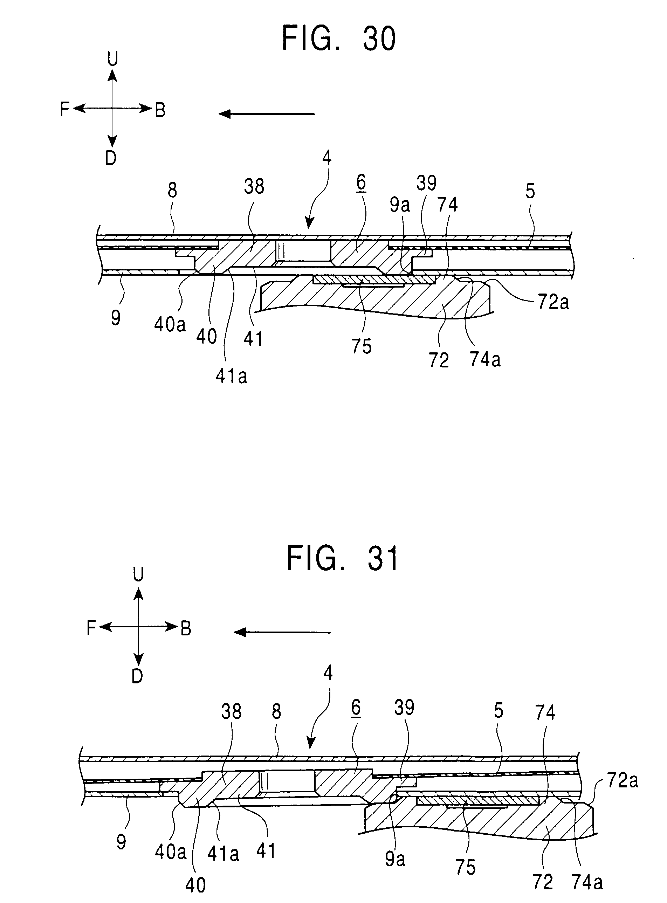

Next, because of the forward movement of the FD cartridge 4 via the shift in the eject direction, the center core 6 shifts itself in the eject direction by way of sliding over the upper surface of the chucking projection 74 (refer to FIG. 30), thus causing the bottom surface of the chucking member 40 of the center core 6 to slide down over the tapered surface 74a of the chucking projection 74 of the disc table 72. Chucking-release operation is completed at the moment at which the chucking member 40 of the center core 6 is disengaged from the chucking projection 74 (Refer to FIG. 24). As a result, the FD cartridge 4 can be ejected very smoothly.

The above description has solely referred to a preferred embodiment of the invention by way of solely applying the inventive disc drive apparatus to the PC card-type disc drive apparatus. It should be understood however that the applicable scope of the novel disc drive apparatus related to the invention is not solely limited to the above-described scope, but the inventive disc drive apparatus may also be applied to any of the conventional disc drive apparatus thus far being available.

The invention is not solely limited to the above-exemplified disc drive apparatus for driving the flexible magnetic disc, but applicable recording medium may also include hard-disc drive apparatus as well. Essentially, the invention is applicable to any implementation which enables the magnetic heads to be brought into contact with the disc-shaped recording medium or the one to be brought into contact therewith via aerial gap.

As is clear from the above description, the preferred embodiment of the invention provides a novel disc drive apparatus comprising; a pair of magnetic heads for executing recording and/or reproduction of signal onto and/or from a disc-shaped recording medium, and a head arm which holds the magnetic heads at the tip thereof and is capable of freely shifting itself in the diametric direction of the disc-shaped recording medium or in the direction in parallel with said disc-shaped recording medium via a drive means orthogonal to the head arm. Further, an arm member is secured to the tip portion of the head arm by way of projecting itself in the lateral direction. A lifter is provided on the locus of the arm member, where the lifter acts on the arm member when the head arm is driven by the orthogonal drive means. Landing inclines are provided for the lifter. While the magnetic head are driven forward by the orthogonal drive means, the arm member slides down itself over the landing incline, whereby enabling the magnetic heads to perform landing onto the disc-shaped recording medium.

Because of the above mechanism, the disc drive apparatus pertaining to the preferred embodiment of the invention makes it possible to easily set optional tilt angle of the landing inclines formed on the lifter. This in turn easily realizes so-called soft landing of the magnetic heads onto a recording medium by way of selecting optional tilt angle of the landing inclines. Inasmuch as only the above-referred arm member and the lifter make up the structure for realizing soft-landing of the magnetic heads, and yet, the lifter is not necessarily linked with the hear arm, whereby making it possible to extremely simplify the overall structure to further contribute to contract dimension of the whole mechanism.

In preferred embodiments, inasmuch as the above-referred arm member is set to one of side edges of the head arm, unlike the one with the arm member projecting itself in both lateral directions, the arm member provided for the head arm has insubstantial horizontal width to make it possible to contract width of the head-inserting aperture of the FD cartridge, thus making it possible to minimize infiltration of dust particles into the FD cartridge.

Preferably, inasmuch as the neck portion is formed at the base portion of the head arm, despite the formation of the overhung mechanism for uplifting the magnetic heads, the neck portion serves as a flexible part of the entire hear-arm unit. This in turn prevents the head arm from being deflected in the horizontal direction to enable the magnetic heads to preserve own posture constant. As a result, it is possible to improve the condition when the magnetic heads respectively come into contact with the flexible magnetic disc to perform soft-landing thereon.

Preferably, inasmuch as a reinforcing rib extending itself in the longitudinal direction is provided for the head arm, despite of the formation of the overhung mechanism for uplifting the magnetic heads, the head arm is prevented from being deflected in the horizontal direction, whereby making it possible to further improve the condition when the magnetic heads respectively come into contact with the flexible magnetic disc to perform soft-landing thereon.

In preferred embodiments, the magnetic heads are respectively secured to the head arm via a head slider. The head slider is provided with a plurality of contact pads respectively coming into contact with the disc-shaped recording medium, where the magnetic heads are secured to one of these contact pads. When the magnetic heads respectively perform landing onto the disc-shaped recording medium, contact onto the disc-shaped recording medium is initiated by those pads being devoid of the magnetic heads. Accordingly those contact pads being devoid of the magnetic heads are subject to the hardest shock at the moment of landing onto the disc-shaped recording medium, whereby minimizing the shock incurring to the magnetic heads to result in the improved durability of the magnetic heads themselves.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

**Claims**

1. A disc drive apparatus comprising:

head means for recording and/or reproduction of signal against a disc-shaped recording medium;
head arm means for supporting said head means at a tip portion, wherein said head arm means comprises an arm member provided at said tip portion of the head arm means;
linear drive means coupled to said head arm means for shifting the head arm means in the diametric direction of said disc-shaped recording medium; and
lifter means for contacting with said arm member of the head arm means when said the head arm means is shifted by said linear drive means, wherein said lifter means has a landing incline; wherein
when said head arm means is shifted forward by said linear drive means, said arm member is guided along with said landing incline of said lifter means and thereby said head means supported on the head arm means is landed on a surface of said disc-shaped recording medium.

2. The disc drive apparatus according to Claim 1, wherein said arm member is provided onto one of lateral edges of said head arm means.

3. The disc drive apparatus according to Claim 2, wherein a neck portion is formed at a base-end portion of said head arm means.

4. The disc drive apparatus according to Claim 2, wherein said head arm means is provided with a reinforcing rib extending itself in the longitudinal direction of the head arm means.

5. The disc drive apparatus according to Claim 3, wherein said head arm means is provided with a reinforcing rib extending itself in the longitudinal direction of the head arm means.

6. The disc drive apparatus according to Claim 1, wherein

said head means is secured to said head arm means via a head slider;
said head slider is provided with a plurality of contact-pads respectively coming into contact with said disc-shaped recording medium;
said head means is internally secured to one of said contact-pads; and
prior to actual landing of said head mean onto said disc-shaped recording medium, said contact-pads internally being devoid of said head means first contact with the surface of said disc-shaped recording medium.

7. A cartridge-type recording medium comprising;

a rectangular-shaped cartridge; and
recording medium installed in said rectangular-shaped cartridge; wherein
said rectangular-shaped cartridge has both-side portions being in the direction orthogonal to the direction of inserting said rectangular-shaped cartridge into a disc drive apparatus performing recording or reproduction of signal against said recording medium, and
said both-side portions of said rectangular-shaped cartridge are respectively provided such a thickness being thinner than that of the center portion.

8. The cartridge-type recording medium according to Claim 7, wherein said recording medium comprises a flexible magnetic disc.

9. A disc drive apparatus for accepting a cartridge-type recording medium comprising:

a rectangular-shaped cartridge; and
recording medium installed in said rectangular-shaped cartridge; wherein
said rectangular-shaped cartridge has both-side portions being in the direction orthogonal to the direction of inserting said rectangular-shaped cartridge into said disc drive apparatus performing recording or reproduction of signal against said recording medium, and
said both-side portions of said rectangular-shaped cartridge are respectively provided such a thickness being thinner than that of the center portion; wherein
said disc drive apparatus comprising:
pressing means disposed at the upper portion of space for allowing insertion of said cartridge system into said disc drive apparatus at a portion corresponding to thinner-thickness portion of said cartridge for depressing said rectangular-shaped cartridge downward.

10. The disc drive apparatus according to Claim 9, wherein

said pressing means comprises a plate spring being composed of part of a casing of the disc drive apparatus being provided by way of cut-out form.

FIG. 1

# FIG. 2

# FIG. 3

# FIG. 4

# FIG. 5

# FIG. 6

U

R ←→ L

D

4

34u      30     32u    34u  19b

19b

26

19b

11

34d  37  28a  25  13  32d  27  34d  19b

# FIG. 7

U

L ←→ R

D

4

19b  34u  33u  19a      34u  19b

11

19b  34d  33d  19a    19c  34d  19b

19c

# FIG. 8

## FIG. 9

# FIG. 10

# FIG. 11

# FIG. 12

# FIG. 13

# FIG. 14

## FIG. 15

## FIG. 16

# FIG. 17

# FIG. 18

# FIG. 19

# FIG. 20

# FIG. 21

# FIG. 22

# FIG. 23

EP 1 087 395 A2

## FIG. 24

U
F ← → B
D

8    38    <u>6</u>    39    5    75    4    74    74a    72a
9    9a    40    41
40a    41a    72

## FIG. 25

U
F ← → B
D    →

8    9a    38    <u>6</u>    39    5    4    75    74    74a
9    40    41    72a
40a    41a    72

48

# FIG. 26

# FIG. 27

# FIG. 28

# FIG. 29

# FIG. 30

# FIG. 31

# FIG. 32

# FIG. 33A

# FIG. 33B

EP 1 087 395 A2

# FIG. 34

# FIG. 35A

# FIG. 35B

# FIG. 36

# FIG. 37A

# FIG. 37B

# FIG. 38

# FIG. 39A

L
F ← → B
R

66
93
78
91
64
95
85
77
92 92a 92b
79 86
94

# FIG. 39B

U
F ← → B
D

64
94
92 85
92a 92b
79
77

# FIG. 40

# FIG. 41

# FIG. 42

# FIG. 43

# FIG. 44

# FIG. 45

# FIG. 46

# FIG. 47

B
L ← → R
F

107

115

116

115

107a

108d

106

108

108a

108a

108c

46

108b

110

113a

113b

111

113b

109

113a    113

# FIG. 48

EP 1 087 395 A2

FIG. 49

# FIG. 50

# FIG. 51

B

L ← → R

F

7

45

112

111

112

112

# FIG. 52

# FIG. 53

# FIG. 54

# FIG. 55

# FIG. 56

EP 1 087 395 A2

FIG. 57

# FIG. 58

# FIG. 59

# FIG. 60

FIG. 61

FIG. 62

# FIG. 63

EP 1 087 395 A2

FIG. 64